# EUROPEAN PATENT APPLICATION

(11) **EP 4 834 608 A1**
(43) Date of publication of application: **04.11.2026**
(21) Application number: 24912051.0
(22) Date of filing: 11.11.2024
(51) Int. Cl.: B60K 1/00, B60R 16/02, H02G 3/16

(54) **WORK VEHICLE**

(30) Priority: 28.12.2023 JP 2023223373
(71) Applicant: KUBOTA CORPORATION, Osaka-shi, Osaka 530-0011 (JP)
(72) Inventor: MASAYA Koki, Sakai-shi, Osaka 590-0908 (JP); HIBINO Tsuyoshi, Sakai-shi, Osaka 590-0908 (JP); TAKEDA Kazuya, Sakai-shi, Osaka 590-0908 (JP); MATSUOKA Ginji, Sakai-shi, Osaka 590-0908 (JP); KUWANA Yudai, Sakai-shi, Osaka 590-0908 (JP)
(74) Representative: Cabinet Beau de Loménie
(86) International application number: PCT/JP2024/039960
(87) International publication number: WO 2025/142158

(57) **Abstract**

Provided is a working vehicle in which complex routing of electrical wires connecting a plurality of junction boxes to a plurality of electrical devices can be prevented or reduced.

A working vehicle (1) includes a vehicle body (2), a structure (3) connectable to the vehicle body, a plurality of junction boxes (130) including a main junction box (130A) provided in at least one of the vehicle body and the structure and a sub-junction box (130B) provided in at least one of the vehicle body and the structure, and a plurality of electrical devices (120). The sub-junction box is connected to at least one of the plurality of electrical devices. The main junction box is connected to at least another one of the plurality of electrical devices that is different from the one of the plurality of electrical devices to which the sub-junction box is connected, and is also connected to the sub-junction box.

## Description

### Technical Field

The present invention relates to working vehicles to perform work, such as agricultural work.

### Background Art

PTL 1 below discloses a working vehicle (backhoe) of the related art. The working vehicle disclosed in PTL 1 includes a traveling device, a swivel base that swivels above the traveling device, a working device, a battery, and an electric motor, and a junction box is provided in a lower portion of the swivel base.

### Citation List

### Patent Literature

PTL 1: Japanese Unexamined Patent Application Publication No. 2014-237943

### Summary of Invention

### Technical Problem

In the above-described working vehicle, when a plurality of junction boxes are provided for a plurality of electrical devices to be connected thereto, the junction boxes are collectively arranged at a single location at the lower portion of the swivel base. Accordingly, the electrical wires connecting the junction boxes to the electrical devices may be routed in a complex manner.

The present invention has been made in light of the above problem, and its object is to provide working vehicles in each of which complex routing of electrical wires connecting a plurality of junction boxes to a plurality of electrical devices can be prevented or reduced.

### Solution to Problem

A working vehicle according to an example embodiment includes a vehicle body, a structure connectable to the vehicle body, a plurality of junction boxes including a main junction box provided in at least one of the vehicle body and the structure and a sub-junction box provided in at least one of the vehicle body and the structure, and a plurality of electrical devices, wherein the sub-junction box is connected to at least one of the plurality of electrical devices, and the main junction box is connected to at least another one of the plurality of electrical devices that is different from the one of the plurality of electrical devices to which the sub-junction box is connected, and is also connected to the sub-junction box.

The structure may include a traveling assembly provided at a lateral side of the vehicle body. The main junction box may be provided in the vehicle body or the traveling assembly. The sub-junction box may be provided in the traveling assembly when the main junction box is provided in the vehicle body, and be provided in the vehicle body when the main junction box is provided in the traveling assembly.

The plurality of electrical devices may include a first electrical device provided in the vehicle body and a second electrical device provided in the traveling assembly. The main junction box may be connected to the first electrical device when the main junction box is provided in the vehicle body, and be connected to the second electrical device when the main junction box is provided in the traveling assembly. The sub-junction box may be connected to the second electrical device when the sub-junction box is provided in the traveling assembly, and be connected to the first electrical device when the sub-junction box is provided in the vehicle body.

The traveling assembly may include a left traveling assembly located leftward of the vehicle body and a right traveling assembly located rightward of the vehicle body. The main junction box may be provided in the vehicle body. The sub-junction box may be provided in each of the left traveling assembly and the right traveling assembly.

The first electrical device may include a first battery. The second electrical device may include a second battery. The first battery and the second battery may be directly or indirectly connected to the main junction box.

The second electrical device may include an electrical device other than the second battery. The sub-junction box may function as a relay for an electrical wire connected to the electrical device other than the second battery.

The working vehicle may further include a movable portion to guide a connecting wire connecting the main junction box and the sub-junction box to each other and to move to follow deformation of the connecting wire.

The main junction box may be provided in the vehicle body and be configured to change a position thereof in an up-down direction together with the vehicle body.

The sub-junction box may be provided in the traveling assembly and be configured to change a position thereof in a left-right direction together with the traveling assembly.

Each of the plurality of electrical devices may include at least one of a plurality of batteries. At least one of the plurality of batteries and at least one of the plurality of junction boxes may be provided in each of the vehicle body and the traveling assembly.

The traveling assembly may include a left traveling assembly located leftward of the vehicle body and a right traveling assembly located rightward of the vehicle body. The plurality of junction boxes may include a first junction box provided in the vehicle body, a second junction box provided in the left traveling assembly, and a third junction box provided in the right traveling assembly.

The plurality of electrical devices may include a first electrical device provided in the vehicle body and a second electrical device provided in the traveling assembly. A left traveling motor to drive a left wheel may be provided as the second electrical device in the left traveling assembly. A right traveling motor to drive a right wheel may be provided as the second electrical device in the right traveling assembly. The second junction box may function as a relay for an electrical wire connected to the left traveling motor. The third junction box may function as a relay for an electrical wire connected to the right traveling motor.

### Advantageous Effects of Invention

According to the working vehicle of the present invention, complex routing of electrical wires connecting the junction boxes to the electrical devices can be prevented or reduced.

### Brief Description of Drawings

[FIG. 1] FIG. 1 is a perspective view of an example embodiment of a working vehicle.
[FIG. 2] FIG. 2 is a left side view of the example embodiment of the working vehicle.
[FIG. 3] FIG. 3 is a right side view of the example embodiment of the working vehicle.
[FIG. 4] FIG. 4 is a front view of the example embodiment of the working vehicle.
[FIG. 5] FIG. 5 is a rear view of the example embodiment of the working vehicle.
[FIG. 6] FIG. 6 is a plan view of the example embodiment of the working vehicle.
[FIG. 7] FIG. 7 is a block diagram of an example of the overall configuration of the working vehicle.
[FIG. 8] FIG. 8 is a perspective view of a frame structure.
[FIG. 9] FIG. 9 is a perspective view of a vehicle body frame.
[FIG. 10] FIG. 10 is a perspective view of a traveling frame.
[FIG. 11] FIG. 11 is an exploded perspective view of the vehicle body frame.
[FIG. 12] FIG. 12 is a plan view of the frame structure in which rods of left and right cylinders are extended.
[FIG. 13] FIG. 13 is a plan view of the working vehicle in which the rods of the left and right cylinders are extended.
[FIG. 14] FIG. 14 is a rear view of the frame structure in which the vehicle body frame is lowered.
[FIG. 15] FIG. 15 is a rear view of the frame structure in which the vehicle body frame is raised.
[FIG. 16] FIG. 16 is a schematic front view of the working vehicle in which the vehicle body is lowered.
[FIG. 17] FIG. 17 is a schematic front view of the working vehicle in which the vehicle body is raised.
[FIG. 18] FIG. 18 is a perspective view of the working vehicle in which the vehicle body is raised.
[FIG. 19] FIG. 19 is a left side view of the working vehicle in which the vehicle body is raised.
[FIG. 20] FIG. 20 is a right side view of the working vehicle in which the vehicle body is raised.
[FIG. 21] FIG. 21 is a front view of the working vehicle in which the vehicle body is raised.
[FIG. 22] FIG. 22 is a rear view of the working vehicle in which the vehicle body is raised.
[FIG. 23] FIG. 23 is a schematic plan view of an example of a working vehicle including a position-changing mechanism.
[FIG. 24] FIG. 24 is a schematic plan view of another example of a working vehicle including a position-changing mechanism.
[FIG. 25] FIG. 25 is a left front view of a hydraulic assembly.
[FIG. 26] FIG. 26 is a block diagram illustrating the relationship between the hydraulic assembly and a hydraulic actuator.
[FIG. 27] FIG. 27 is an enlarged plan view of a rear portion of the vehicle body frame of the working vehicle.
[FIG. 28] FIG. 28 is a schematic left side view illustrating a change in the position of the hydraulic assembly when the vehicle body is raised or lowered.
[FIG. 29] FIG. 29 illustrates an example (first example embodiment) of the manner in which electrical wires are connected in the working vehicle.
[FIG. 30] FIG. 30 is a front view of movable portions and electrical wires when the vehicle body is lowered and is close to a traveling assembly.
[FIG. 31] FIG. 31 is a front view of the movable portions and the electrical wires when the vehicle body is raised.
[FIG. 32] FIG. 32 is a front view of the movable portions and the electrical wires when the distance between the vehicle body and the traveling assembly is increased.
[FIG. 33] FIG. 33 illustrates an example (second example embodiment) of the manner in which electrical wires are connected in the working vehicle.
[FIG. 34] FIG. 34 illustrates an example (third example embodiment) of the manner in which electrical wires are connected in the working vehicle.
[FIG. 35] FIG. 35 illustrates an example (fourth example embodiment) of the manner in which electrical wires are connected in the working vehicle.
[FIG. 36] FIG. 36 illustrates an example (fifth example embodiment) of the manner in which electrical wires are connected in the working vehicle.
[FIG. 37] FIG. 37 illustrates an example (sixth example embodiment) of the manner in which electrical wires are connected in the working vehicle.
[FIG. 38] FIG. 38 illustrates a first example of an operation of a height-changing mechanism based on a detection result obtained by a tilt detector.
[FIG. 39] FIG. 39 illustrates a second example of an operation of the height-changing mechanism based on the detection result obtained by the tilt detector.
[FIG. 40] FIG. 40 illustrates an example of an operation of the height-changing mechanism when the vehicle body frame is connected to the traveling frame without a mast mechanism provided therebetween.
[FIG. 41] FIG. 41 illustrates a third example of an operation of the height-changing mechanism based on the detection result obtained by the tilt detector.
[FIG. 42] FIG. 42 is a flowchart of an example of an operation of the height-changing mechanism based on the detection result obtained by the tilt detector.
[FIG. 43] FIG. 43 is a flowchart of another example of an operation of the height-changing mechanism based on the detection result obtained by the tilt detector.
[FIG. 44] FIG. 44 illustrates a first example of an operation of a distance-changing mechanism based on the detection result obtained by the tilt detector.
[FIG. 45] FIG. 45 illustrates a second example of an operation of the distance-changing mechanism based on the detection result obtained by the tilt detector.
[FIG. 46] FIG. 46 is a flowchart of an example of an operation of the distance-changing mechanism based on the detection result obtained by the tilt detector.
[FIG. 47] FIG. 47 illustrates a first example of an operation of a position-changing mechanism based on the detection result obtained by the tilt detector.
[FIG. 48] FIG. 48 illustrates a second example of an operation of a position-changing mechanism based on the detection result obtained by the tilt detector.
[FIG. 49] FIG. 49 is a flowchart of an example of an operation of a tilt-changing mechanism based on the detection result obtained by the tilt detector.

### Description of Embodiments

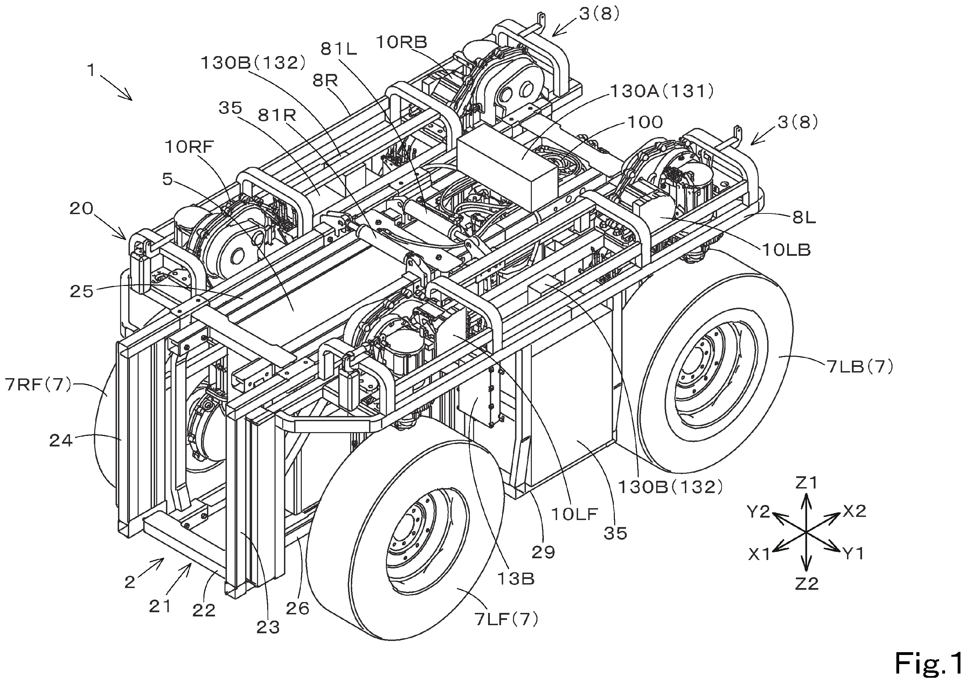

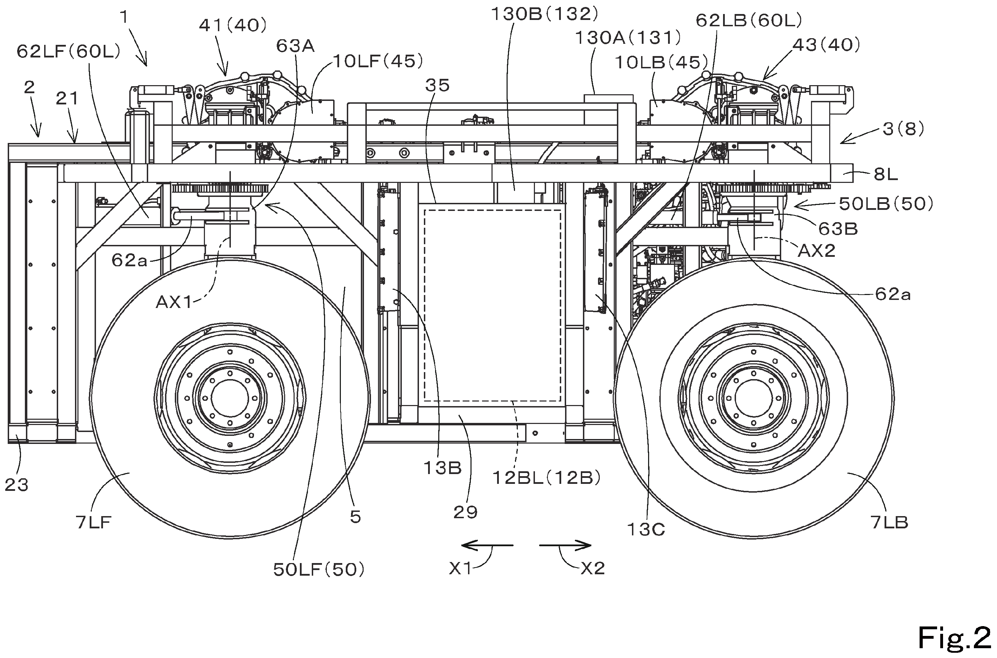

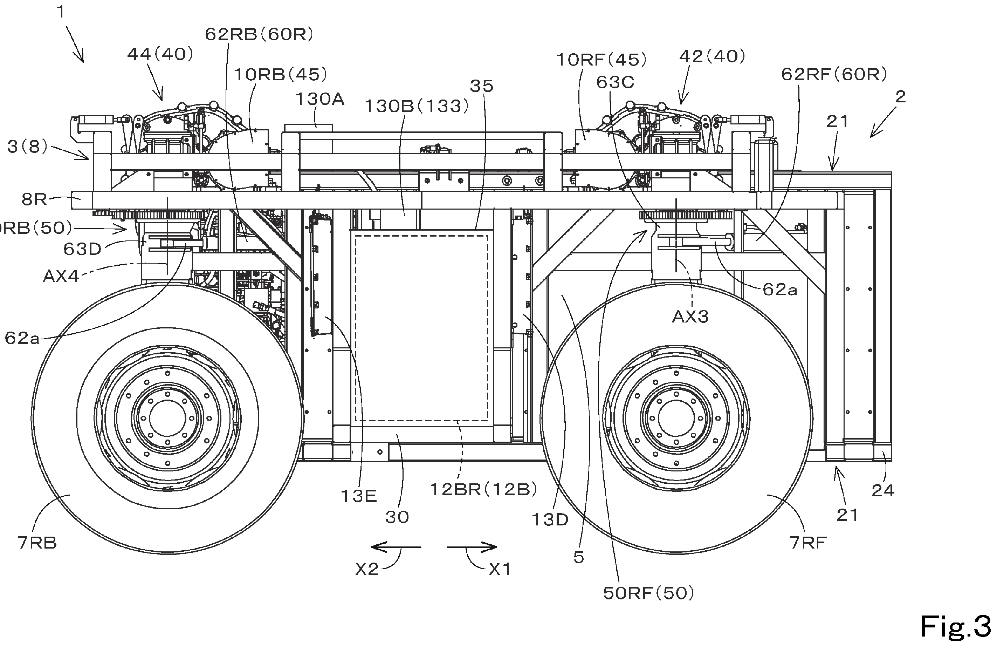

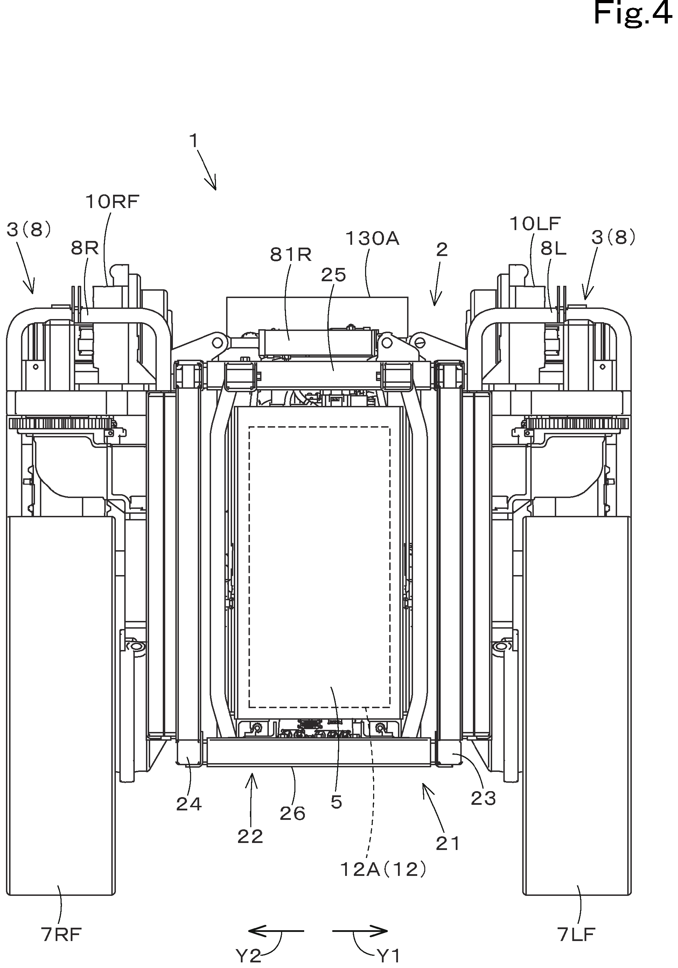

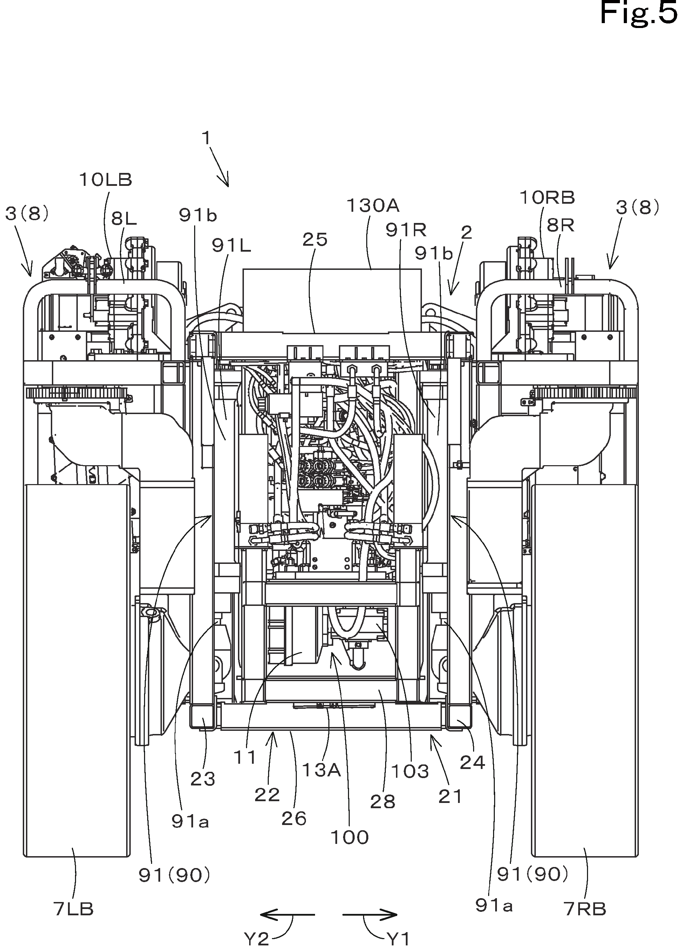

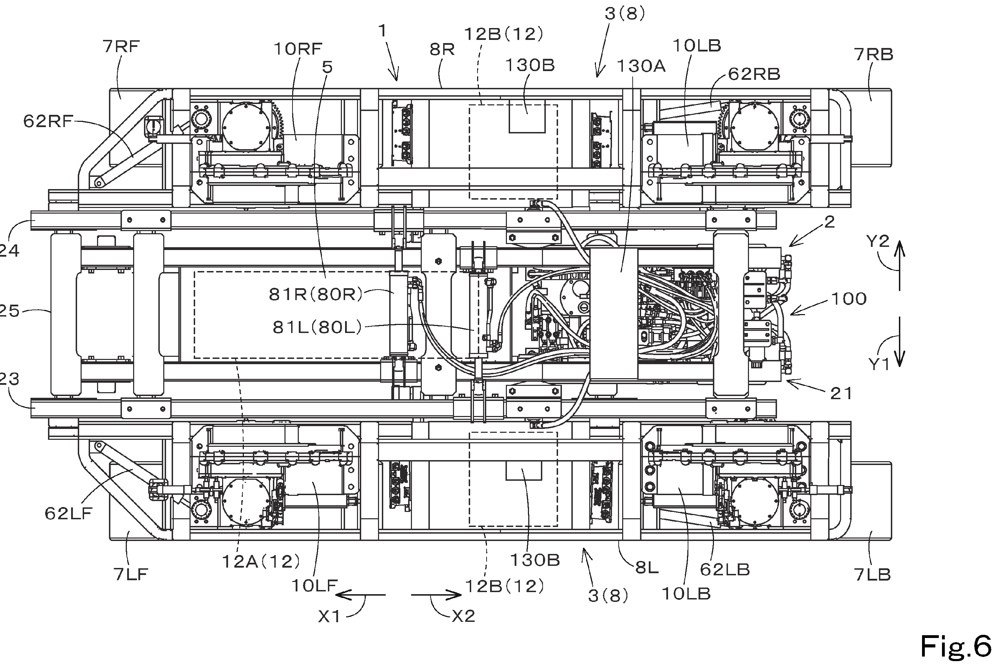

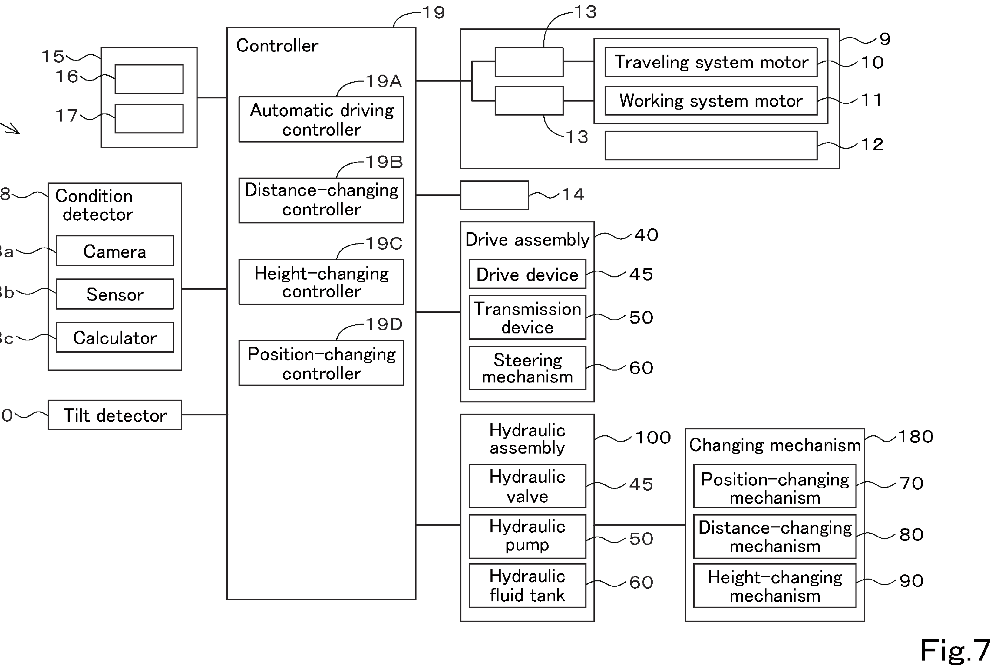

Preferred example embodiments of a working vehicle 1 according to the present invention will now be described. FIGS. 1 to 7 illustrate an example embodiment of the working vehicle 1. FIG. 1 is a perspective view of the working vehicle 1. FIG. 2 is a left side view of the working vehicle 1. FIG. 3 is a right side view of the working vehicle 1. FIG. 4 is a front view of the working vehicle 1. FIG. 5 is a rear view of the working vehicle 1. FIG. 6 is a plan view of the working vehicle 1. FIG. 7 is a block diagram illustrating the overall configuration of the working vehicle 1.

In the following description, the direction indicated by arrow X1 is referred to as forward, the direction indicated by arrow X2 is referred to as rearward, the direction indicated by arrow Y1 is referred to as leftward, the direction indicated by arrow Y2 is referred to as rightward, the direction indicated by arrow Z1 is referred to as upward, and the direction indicated by arrow Z2 is referred to as downward.

Examples of work performed by the working vehicle 1 include work related to agriculture, work related to industry (civil engineering, construction, or the like), and work related to transportation; however, work is not limited to these examples. In a preferred example embodiment of the present invention, the working vehicle 1 performs work related to agriculture (agricultural work). In this case, the working vehicle 1 is an agricultural working vehicle.

As illustrated in FIGS. 1 to 6, the working vehicle 1 includes a vehicle body 2 and a structure 3 connectable to the vehicle body 2. The structure 3 includes a traveling assembly 4 provided at lateral sides of the vehicle body 2. The traveling assembly 4 includes a left traveling assembly 4L and a right traveling assembly 4R. The left traveling assembly 4L is located leftward of the vehicle body 2. The right traveling assembly 4R is located rightward of the vehicle body 2. Accordingly, the vehicle body 2 is located between the left traveling assembly 4L and the right traveling assembly 4R.

The vehicle body 2 includes a main body 5 and a vehicle body frame 21 that supports the main body 5. The main body 5 has the shape of a box with an internal space. In the present example embodiment, the main body 5 has a substantially rectangular parallelepiped shape with an internal space. However, the shape of the main body 5 is not limited to a substantially rectangular parallelepiped shape. A first battery 12A described below is housed in the internal space of the main body 5. In other words, the main body 5 serves as a case that houses the first battery 12A. In the following description, the main body 5 is also referred to as a "main body case 5".

The vehicle body frame 21 supports the main body case 5 between a left traveling frame 8L and a right traveling frame 8R described below. The vehicle body frame 21 is a center frame located at the center of the working vehicle 1 in a left-right direction. The vehicle body frame (center frame) 21 can be raised and lowered together with the main body case 5 by driving a height-changing mechanism (lifting mechanism) 90 described below.

The vehicle body frame 21 includes a left vehicle body frame 23, a right vehicle body frame 24, and a central vehicle body frame 22. The central vehicle body frame 22 includes an upper vehicle body frame 25 and a lower vehicle body frame 26. The left vehicle body frame 23 is located leftward of the main body case 5. The right vehicle body frame 24 is located rightward of the main body case 5. The upper vehicle body frame 25 is located above the main body case 5. The lower vehicle body frame 26 is located below the main body case 5.

The traveling assembly 4 includes wheels 7 and a traveling frame 8 that supports the wheels 7. The wheels 7 include a left front wheel 7LF, a left rear wheel 7LB, a right front wheel 7RF, and a right rear wheel 7RB. In the following description, the left front wheel 7LF and the left rear wheel 7LB are collectively referred to as "left wheels", and the right front wheel 7RF and the right rear wheel 7RB are collectively referred to as "right wheels". The left front wheel 7LF, the right front wheel 7RF, the left rear wheel 7LB, and the right rear wheel 7RB are collectively referred to as the "wheels 7".

The wheels 7 (the left front wheel 7LF, the right front wheel 7RF, the left rear wheel 7LB, and the right rear wheel 7RB) are located at the lateral sides of the vehicle body 2. The left wheels (the left front wheel 7LF and the left rear wheel 7LB) are located leftward of the vehicle body 2. The right wheels (the right front wheel 7RF and the right rear wheel 7RB) are located rightward of the vehicle body 2.

The traveling frame 8 is the structure 3 connectable to the vehicle body 2. That is, the working vehicle 1 according to the present example embodiment includes the traveling frame 8 as the structure 3 connectable to the vehicle body 2. In the following description, the structure 3 connectable to the vehicle body 2 is the traveling frame 8. However, the structure 3 connectable to the vehicle body 2 is not limited to the traveling frame 8. Accordingly, the working vehicle 1 may include a structure different from the traveling frame 8 as the structure 3 connectable to the vehicle body 2.

The traveling frame 8 includes a left traveling frame 8L located leftward of the vehicle body 2 and a right traveling frame 8R located rightward of the vehicle body 2. The left traveling frame 8L supports the left wheels (the left front wheel 7LF and the left rear wheel 7LB). The right traveling frame 8R supports the right wheels (the right front wheel 7RF and the right rear wheel 7RB).

As illustrated in FIG. 7, the working vehicle 1 includes a power device 9 for driving (rotating) the wheels 7. The power device 9 generates power for driving the wheels 7, and the generated power is transmitted to the wheels 7. The power device 9 includes a motor 10 and a battery 12. The power device 9 may include an engine instead of the motor 10. Alternatively, the power device 9 may include a fuel cell.

The motor 10 is a traveling system motor that generates power for driving the wheels 7. The motor 10 is an electric motor driven by electric power. An inverter 13 is connected to the motor 10. The inverter 13 includes a plurality of inverters (a first inverter 13A, a second inverter 13B, a third inverter 13C, a fourth inverter 13D, and a fifth inverter 13E) described below. The inverter 13 controls rotation of the motor 10 based on a control signal from a controller 19 described below. The battery 12 stores electric power to be supplied to the motor 10.

As illustrated in FIG. 7, the working vehicle 1 includes a motor 11, which is a working system motor, in addition to the motor 10, which is a traveling system motor. The working system motor generates power for driving devices and mechanisms other than the wheels 7. The motor 11 is an electric motor driven by electric power supplied from the battery 12. Rotation of the motor 11 is controllable by the inverter 13.

In the following description, the motor 10 may be referred to as a "traveling system motor 10", and the motor 11 may be referred to as a "working system motor 11". The traveling system motor 10 and the working system motor 11 are capable of being driven independently of each other. The working system motor 11 is a motor for driving a hydraulic pump that operates a hydraulic cylinder described below.

The working system motor 11 may be a hydraulic motor. The hydraulic motor is driven by hydraulic fluid supplied from a hydraulic pump. In this case, for example, the traveling system motor 10 drives the hydraulic pump, and hydraulic fluid supplied by the hydraulic pump drives the hydraulic motor (working system motor 11). The hydraulic motor is driven to drive an external output shaft. The working vehicle 1 may include the working system motor 11 that is a hydraulic motor in addition to a working system motor 11 that is an electric motor.

Although not illustrated, the working vehicle 1 may include a mounting unit (e.g., a three-point linkage) for mounting a working device (implement), and an output shaft that outputs power for driving the working device mounted on the mounting unit. The mounting unit and the output shaft are, for example, provided at the rear or front of the vehicle body 2. The external output shaft is capable of being driven by the working system motor 11.

The battery 12 stores electric power to be supplied to electrical devices mounted on (or in) the vehicle body 2 or the traveling frame 8. The electrical devices mounted on the vehicle body 2 or the traveling frame 8 include the traveling system motor 10 and the working system motor 11. The traveling system motor 10 (motors 10LF, 10RF, 10LB, and 10RB described below) is mounted on (or in) the traveling frame 8. The working system motor 11 is mounted on the vehicle body 2.

As illustrated in FIG. 6 and other figures, the battery 12 includes a first battery 12A and a second battery 12B. The first battery 12A stores electric power to be supplied to the traveling system motor 10 and the working system motor 11. The second battery 12B stores electric power to be supplied to the traveling system motor 10 and the working system motor 11. The first battery 12A is located in the vehicle body 2 (specifically, the main body case 5). The second battery 12B is located in the traveling assembly 4 (specifically, the left traveling frame 8L and the right traveling frame 8R).

The first battery 12A and the second battery 12B have the same function and the same structure or operating principle for achieving the function. For example, the first battery 12A and the second battery 12B are lithium-ion batteries. The working vehicle 1 may include a battery (e.g., a lead battery) other than the first battery 12A and the second battery 12B.

As illustrated in FIG. 7, the working vehicle 1 includes a transmission 14. The transmission 14 is capable of changing the propulsion of a traveling device (traveling system motor 10) by changing speed stages. The transmission 14 is also capable of switching between forward movement and rearward movement of the working vehicle 1. The transmission 14 may include a transmission clutch capable of switching between a four-wheel drive (4WD) state, in which all four wheels (the left front wheel 7LF, the right front wheel 7RF, the left rear wheel 7LB, and the right rear wheel 7RB) are driven, and a two-wheel drive (2WD) state, in which only the rear wheels (the left rear wheel 7LB and the right rear wheel 7RB) or only the front wheels (the left front wheel 7LF and the right front wheel 7RF) are driven.

As illustrated in FIG. 7, the working vehicle 1 includes a positioning device 15. The positioning device 15 is capable of detecting the position (measured position information including latitude and longitude) of the vehicle body 2 by using a satellite positioning system (positioning satellites) such as D-GPS, GPS, GLONASS, BeiDou, Galileo, or QZSS. Specifically, the positioning device 15 receives satellite signals (e.g., positions of positioning satellites, transmission time, and correction information) transmitted from the positioning satellites, and determines the position (e.g., latitude and longitude) of the vehicle body 2 based on the satellite signals.

The positioning device 15 includes a receiver 16 and an inertial measurement unit (IMU) 17. The receiver 16 is a device that includes an antenna or the like and receives the satellite signals transmitted from the positioning satellites. The receiver 16 is attached to the vehicle body 2. The inertial measurement unit 17 includes an acceleration sensor that detects an acceleration, a gyroscope sensor that detects an angular velocity, and the like. The inertial measurement unit 17 is attached to the vehicle body 2. The inertial measurement unit 17 enables detection of a roll angle, a pitch angle, a yaw angle, and the like of the vehicle body 2. The yaw angle may be detected by using a plurality of the positioning devices 15.

As illustrated in FIG. 7, the working vehicle 1 includes a condition detector 18. The condition detector 18 detects environmental conditions around the vehicle body 2. The environmental conditions around the vehicle body 2 detected by the condition detector 18 include, for example, path information, which is information regarding a path on which the working vehicle 1 is capable of traveling. The condition detector 18 detects, for example, the width of a traveling path as the path information. The width of the traveling path detected by the condition detector 18 is the width of an object over which the working vehicle 1 is intended to travel with the object located between the left and right wheels. The condition detector 18 detects, as the width of the traveling path, for example, the width of a ridge on the ground or the width of an obstacle on the ground that impedes travel of the working vehicle 1.

As illustrated in FIG. 7, the condition detector 18 includes a camera (imager) 18a, a sensor 18b, and a calculator 18c. The camera 18a, which is mounted on the vehicle body 2, captures an image of an area around the vehicle body 2 and generates an image signal. The calculator 18c includes a computer or the like including a signal processing circuit that processes the generated image signal. The signal processing circuit detects the state of an object (presence or absence of an object, the object's position, type, size, etc.) based on the image signal output from the camera 18a. The sensor 18b, which is mounted on the vehicle body 2, detects an object around the vehicle body 2. The sensor 18b is an optical sensor, for example, a LiDAR (Light Detection and Ranging) sensor.

As illustrated in FIG. 7, the working vehicle 1 includes a controller 19. The controller 19 performs various controls of the working vehicle 1. The controller 19 includes a computing unit (such as a CPU) and a storage unit (such as a RAM and a ROM). The storage unit may include an external memory provided outside the controller 19. The controller 19 is connected to various devices and mechanisms illustrated in FIG. 7 and other figures via an in-vehicle LAN (in-vehicle network) such as a controller area network (CAN) or via communication lines.

The controller 19 controls operations of various devices and mechanisms communicatively connected to the controller 19 by causing the computing unit to execute various control programs stored in the storage unit. The functions of controllers (an automatic driving controller 19A, a distance-changing controller 19B, a height-changing controller 19C, and a position-changing controller 19D) of the controller 19 described below are provided by causing the computing unit to execute predetermined control programs stored in the storage unit.

As illustrated in FIG. 7, the controller 19 includes the automatic driving controller 19A. The automatic driving controller 19A controls automatic driving of the working vehicle 1. The automatic driving controller 19A is capable of performing line-based automatic driving control and autonomous driving control. In the line-based automatic driving control, the automatic driving controller 19A controls operations of a steering mechanism 60 described below, the transmission 14, the motor 10, and the like such that the working vehicle 1 (vehicle body 2) moves along a planned travel line set in advance.

In the autonomous driving control, the automatic driving controller 19A sets a traveling direction (steering direction), a vehicle speed (velocity), and the like for the vehicle body 2 based on the results of sensing (detection of objects) in the area around the working vehicle 1 (vehicle body 2) using the positioning device 15, the condition detector 18, and the like, and controls the operations of the steering mechanism 60, the transmission 14, the motor 10, and the like so that the set steering direction and vehicle speed are achieved.

A switch or the like may be provided to enable switching between the line-based automatic driving control and the autonomous driving control. Alternatively, the automatic driving controller 19A may be configured to be capable of performing one of the line-based automatic driving control and the autonomous driving control. The configuration of the automatic driving controller 19A is not limited to the above-described configuration.

When the controller 19 includes the automatic driving controller 19A, the working vehicle 1 is capable of performing automatic traveling (unmanned traveling) without an on-board operator. Accordingly, the working vehicle 1 of the illustrated example embodiment does not include an operator's seat for an operator. However, the working vehicle 1 may perform automatic traveling with an operator on board. Alternatively, the working vehicle 1 may be driven by an on-board operator. When the working vehicle 1 is configured to allow an operator to ride thereon, an operator's seat is provided on the vehicle body 2.

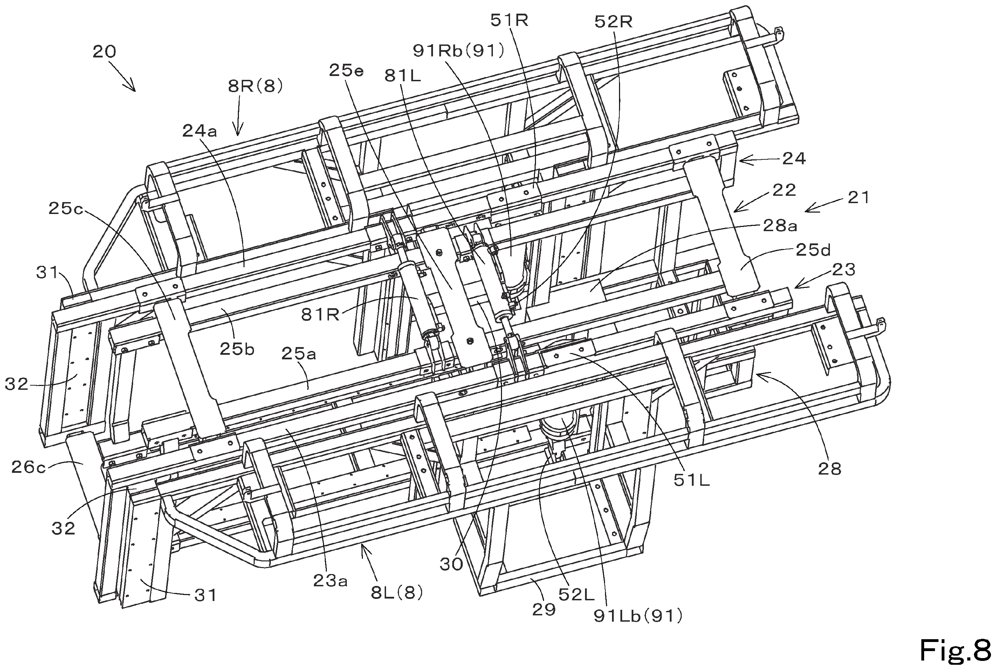

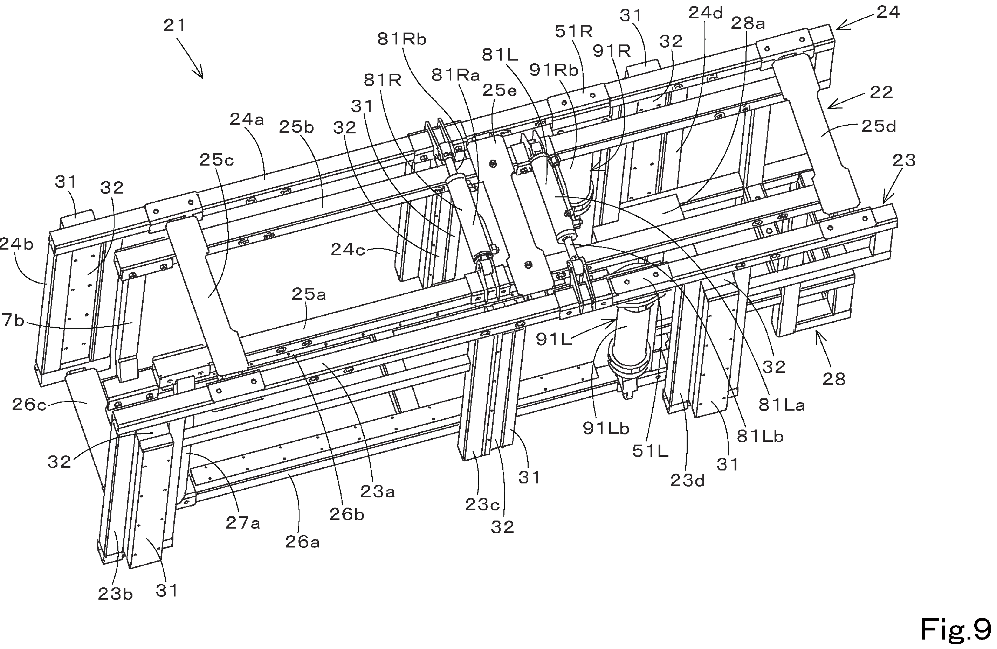

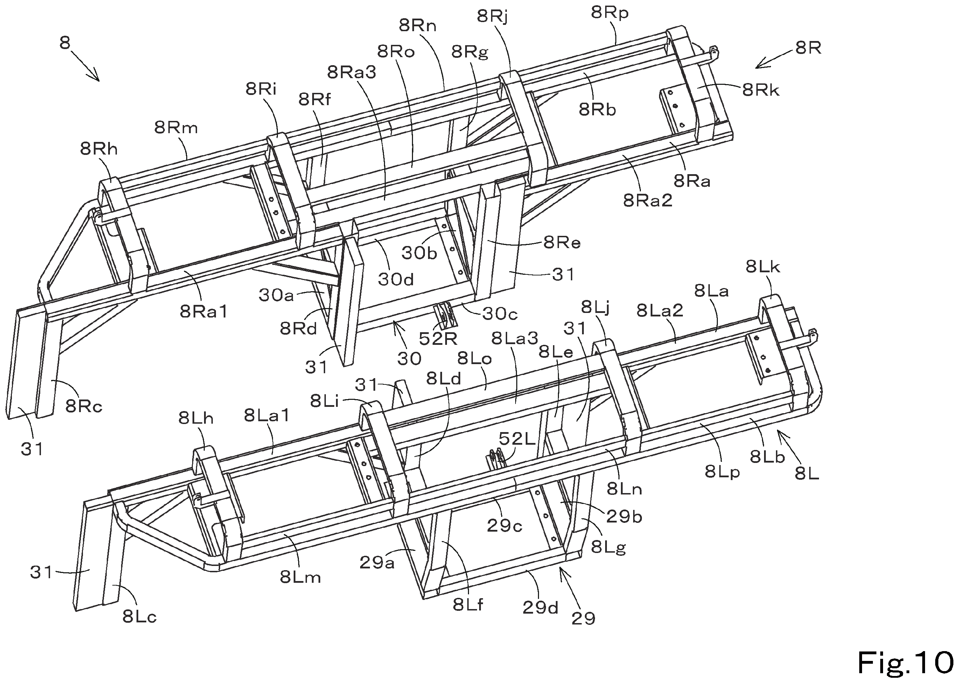

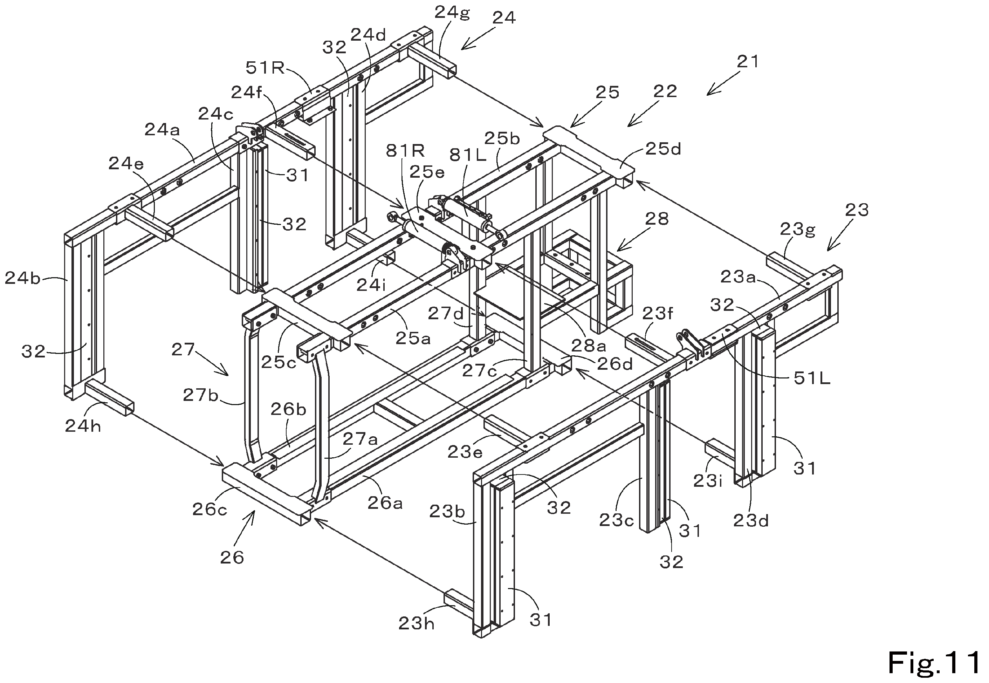

As illustrated in FIG. 1, the working vehicle 1 includes a frame structure 20. The frame structure 20 defines the framework of the working vehicle 1. FIG. 8 is a perspective view of the frame structure 20. The frame structure 20 includes the vehicle body frame 21 and the traveling frame 8. FIG. 9 is a perspective view of the vehicle body frame 21. FIG. 10 is a perspective view of the traveling frame 8. FIG. 11 is an exploded perspective view of the vehicle body frame 21.

As illustrated in FIG. 11, the vehicle body frame 21 is obtained by combining a central vehicle body frame 22, a left vehicle body frame 23, and a right vehicle body frame 24. The central vehicle body frame 22 includes an upper vehicle body frame 25, a lower vehicle body frame 26, and a connecting frame 27.

The upper vehicle body frame 25 includes a first upper frame member 25a, a second upper frame member 25b, a first tubular body 25c, a second tubular body 25d, and a third tubular body 25e. The first upper frame member 25a and the second upper frame member 25b are located parallel to each other with an interval therebetween in the left-right direction and extend in a front-rear direction. The first tubular body 25c extends in the left-right direction and connects a front portion of the first upper frame member 25a and a front portion of the second upper frame member 25b to each other. The second tubular body 25d extends in the left-right direction and connects a rear portion of the first upper frame member 25a and a rear portion of the second upper frame member 25b to each other. The third tubular body 25e extends in the left-right direction and connects a central portion of the first upper frame member 25a and a central portion of the second upper frame member 25b to each other.

The lower vehicle body frame 26 includes a first lower frame member 26a, a second lower frame member 26b, a fourth tubular body 26c, and a fifth tubular body 26d. The first lower frame member 26a and the second lower frame member 26b are located parallel to each other with an interval therebetween in the left-right direction and extend in the front-rear direction. The fourth tubular body 26c extends in the left-right direction and connects a front portion of the first lower frame member 26a and a front portion of the second lower frame member 26b to each other. The fifth tubular body 26d extends in the left-right direction and connects a rear portion of the first lower frame member 26a and a rear portion of the second lower frame member 26b to each other.

The connecting frame 27 extends in the up-down direction and connects the upper vehicle body frame 25 and the lower vehicle body frame 26 to each other. The connecting frame 27 includes a first connecting frame member 27a, a second connecting frame member 27b, a third connecting frame member 27c, and a fourth connecting frame member 27d. The first connecting frame member 27a connects the front portion of the first upper frame member 25a and the front portion of the first lower frame member 26a to each other. The second connecting frame member 27b connects the front portion of the second upper frame member 25b and the front portion of the second lower frame member 26b to each other. The third connecting frame member 27c connects the rear portion of the first upper frame member 25a and the rear portion of the first lower frame member 26a to each other. The fourth connecting frame member 27d connects the rear portion of the second upper frame member 25b and the rear portion of the second lower frame member 26b to each other.

The length of the lower vehicle body frame 26 in the front-rear direction is less than the length of the upper vehicle body frame 25 in the front-rear direction. A rear portion of the upper vehicle body frame 25 extends further rearward than a rear portion of the lower vehicle body frame 26. A first support body 28 is provided below the rear portion of the upper vehicle body frame 25 that extends further rearward than the rear portion of the lower vehicle body frame 26. The first support body 28 supports a hydraulic assembly 100 described below. The first support body 28 includes, for example, a support plate 28a that supports the hydraulic assembly 100 described below.

The left vehicle body frame 23 includes an upper left frame member 23a, a first vertical frame member 23b, a second vertical frame member 23c, and a third vertical frame member 23d. The upper left frame member 23a is located leftward of the first upper frame member 25a and extends in the front-rear direction. The first vertical frame member 23b extends downward from a front portion of the upper left frame member 23a. The second vertical frame member 23c extends downward from the upper left frame member 23a at a location rearward of the first vertical frame member 23b. The third vertical frame member 23d extends downward from the upper left frame member 23a at a location rearward of the second vertical frame member 23c.

The left vehicle body frame 23 includes a first coupling member 23e, a second coupling member 23f, a third coupling member 23g, a fourth coupling member 23h, and a fifth coupling member 23i. The first coupling member 23e is connected to the front portion of the upper left frame member 23a and extends rightward. The second coupling member 23f is connected to an intermediate portion of the upper left frame member 23a in the front-rear direction and extends rightward. The third coupling member 23g is connected to a rear portion of the upper left frame member 23a and extends rightward. The fourth coupling member 23h is connected to a lower portion of the first vertical frame member 23b and extends rightward. The fifth coupling member 23i is connected to a lower portion of the third vertical frame member 23d and extends rightward.

The right vehicle body frame 24 includes an upper right frame member 24a, a fourth vertical frame member 24b, a fifth vertical frame member 24c, and a sixth vertical frame member 24d. The upper right frame member 24a is located rightward of the second upper frame member 25b and extends in the front-rear direction. The fourth vertical frame member 24b extends downward from a front portion of the upper right frame member 24a. The fifth vertical frame member 24c extends downward from the upper right frame member 24a at a location rearward of the fourth vertical frame member 24b. The sixth vertical frame member 24d extends downward from the upper right frame member 24a at a location rearward of the fifth vertical frame member 24c.

The right vehicle body frame 24 includes a sixth coupling member 24e, a seventh coupling member 24f, an eighth coupling member 24g, a ninth coupling member 24h, and a tenth coupling member 24i. The sixth coupling member 24e is connected to the front portion of the upper right frame member 24a and extends leftward. The seventh coupling member 24f is connected to an intermediate portion of the upper right frame member 24a in the front-rear direction and extends leftward. The eighth coupling member 24g is connected to a rear portion of the upper right frame member 24a and extends leftward. The ninth coupling member 24h is connected to a lower portion of the fourth vertical frame member 24b and extends leftward. The tenth coupling member 24i is connected to a lower portion of the sixth vertical frame member 24d and extends leftward.

As indicated by the arrows in FIG. 11, the first coupling member 23e is inserted into the first tubular body 25c from the left. The second coupling member 23f is inserted into the third tubular body 25e from the left. The third coupling member 23g is inserted into the second tubular body 25d from the left. The fourth coupling member 23h is inserted into the fourth tubular body 26c from the left. The fifth coupling member 23i is inserted into the fifth tubular body 26d from the left. Accordingly, the central vehicle body frame 22 and the left vehicle body frame 23 are connected to each other.

The sixth coupling member 24e is inserted into the first tubular body 25c from the right. The seventh coupling member 24f is inserted into the third tubular body 25e from the right. The eighth coupling member 24g is inserted into the second tubular body 25d from the right. The ninth coupling member 24h is inserted into the fourth tubular body 26c from the right. The tenth coupling member 24i is inserted into the fifth tubular body 26d from the right. Accordingly, the central vehicle body frame 22 and the right vehicle body frame 24 are connected to each other.

The first coupling member 23e and the sixth coupling member 24e are movable in the left-right direction along the first tubular body 25c. The second coupling member 23f and the seventh coupling member 24f are movable in the left-right direction along the third tubular body 25e. The third coupling member 23g and the eighth coupling member 24g are movable in the left-right direction along the second tubular body 25d. The fourth coupling member 23h and the ninth coupling member 24h are movable in the left-right direction along the fourth tubular body 26c. The fifth coupling member 23i and the tenth coupling member 24i are movable in the left-right direction along the fifth tubular body 26d. Accordingly, the left vehicle body frame 23 and the right vehicle body frame 24 are movable relative to the central vehicle body frame 22 in the left-right direction.

The left vehicle body frame 23 is connected to the left traveling frame 8L by a mast mechanism described below. Accordingly, when the left vehicle body frame 23 moves relative to the central vehicle body frame 22 in the left-right direction, the left traveling frame 8L also moves relative to the central vehicle body frame 22 in the left-right direction. Thus, the left traveling assembly 4L is movable in the left-right direction relative to the vehicle body 2. The method for moving the left traveling assembly 4L will be described in detail below.

The right vehicle body frame 24 is connected to the right traveling frame 8R by a mast mechanism described below. Accordingly, when the right vehicle body frame 24 moves relative to the central vehicle body frame 22 in the left-right direction, the right traveling frame 8R also moves relative to the central vehicle body frame 22 in the left-right direction. Thus, the right traveling assembly 4R is movable in the left-right direction relative to the vehicle body 2. The method for moving the right traveling assembly 4R will be described in detail below.

As illustrated in FIG. 10, the left traveling frame 8L includes a first upper left frame member 8La and a second upper left frame member 8Lb. The first upper left frame member 8La extends in the front-rear direction and includes a front section 8La1, a rear section 8La2, and an intermediate section 8La3. The second upper left frame member 8Lb includes a first portion extending leftward and rearward from the front section 8La1 of the first upper left frame member 8La, a second portion extending leftward from the rear section 8La2 of the first upper left frame member 8La, and a third portion connecting the first and second portions to each other.

The left traveling frame 8L includes a first left vertical frame member 8Lc, a second left vertical frame member 8Ld, a third left vertical frame member 8Le, a fourth left vertical frame member 8Lf, and a fifth left vertical frame member 8Lg. The first left vertical frame member 8Lc is connected to the front section 8La1 of the first upper left frame member 8La and extends downward. The second left vertical frame member 8Ld is connected to the front section 8La1 and the intermediate section 8La3 of the first upper left frame member 8La and extends downward. The third left vertical frame member 8Le is connected to the rear section 8La2 and the intermediate section 8La3 of the first upper left frame member 8La and extends downward. The fourth left vertical frame member 8Lf extends downward from the second upper left frame member 8Lb at a location leftward of the second left vertical frame member 8Ld. The fifth left vertical frame member 8Lg extends downward from the second upper left frame member 8Lb at a location leftward of the third left vertical frame member 8Le.

The left traveling frame 8L includes a first left connecting member 8Lh, a second left connecting member 8Li, a third left connecting member 8Lj, and a fourth left connecting member 8Lk. The first left connecting member 8Lh, the second left connecting member 8Li, the third left connecting member 8Lj, and the fourth left connecting member 8Lk have an upwardly projecting arch shape. The first left connecting member 8Lh connects a front portion of the first upper left frame member 8La and a front portion of the second upper left frame member 8Lb to each other. The second left connecting member 8Li connects the first upper left frame member 8La and the second upper left frame member 8Lb to each other at a location rearward of the first left connecting member 8Lh. The third left connecting member 8Lj connects the first upper left frame member 8La and the second upper left frame member 8Lb to each other at a location rearward of the second left connecting member 8Li. The fourth left connecting member 8Lk connects the first upper left frame member 8La and the second upper left frame member 8Lb to each other at a location rearward of the third left connecting member 8Lj.

A left portion of the first left connecting member 8Lh and a left portion of the second left connecting member 8Li are connected to each other by a first front connecting member 8Lm. The left portion of the second left connecting member 8Li and a left portion of the third left connecting member 8Lj are connected to each other by a first intermediate connecting member 8Ln. A right portion of the second left connecting member 8Li and a right portion of the third left connecting member 8Lj are connected to each other by a second intermediate connecting member 8Lo. The left portion of the third left connecting member 8Lj and a left portion of the fourth left connecting member 8Lk are connected to each other by a first rear connecting member 8Lp.

The left traveling frame 8L includes a second support body 29. The second support body 29 supports the second battery 12B described below. The second support body 29 includes four of the above-described left vertical frame members (the second left vertical frame member 8Ld, the third left vertical frame member 8Le, the fourth left vertical frame member 8Lf, and the fifth left vertical frame member 8Lg), a first lower left frame member 29a, a second lower left frame member 29b, a third lower left frame member 29c, and a fourth lower left frame member 29d.

The first lower left frame member 29a connects the second left vertical frame member 8Ld and the fourth left vertical frame member 8Lf to each other. The second lower left frame member 29b connects the third left vertical frame member 8Le and the fifth left vertical frame member 8Lg to each other. The third lower left frame member 29c connects the second left vertical frame member 8Ld and the third left vertical frame member 8Le to each other. The fourth lower left frame member 29d connects the fourth left vertical frame member 8Lf and the fifth left vertical frame member 8Lg to each other.

As illustrated in FIG. 10, the right traveling frame 8R includes a first upper right frame member 8Ra and a second upper right frame member 8Rb. The first upper right frame member 8Ra extends in the front-rear direction and includes a front section 8Ra1, a rear section 8Ra2, and an intermediate section 8Ra3. The second upper right frame member 8Rb includes a first portion extending rightward and rearward from the front section 8Ra1 of the first upper right frame member 8Ra, a second portion extending rightward from the rear section 8Ra2 of the first upper right frame member 8Ra, and a third portion connecting the first and second portions to each other.

The right traveling frame 8R includes a first right vertical frame member 8Rc, a second right vertical frame member 8Rd, a third right vertical frame member 8Re, a fourth right vertical frame member 8Rf, and a fifth right vertical frame member 8Rg. The first right vertical frame member 8Rc is connected to the front section 8Ra1 of the first upper right frame member 8Ra and extends downward. The second right vertical frame member 8Rd is connected to the front section 8Ra1 and the intermediate section 8Ra3 of the first upper right frame member 8Ra and extends downward. The third right vertical frame member 8Re is connected to the rear section 8Ra2 and the intermediate section 8Ra3 of the first upper right frame member 8Ra and extends downward. The fourth right vertical frame member 8Rf extends downward from the second upper right frame member 8Rb at a location rightward of the second right vertical frame member 8Rd. The fifth right vertical frame member 8Rg extends downward from the second upper right frame member 8Rb at a location rightward of the third right vertical frame member 8Re.

The right traveling frame 8R includes a first right connecting member 8Rh, a second right connecting member 8Ri, a third right connecting member 8Rj, and a fourth right connecting member 8Rk. The first right connecting member 8Rh, the second right connecting member 8Ri, the third right connecting member 8Rj, and the fourth right connecting member

8Rk have an upwardly projecting arch shape. The first right connecting member 8Rh connects a front portion of the first upper right frame member 8Ra and a front portion of the second upper right frame member 8Rb to each other. The second right connecting member 8Ri connects the first upper right frame member 8Ra and the second upper right frame member 8Rb to each other at a location rearward of the first right connecting member 8Rh. The third right connecting member 8Rj connects the first upper right frame member 8Ra and the second upper right frame member 8Rb to each other at a location rearward of the second right connecting member 8Ri. The fourth right connecting member 8Rk connects the first upper right frame member 8Ra and the second upper right frame member 8Rb to each other at a location rearward of the third right connecting member 8Rj.

A right portion of the first right connecting member 8Rh and a right portion of the second right connecting member 8Ri are connected to each other by a first front connecting member 8Rm. The right portion of the second right connecting member 8Ri and a right portion of the third right connecting member 8Rj are connected to each other by a first intermediate connecting member 8Rn. A left portion of the second right connecting member 8Ri and a left portion of the third right connecting member 8Rj are connected to each other by a second intermediate connecting member 8Ro. A right portion of the third right connecting member 8Rj and a right portion of the fourth right connecting member 8Rk are connected to each other by a first rear connecting member 8Rp.

The right traveling frame 8R includes a third support body 30. The third support body 30 supports the second battery 12B described below. The third support body 30 includes four of the above-described right vertical frame members (the second right vertical frame member 8Rd, the third right vertical frame member 8Re, the fourth right vertical frame member 8Rf, and the fifth right vertical frame member 8Rg), a first lower right frame member 30a, a second lower right frame member 30b, a third lower right frame member 30c, and a fourth lower right frame member 30d.

The first lower right frame member 30a connects the second right vertical frame member 8Rd and the fourth right vertical frame member 8Rf to each other. The second lower right frame member 30b connects the third right vertical frame member 8Re and the fifth right vertical frame member 8Rg to each other. The third lower right frame member 30c connects the second right vertical frame member 8Rd and the third right vertical frame member 8Re to each other. The fourth lower right frame member 30d connects the fourth right vertical frame member 8Rf and the fifth right vertical frame member 8Rg to each other.

The frame structure 20 includes a mast mechanism that supports the traveling frame (the left traveling frame 8L and the right traveling frame 8R) such that the traveling frame (the left traveling frame 8L and the right traveling frame 8R) is movable relative to the vehicle body frame 21 in the up-down direction. As illustrated in FIGS. 9, 10, 11, and 12, the mast mechanism includes first members 31 attached to the traveling frame (the left traveling frame 8L and the right traveling frame 8R), and second members 32 attached to the vehicle body frame 21. To illustrate the positional relationship between the first members 31 and the second members 32 in the drawings, FIGS. 9 and 11, which are views of the vehicle body frame 21, also illustrate the first members 31.

The first members 31 and the second members 32 extend in the up-down direction. The second members 32 are connected to the respective first members 31 such that the second members 32 are movable relative to the first members 31 in the up-down direction. When the second members 32 move along the respective first members 31 in the up-down direction, the vehicle body frame 21 moves relative to the traveling frame (the left traveling frame 8L and the right traveling frame 8R) in the up-down direction.

As illustrated in FIG. 10, the first members 31 are attached to the left traveling frame 8L and the right traveling frame 8R. In the left traveling frame 8L, the first members 31 are attached to the first left vertical frame member 8Lc, the second left vertical frame member 8Ld, and the third left vertical frame member 8Le. In the right traveling frame 8R, the first members 31 are attached to the first right vertical frame member 8Rc, the second right vertical frame member 8Rd, and the third right vertical frame member 8Re.

As illustrated in FIGS. 9 and 11, the second members 32 are attached to the left vehicle body frame 23 and the right vehicle body frame 24. In the left vehicle body frame 23, the second members 32 are attached to the first vertical frame member 23b, the second vertical frame member 23c, and the third vertical frame member 23d. In the right vehicle body frame 24, the second members 32 are attached to the fourth vertical frame member 24b, the fifth vertical frame member 24c, and the sixth vertical frame member 24d.

The first members 31 attached to the left traveling frame 8L are arranged to face the second members 32 attached to the left vehicle body frame 23 and connected to the second members 32 such that the first members 31 are movable relative to the second members 32 in the up-down direction. The first members 31 attached to the right traveling frame 8R are arranged to face the second members 32 attached to the right vehicle body frame 24 and connected to the second members 32 such that the first members 31 are movable relative to the second members 32 in the up-down direction.

When the left vehicle body frame 23 moves relative to the left traveling frame 8L in the up-down direction, the vehicle body 2 moves relative to the left traveling assembly 4L in the up-down direction. When the right vehicle body frame 24 moves relative to the right traveling frame 8R in the up-down direction, the vehicle body 2 moves relative to the right traveling assembly 4R in the up-down direction.

The configuration of the mast mechanism is not limited to the above-described configuration. For example, the mast mechanism may include third members in addition to the first members 31 and the second members 32. In this case, each third member is located between a corresponding first member 31 and a corresponding second member 32. The third members are connected to the first members 31 such that the third members are movable relative to the first members 31 in the up-down direction, and the second members 32 are connected to the third members such that the second members 32 are movable relative to the third members in the up-down direction.

As illustrated in FIG. 7, the working vehicle 1 includes a drive assembly 40 for driving the wheels (the left front wheel 7LF, the right front wheel 7RF, the left rear wheel 7LB, and the right rear wheel 7RB). The drive assembly 40 includes a drive device 45 that generates power, a transmission mechanism 50 that transmits the power generated by the drive device 45 to the wheels, and a steering mechanism 60 that changes the directions of the wheels. In the present example embodiment, the steering mechanism 60 changes the directions of the front wheels (the left front wheel 7LF and the right front wheel 7RF) and the rear wheels (the left rear wheel 7LB and the right rear wheel 7RB). Specifically, the steering mechanism 60 changes the directions of the left front wheel 7LF, the right front wheel 7RF, the left rear wheel 7LB, and the right rear wheel 7RB independently of each other. However, the steering mechanism 60 may change the directions of only the front wheels or only the rear wheels.

As illustrated in FIGS. 2 and 3, the drive assembly 40 includes a first drive assembly 41 for driving the left front wheel 7LF, a second drive assembly 42 for driving the right front wheel 7RF, a third drive assembly 43 for driving the left rear wheel 7LB, and a fourth drive assembly 44 for driving the right rear wheel 7RB. The first drive assembly 41, the second drive assembly 42, the third drive assembly 43, and the fourth drive assembly 44 each include the drive device 45 and the transmission mechanism 50 described below. The first drive assembly 41 and the second drive assembly 42 each include the steering mechanism 60 described below. Each drive assembly is attached to the frame structure 20.

In the present example embodiment, the drive device 45 is a motor. Specifically, the drive device 45 is the above-described traveling system motor 10. In other words, the motor that serves as the drive device 45 is the same as the motor included in the above-described power device 9. As described below, the motor 10 that is the drive device 45 of the drive assembly 40 includes a motor 10LF, a motor 10RF, a motor 10LB, and a motor 10RB.

As illustrated in FIG. 2, the first drive assembly 41 includes the motor 10LF and a transmission mechanism 50LF that transmits the power of the motor 10LF to the left front wheel 7LF. The transmission mechanism 50LF includes a gear mechanism including a plurality of gears and the like. In the first drive assembly 41, when the motor 10LF is driven, the power of the motor 10LF is transmitted to the left front wheel 7LF through the transmission mechanism 50LF.

As illustrated in FIG. 3, the second drive assembly 42 includes the motor 10RF and a transmission mechanism 50RF that transmits the power of the motor 10RF to the right front wheel 7RF. The transmission mechanism 50RF includes a gear mechanism including a plurality of gears and the like. In the second drive assembly 42, when the motor 10RF is driven, the power of the motor 10RF is transmitted to the right front wheel 7RF through the transmission mechanism 50RF.

As illustrated in FIG. 2, the third drive assembly 43 includes the motor 10LB and a transmission mechanism 50LB that transmits the power of the motor 10LB to the left rear wheel 7LB. The transmission mechanism 50LB includes a gear mechanism including a plurality of gears and the like. In the third drive assembly 43, when the motor 10LB is driven, the power of the motor 10LB is transmitted to the left rear wheel 7LB through the transmission mechanism 50LB.

As illustrated in FIG. 3, the fourth drive assembly 44 includes the motor 10RB and a transmission mechanism 50RB that transmits the power of the motor 10RB to the right rear wheel 7RB. The transmission mechanism 50RB includes a gear mechanism including a plurality of gears and the like. In the fourth drive assembly 44, when the motor 10RB is driven, the power of the motor 10RB is transmitted to the right rear wheel 7RB through the transmission mechanism 50RB.

As illustrated in FIG. 7, the drive assembly 40 includes the steering mechanism 60 that changes the directions of the wheels. As illustrated in FIGS. 2 and 3, the steering mechanism 60 includes a left steering mechanism 60L that changes the directions of the left front wheel 7LF and the left rear wheel 7LB, and a right steering mechanism 60R that changes the directions of the right front wheel 7RF and the right rear wheel 7RB.

As illustrated in FIG. 2, the first drive assembly 41 and the third drive assembly 43 include the left steering mechanism 60L. The left steering mechanism 60L includes steering cylinders 62LF and 62LB. The steering cylinder 62LF is a cylinder for steering the left front wheel 7LF. The steering cylinder 62LB is a cylinder for steering the left rear wheel 7LB. The steering cylinder 62LF includes a rod 62a connected to a connecting body 63A that is connected to the left front wheel 7LF and that is rotatable about an axis AX1. The steering cylinder 62LB includes a rod 62a connected to a connecting body 63B that is connected to the left rear wheel 7LB and that is rotatable about an axis AX2. The left steering mechanism 60L is capable of rotating the left front wheel 7LF about the axis AX1 by driving the steering cylinder 62LF to extend or retract the rod 62a. The left steering mechanism 60L is capable of rotating the left rear wheel 7LB about the axis AX2 by driving the steering cylinder 62LB to extend or retract the rod 62a.

As illustrated in FIG. 3, the second drive assembly 42 and the fourth drive assembly 44 include the right steering mechanism 60R. The right steering mechanism 60R includes steering cylinders 62RF and 62RB. The steering cylinder 62RF is a cylinder for steering the right front wheel 7RF. The steering cylinder 62RB is a cylinder for steering the right rear wheel 7RB. The steering cylinder 62RF includes a rod 62a connected to a connecting body 63C that is connected to the right front wheel 7RF and that is rotatable about an axis AX3. The steering cylinder 62RB includes a rod 62a connected to a connecting body 63D that is connected to the right rear wheel 7RB and that is rotatable about an axis AX4. The right steering mechanism 60R is capable of rotating the right front wheel 7RF about the axis AX3 by driving the steering cylinder 62RF to extend or retract the rod 62a. The right steering mechanism 60R is capable of rotating the right rear wheel 7RB about the axis AX4 by driving the steering cylinder 62RB to extend or retract the rod 62a.

In the following description, the steering cylinders 62LF, 62LB, 62RF, and 62RB are collectively referred to as "steering cylinder 62". The working vehicle 1 is capable of changing the traveling direction by driving the steering cylinder 62 of the steering mechanism 60 to change the directions of the left front wheel 7LF and/or the right front wheel 7RF.

As illustrated in FIGS. 2, 3, and 6, the steering cylinder 62 is fixed to the traveling frame 8, which is the above-described structure 3. More specifically, the steering cylinder 62LF is fixed to a front portion of the left traveling frame 8L. The steering cylinder 62LB is fixed to a rear portion of the left traveling frame 8L. The steering cylinder 62RF is fixed to a front portion of the right traveling frame 8R. The steering cylinder 62RF is fixed to a rear portion of the right traveling frame 8R. In some drawings (e.g., FIG. 1), the steering cylinder 62 is omitted.

The left traveling assembly 4L includes the first drive assembly 41 and the third drive assembly 43. Accordingly, the left traveling assembly 4L includes the motor 10LF, the transmission mechanism 50LF, the motor 10LB, the transmission mechanism 50LB, and the left steering mechanism 60L. The right traveling assembly 4R includes the second drive assembly 42 and the fourth drive assembly 44. Accordingly, the right traveling assembly 4R includes the motor 10RF, the transmission mechanism 50RF, the motor 10RB, the transmission mechanism 50RB, and the right steering mechanism 60R.

As another example embodiment of the drive device 45, the motor of the drive device 45 may be an in-wheel motor. In this case, the left front wheel 7LF, the right front wheel 7RF, the left rear wheel 7LB, and the right rear wheel 7RB may all be driven by in-wheel motors, or some of them (e.g., the left and right front wheels 7LF and 7RF, or the left and right rear wheels 7LB and 7RB) may be driven by in-wheel motors.

The drive assembly 40 includes brake cylinders (not illustrated) for stopping the wheels 7. The brake cylinders are hydraulic actuators operated by hydraulic pressure. The brake cylinders can be operated to move brake pads to stop the rotation of the wheels. The brake cylinders may stop both the front wheels (the left front wheel 7LF and the right front wheel 7RF) and the rear wheels (the left rear wheel 7LB and the right rear wheel 7RB), or may stop only the front wheels or only the rear wheels. The operation of the brake cylinders is controllable by the controller 19.

As illustrated in FIG. 7, the working vehicle 1 includes a distance-changing mechanism 80. The distance-changing mechanism 80 changes the distance between the left traveling assembly 4L and the right traveling assembly 4R. As illustrated in FIG. 6, the distance-changing mechanism 80 includes a left changing mechanism 80L that changes the position of the left traveling assembly 4L in the left-right direction and a right changing mechanism 80R that changes the position of the right traveling assembly 4R in the left-right direction.

As illustrated in FIG. 6, the left changing mechanism 80L includes a left cylinder 81L that moves the left traveling assembly 4L leftward or rightward. The left cylinder 81L moves the left traveling frame 8L leftward or rightward. The left front wheel 7LF and the left rear wheel 7LB are supported by the left traveling frame 8L. Accordingly, the left cylinder 81L is capable of moving the left front wheel 7LF and the left rear wheel 7LB leftward or rightward together by moving the left traveling frame 8L leftward or rightward.

As illustrated in FIG. 6, the right changing mechanism 80R includes a right cylinder 81R that moves the right traveling assembly 4R leftward or rightward. The right cylinder 81R moves the right traveling frame 8R leftward or rightward. The right front wheel 7RF and the right rear wheel 7RB are supported by the right traveling frame 8R. Accordingly, the right cylinder 81R is capable of moving the right front wheel 7RF and the right rear wheel 7RB leftward or rightward together by moving the right traveling frame 8R leftward or rightward.

The right cylinder 81R and the left cylinder 81L are hydraulic cylinders, which are hydraulic actuators operated by hydraulic pressure. In the following description, the right cylinder 81R and the left cylinder 81L may be collectively referred to as "distance-changing cylinder 81". The hydraulic cylinders (distance-changing cylinder 81) that serve as the right and left cylinders 81R and 81L are operated (extended and retracted) by hydraulic fluid supplied from a hydraulic pump driven by the above-described working system motor 11.

The configurations of the left and right changing mechanisms 80L and 80R will now be described in more detail. As illustrated in FIG. 9, the left cylinder 81L includes a cylinder tube 81La attached to the central vehicle body frame 22 and a rod 81Lb that projects leftward from the cylinder tube 81La. An end of the rod 81Lb of the left cylinder 81L is connected to the left vehicle body frame 23. The right cylinder 81R includes a cylinder tube 81Ra attached to the central vehicle body frame 22 and a rod 81Rb that projects rightward from the cylinder tube 81Ra. An end of the rod 81Rb of the right cylinder 81R is connected to the right vehicle body frame 24.

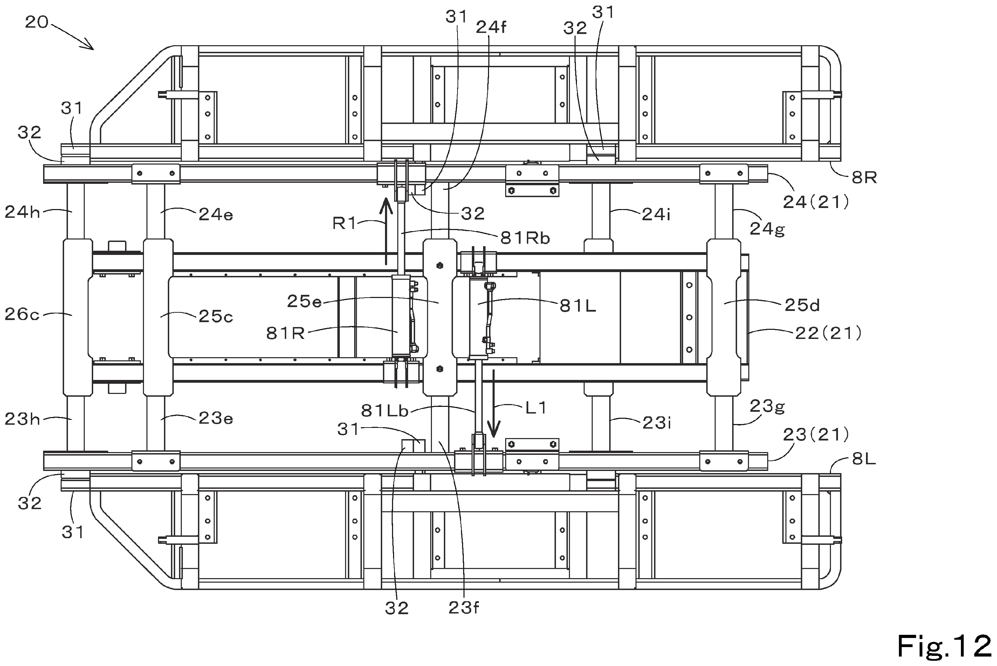

As indicated by arrow L1 in FIG. 12, when the rod 81Lb of the left cylinder 81L extends leftward, the left vehicle body frame 23 moves leftward. When the rod 81Lb of the left cylinder 81L retracts rightward, the left vehicle body frame 23 moves rightward. As indicated by arrow R1 in FIG. 12, when the rod 81Rb of the right cylinder 81R extends rightward, the right vehicle body frame 24 moves rightward. When the rod 81Rb of the right cylinder 81R retracts leftward, the right vehicle body frame 24 moves leftward.

As described above, the left vehicle body frame 23 moves relative to the central vehicle body frame 22 in the left-right direction in response to the operation (extension and retraction) of the left cylinder 81L. Thus, the position of the left vehicle body frame 23 in the left-right direction is changeable. The right vehicle body frame 24 moves relative to the central vehicle body frame 22 in the left-right direction in response to the operation (extension and retraction) of the right cylinder 81R. Thus, the position of the right vehicle body frame 24 in the left-right direction is changeable.

As described above, the left vehicle body frame 23 is connected to the left traveling frame 8L by the mast mechanism. The right vehicle body frame 24 is connected to the right traveling frame 8R by the mast mechanism. Accordingly, when the left vehicle body frame 23 moves relative to the central vehicle body frame 22 in the left-right direction, the left traveling frame 8L moves relative to the central vehicle body frame 22 in the left-right direction. When the right vehicle body frame 24 moves relative to the central vehicle body frame 22 in the left-right direction, the right traveling frame 8R moves relative to the central vehicle body frame 22 in the left-right direction.

Thus, the positions of the left and right traveling assemblies 4L and 4R in the left-right direction can be changed by moving the left and right traveling frames 8L and 8R relative to the central vehicle body frame 22 in the left-right direction. Accordingly, the distance between the left and right traveling assemblies 4L and 4R can be changed. Additionally, the distance between the left traveling assembly 4L and the vehicle body 2 and the distance between the right traveling assembly 4R and the vehicle body 2 can also be changed. These changes in distance can be achieved by operating one or both of the left cylinder 81L and the right cylinder 81R.

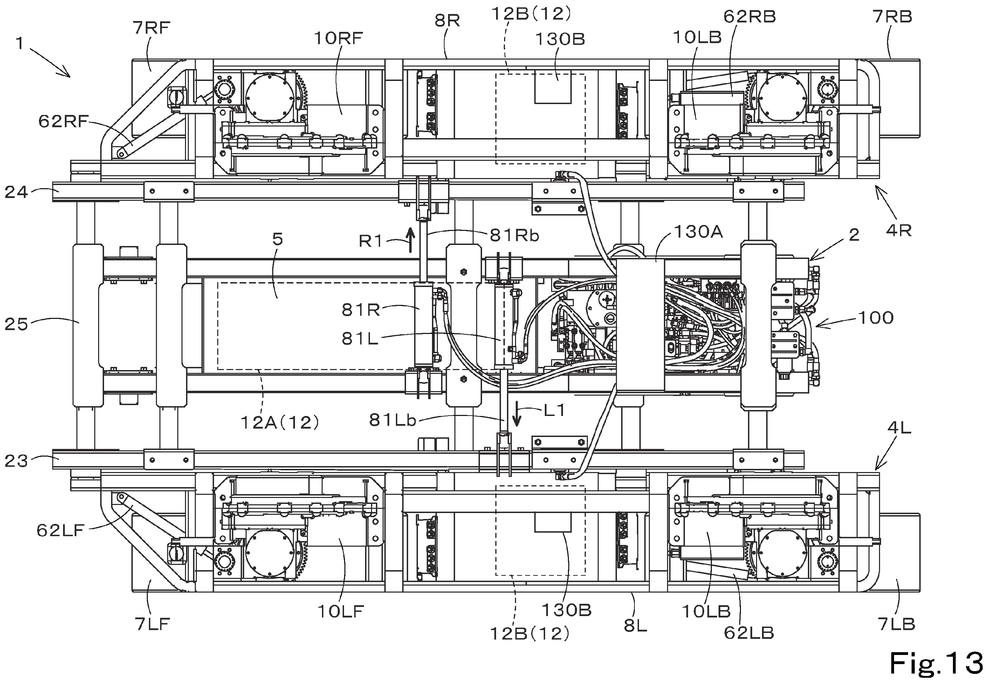

FIG. 6 illustrates a state in which the rods of the left and right cylinders 81L and 81R are retracted. In this state, the distance between the left and right traveling assemblies 4L and 4R is short. Additionally, the distance between the left traveling assembly 4L and the vehicle body 2 and the distance between the right traveling assembly 4R and the vehicle body 2 are also short. When the rod 81Lb of the left cylinder 81L and the rod 81Rb of the right cylinder 81R extend from this state (see arrows L1 and R1 in FIG. 13), the left traveling assembly 4L and the right traveling assembly 4R move in opposite directions. Accordingly, as illustrated in FIG. 13, the distance between the left and right traveling assemblies 4L and 4R can be increased. Additionally, the distance between the left traveling assembly 4L and the vehicle body 2 and the distance between the right traveling assembly 4R and the vehicle body 2 can also be increased.

The operation of the distance-changing mechanism 80 is controlled by the controller 19. More specifically, the operations of the left and right cylinders 81L and 81R of the distance-changing mechanism 80 are controlled by the controller 19. As illustrated in FIG. 7, the controller 19 includes the distance-changing controller 19B. The distance-changing controller 19B controls the distance-changing mechanism 80 such that the distance-changing mechanism 80 performs the changing operation. The distance-changing mechanism 80 changes the positions of the left traveling assembly 4L and/or the right traveling assembly 4R in the left-right direction based on, for example, a detection result obtained by a tilt detector 170 described below.

The distance-changing mechanism 80 is capable of operating the left changing mechanism 80L and the right changing mechanism 80R individually. In other words, the distance-changing mechanism 80 is capable of operating only the left changing mechanism 80L, only the right changing mechanism 80R, or both the left changing mechanism 80L and the right changing mechanism 80R. The distance-changing mechanism 80 is capable of operating the left changing mechanism 80L and the right changing mechanism 80R individually based on the detection result obtained by the tilt detector 170 described below.

As illustrated in FIG. 7, the working vehicle 1 includes a height-changing mechanism 90. The height-changing mechanism 90 is capable of changing the position of the vehicle body 2 relative to the traveling assembly 4 in the up-down direction. The height of the vehicle body 2 from the ground can be changed by changing the position of the vehicle body 2 relative to the traveling assembly 4 in the up-down direction. The height-changing mechanism 90 raises and lowers the vehicle body 2 at a location between the left traveling assembly 4L and the right traveling assembly 4R in the width direction (left-right direction) of the vehicle body 2.

As illustrated in FIGS. 5 and 8 and other figures, the height-changing mechanism 90 includes a lifting cylinder 91. The lifting cylinder 91 raises and lowers the vehicle body frame 21 relative to the traveling frame 8. When the vehicle body frame 21 is raised and lowered, the vehicle body 2 including the vehicle body frame 21 and the main body case 5 is also raised and lowered. Accordingly, the vehicle body 2 can be raised and lowered relative to the traveling frame 8 by driving the lifting cylinder 91. Thus, the height-changing mechanism 90 is capable of raising and lowering the vehicle body 2 (vehicle body frame 21) relative to the traveling frame 8. In the following description, the height-changing mechanism 90 may be referred to as a "lifting mechanism 90".

The lifting cylinder 91 includes a left lifting cylinder 91L and a right lifting cylinder 91R. The left lifting cylinder 91L is located at a left portion of the vehicle body 2. The right lifting cylinder 91R is located at a right portion of the vehicle body 2. The lifting cylinder 91 is a hydraulic cylinder, which is a hydraulic actuator operated by hydraulic pressure. The lifting cylinder 91 includes a rod 91a that extends and retracts in the up-down direction, and a cylinder tube 91b to which hydraulic fluid for driving the rod 91a is supplied. The rod 91a extends downward from the cylinder tube 91b.

As illustrated in FIGS. 8 and 9, the left lifting cylinder 91L includes a cylinder tube 91Lb attached to a left bracket 51L fixed to an upper portion (upper left frame member 23a) of the left vehicle body frame 23. The right lifting cylinder 91R includes a cylinder tube 91Rb attached to a bracket 51R fixed to an upper portion (upper right frame member 24a) of the right vehicle body frame 24.

As illustrated in FIGS. 8 and 10, the left traveling frame 8L includes a left connector 52L to which the rod of the left lifting cylinder 91L is connected. The left connector 52L is fixed to a lower portion (third lower left frame member 29c) of the left traveling frame 8L. The rod of the left lifting cylinder 91L is connected to the left connector 52L. Accordingly, the left vehicle body frame 23 can be raised and lowered relative to the left traveling frame 8L in response to the extension and retraction of the rod of the left lifting cylinder 91L.

As illustrated in FIGS. 8 and 10, the right traveling frame 8R includes a right connector 52R to which the rod of the right lifting cylinder 91R is connected. The right connector 52R is fixed to a lower portion (third lower right frame member 30c) of the right traveling frame 8R. The rod of the right lifting cylinder 91R is connected to the right connector 52R. Accordingly, the right vehicle body frame 24 can be raised and lowered relative to the right traveling frame 8R in response to the extension and retraction of the rod of the right lifting cylinder 91R.

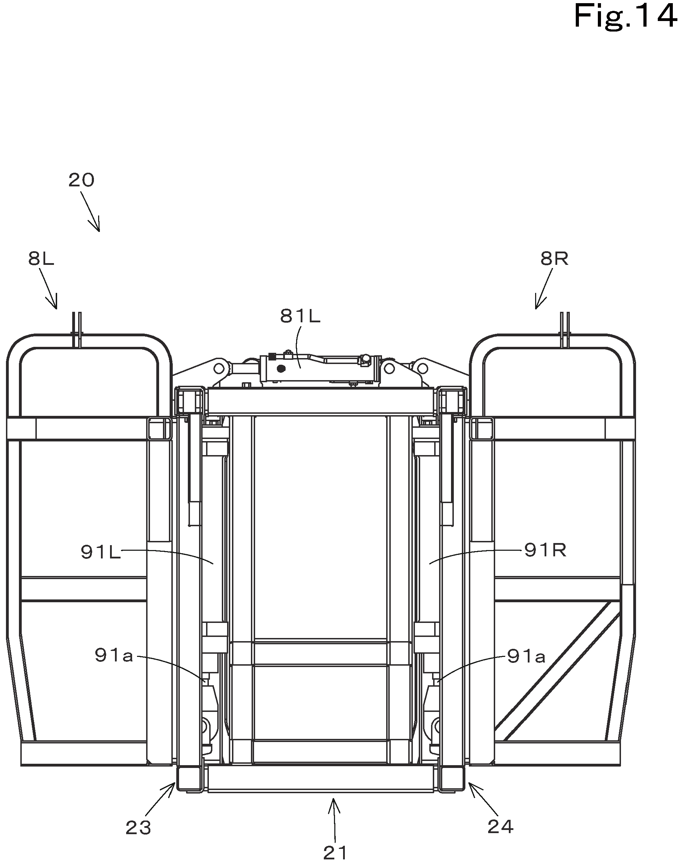

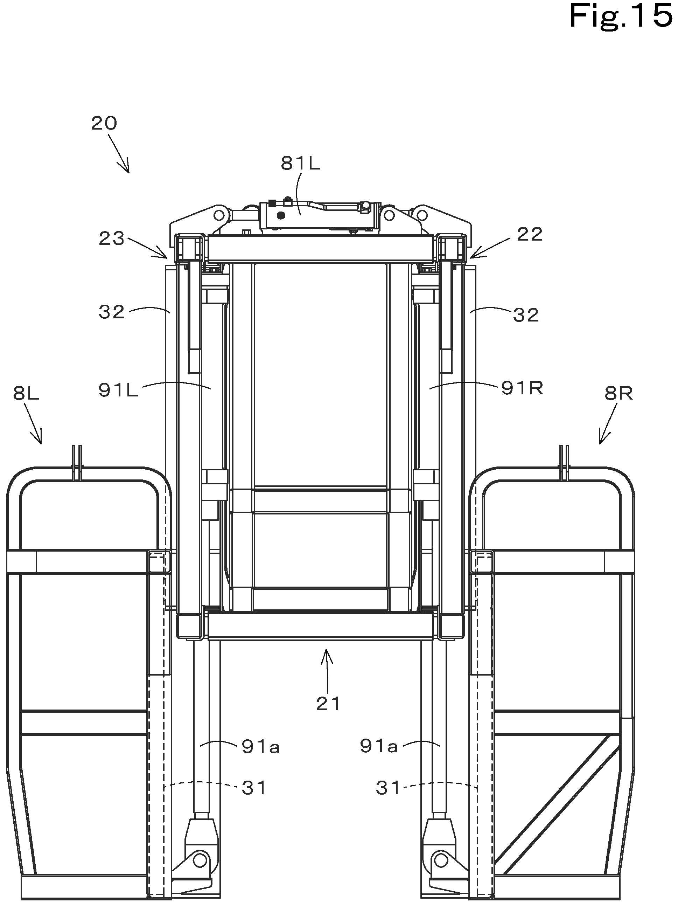

When the rod of the left lifting cylinder 91L extends and retracts, the left vehicle body frame 23 is raised and lowered. When the rod of the right lifting cylinder 91R extends and retracts, the right vehicle body frame 24 is raised and lowered. Accordingly, the vehicle body frame 21 can be raised and lowered in response to the extension and retraction of the rod of the lifting cylinder 91 (the left lifting cylinder 91L and the right lifting cylinder 91R). FIG. 14 illustrates a state in which the vehicle body frame 21 is lowered, and FIG. 15 illustrates a state in which the vehicle body frame 21 is raised.

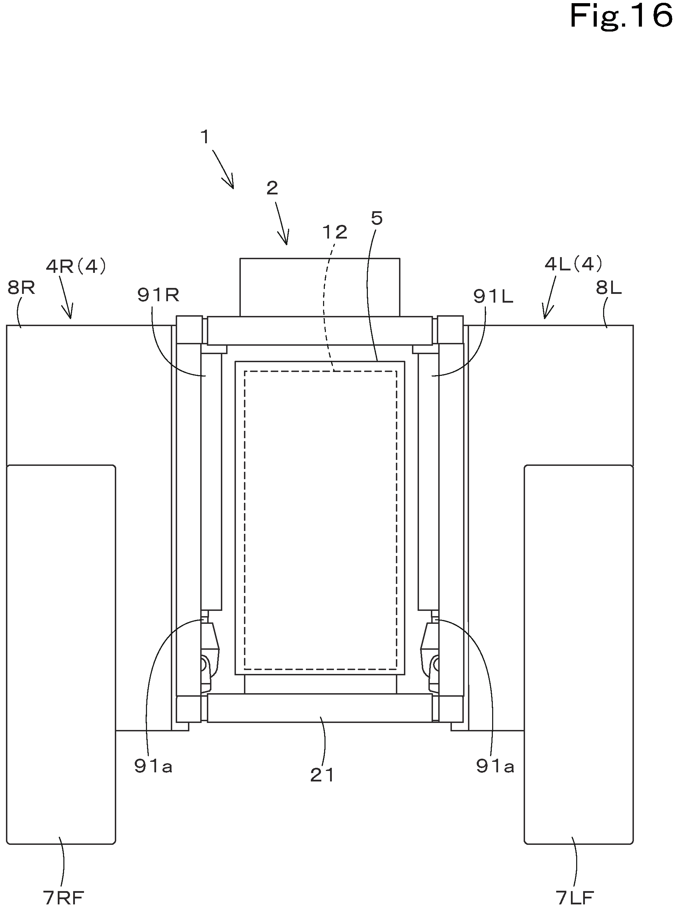

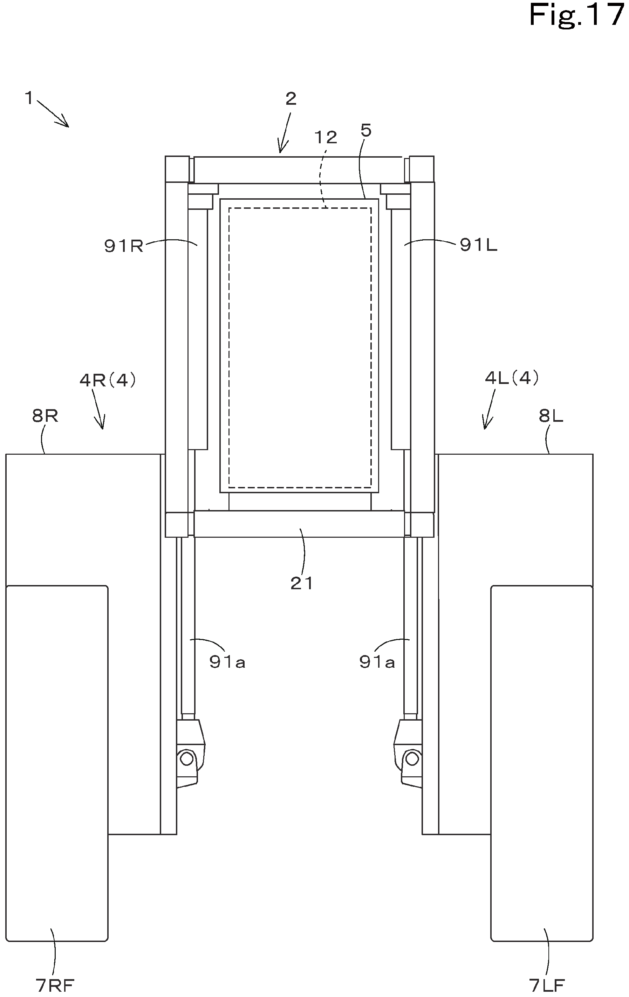

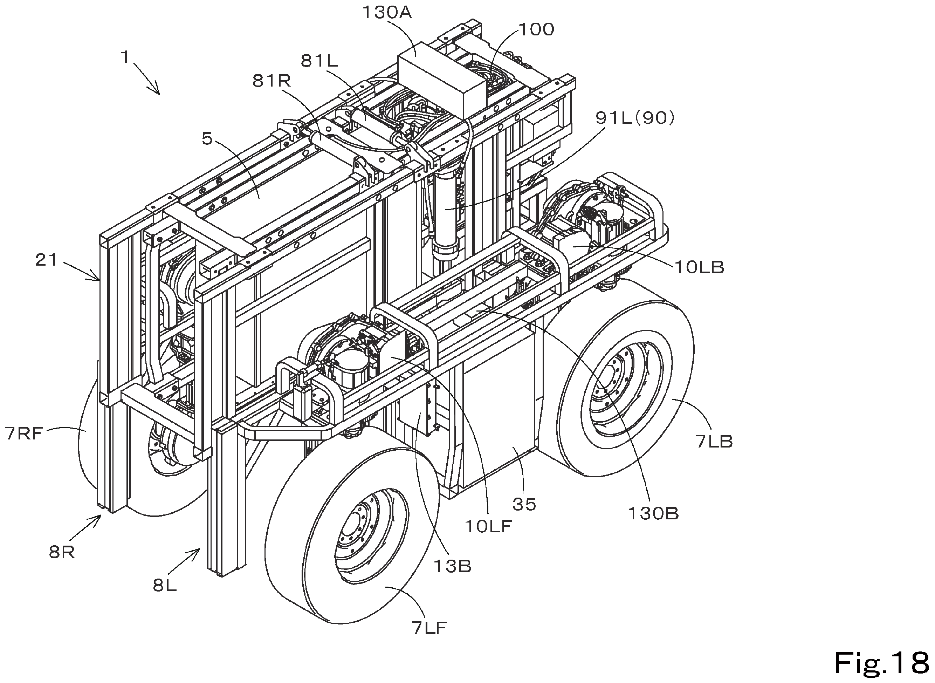

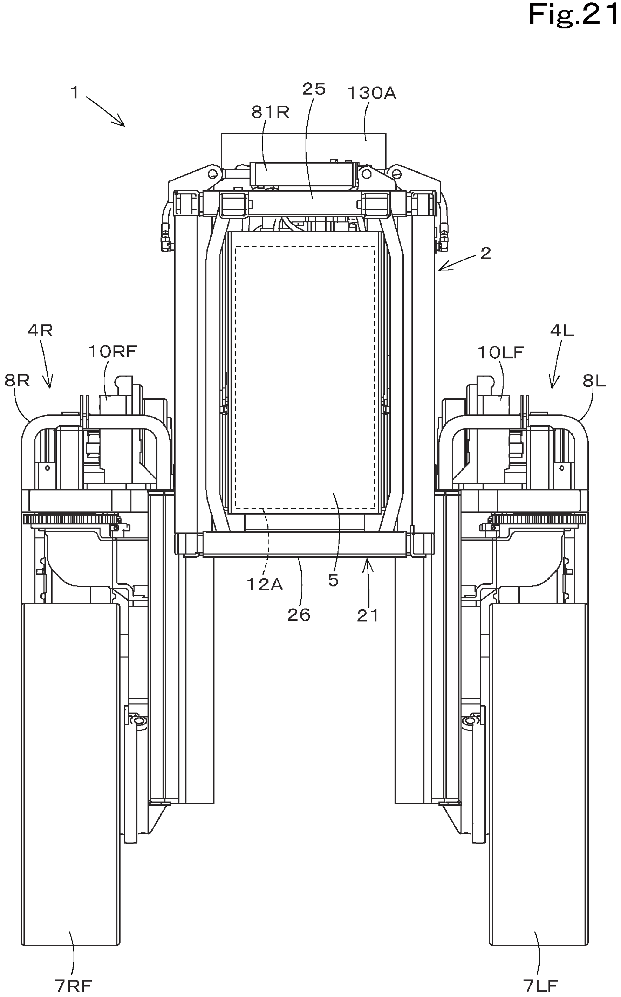

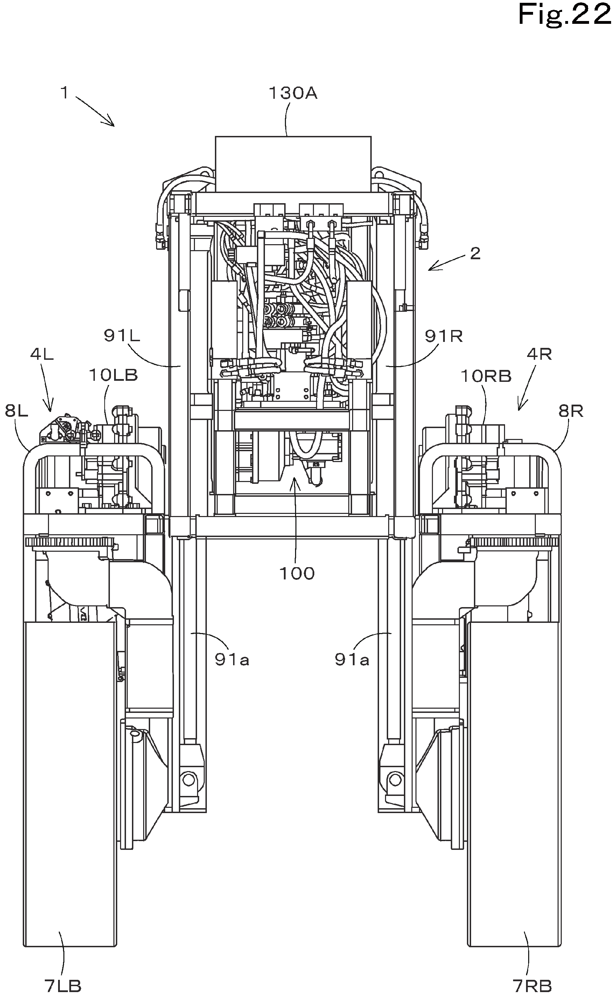

Since the main body case 5 (see, for example, FIGS. 1 and 4) is supported by the vehicle body frame 21, the vehicle body 2 including the vehicle body frame 21 and the main body case 5 can be raised and lowered in response to the extension and retraction of the rod of the lifting cylinder 91. Since the battery 12 (first battery 12A described below) is accommodated in the main body case 5, the battery 12 is also raised and lowered as the vehicle body 2 is raised and lowered. FIG. 16 schematically illustrates a state in which the vehicle body 2 is lowered, and FIG. 17 schematically illustrates a state in which the vehicle body 2 is raised. As illustrated in FIGS. 16 and 17, the position of the vehicle body 2 (and the battery 12) relative to the traveling assembly 4 in the up-down direction can be changed in response to the extension and retraction of the rod 91a of the lifting cylinder 91. FIGS. 18 to 22 illustrate the working vehicle 1 in a state in which the rod 91a of the lifting cylinder 91 is extended and the vehicle body 2 is raised.

The operation of the height-changing mechanism 90 is controlled by the controller 19. More specifically, the operations of the lifting cylinder 91 of the height-changing mechanism 90 are controlled by the height-changing controller 19C. As illustrated in FIG. 7, the controller 19 includes the height-changing controller 19C. The computing unit of the controller 19 executes a program stored in the storage unit to cause the height-changing controller 19C to transmit a control signal to the height-changing mechanism 90. The height-changing mechanism 90 is driven based on the control signal transmitted from the height-changing controller 19C. In other words, the position of the vehicle body 2 in the up-down direction is changed by driving the height-changing mechanism 90 under control by the controller 19.

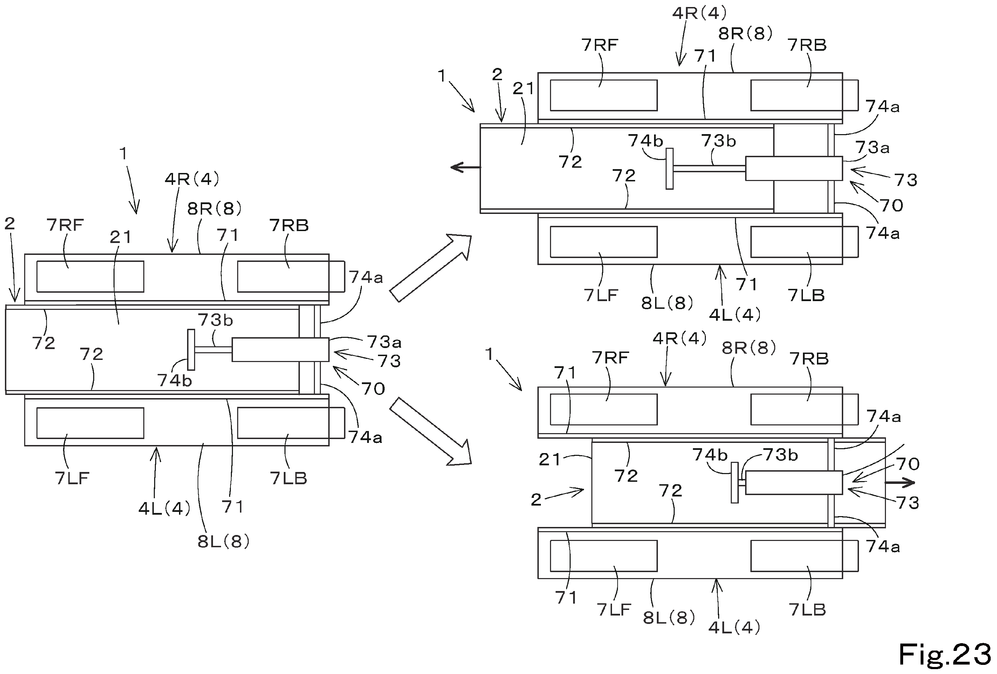

As illustrated in FIG. 7, the working vehicle 1 includes a position-changing mechanism 70. The position-changing mechanism 70 is capable of changing the position of the vehicle body 2 relative to the traveling assembly 4 in the front-rear direction. FIG. 23 is a schematic plan view of an example of the working vehicle 1 including the position-changing mechanism 70. The position-changing mechanism 70 illustrated in FIG. 23 includes guide rails 71 attached to the traveling frame 8 and extending in the front-rear direction, and sliding members 72 attached to the vehicle body frame 21 and extending in the front-rear direction. The sliding members 72 are movable in the front-rear direction along the guide rails 71.

The guide rails 71 are attached to a right portion of the left traveling frame 8L and a left portion of the right traveling frame 8R. The sliding members 72 are attached to left and right portions of the vehicle body frame 21. Accordingly, the vehicle body frame 21 is movable relative to the traveling frame 8 (the left traveling frame 8L and the right traveling frame 8R) in the front-rear direction.

The position-changing mechanism 70 includes a position-changing cylinder 73 that moves the vehicle body 2 in the front-rear direction. The position-changing cylinder 73 is a hydraulic cylinder, which is a hydraulic actuator operated by hydraulic pressure. The position-changing cylinder 73 includes a cylinder tube 73a attached to the traveling frame 8 and a rod 73b attached to the vehicle body frame 21. The cylinder tube 73a is attached to the traveling frame 8 by a first attachment member 74a. An end of the rod 73b is attached to the vehicle body frame 21 by a second attachment member 74b.

The vehicle body frame 21 is movable relative to the traveling frame 8 in the front-rear direction by extending and retracting the rod 73b of the position-changing cylinder 73. Accordingly, the vehicle body 2 is movable relative to the traveling assembly 4 in the front-rear direction. The left portion of FIG. 23 illustrates a state in which the vehicle body 2 has not moved relative to the traveling assembly 4 in the front-rear direction. The upper right portion of FIG. 23 illustrates a state in which the rod 73b of the position-changing cylinder 73 has extended to move the vehicle body 2 forward relative to the traveling assembly 4. The lower right portion of FIG. 23 illustrates a state in which the rod 73b of the position-changing cylinder 73 has retracted to move the vehicle body 2 rearward relative to the traveling assembly 4.

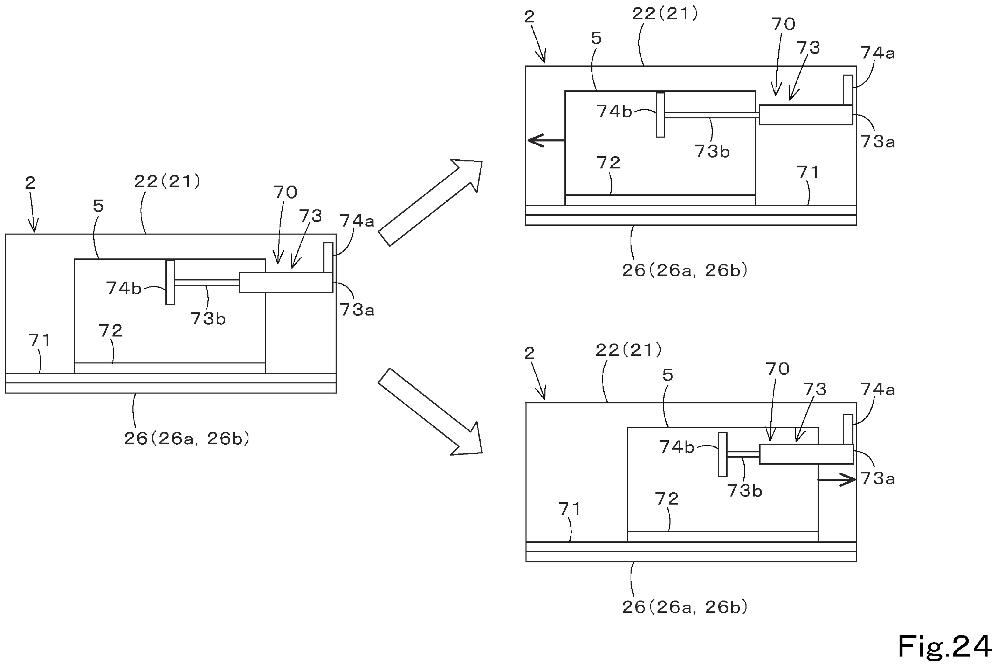

FIG. 24 illustrates a variation of the position-changing mechanism 70. The position-changing mechanism 70 according to the variation is capable of changing the position of a portion of the vehicle body 2 in the front-rear direction. More specifically, the position-changing mechanism 70 according to the variation is capable of changing the position of the main body case 5 of the vehicle body 2 in the front-rear direction. More specifically, the position-changing mechanism 70 according to the variation is capable of changing the position of the main body case 5 relative to the vehicle body frame 21.

The position-changing mechanism 70 according to the variation includes guide rails 71 attached to upper portions (the first lower frame member 26a and the second lower frame member 26b) of the lower vehicle body frame 26 (see FIGS. 9 and 11) and extending in the front-rear direction, and sliding members 72 attached to a lower portion of the main body case 5 and extending in the front-rear direction. The sliding members 72 are movable in the front-rear direction along the guide rails 71. Accordingly, the main body case 5 is movable relative to the lower vehicle body frame 26 in the front-rear direction.

The position-changing mechanism 70 according to the variation includes a position-changing cylinder 73 that moves the main body case 5 in the front-rear direction. The position-changing cylinder 73 is a hydraulic cylinder, which is a hydraulic actuator operated by hydraulic pressure. The position-changing cylinder 73 includes a cylinder tube 73a attached to the vehicle body frame 21 and a rod 73b attached to the main body case 5. The cylinder tube 73a is attached to the vehicle body frame 21 by a first attachment member 74a. An end of the rod 73b is attached to the main body case 5 by a second attachment member 74b.

The main body case 5 is movable relative to the vehicle body frame 21 in the front-rear direction by extending and retracting the rod 73b of the position-changing cylinder 73. The left portion of FIG. 24 illustrates a state in which the main body case 5 has not moved relative to the vehicle body frame 21 in the front-rear direction. The upper right portion of FIG. 24 illustrates a state in which the main body case 5 is moved forward relative to the vehicle body frame 21. The lower right portion of FIG. 24 illustrates a state in which the main body case 5 is moved rearward relative to the vehicle body frame 21.

As described above, the battery 12 (first battery 12A) is accommodated in the main body case 5. Accordingly, the battery 12 (the first battery 12A) is movable relative to the lower vehicle body frame 26 in the front-rear direction by moving the main body case 5 relative to the lower vehicle body frame 26 in the front-rear direction. Thus, the position of the battery 12 (first battery 12A) relative to the traveling assembly 4 in the front-rear direction can be changed.

The operation of the position-changing mechanism 70 is controlled by a position-changing controller 19D of the controller 19. For example, when the working vehicle 1 is to move the center of gravity thereof in the front-rear direction during travel, such as when a wheel is stuck in the mud or soft ground, the position-changing controller 19D drives the position-changing mechanism 70 to change the position of the vehicle body 2 or a portion (main body case 5) of the vehicle body 2 in the front-rear direction to move the center of gravity of the working vehicle 1 in the front-rear direction.

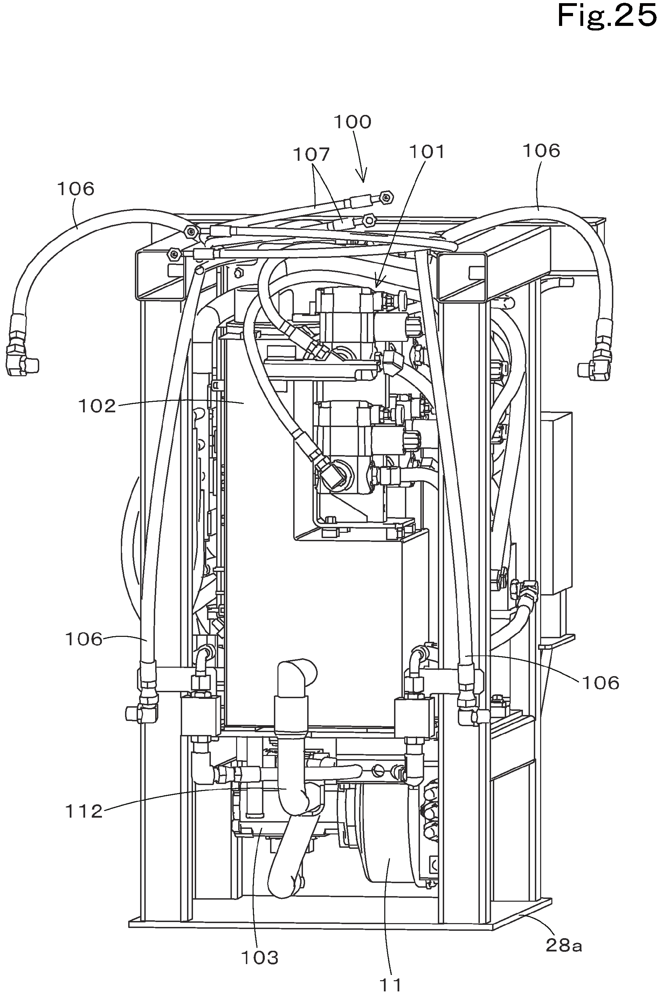

As illustrated in FIGS. 1, 5, 6, and 7 and other figures, the working vehicle 1 includes a hydraulic assembly 100. As illustrated in FIG. 25, the hydraulic assembly 100 includes a hydraulic valve 101 that controls the flow of hydraulic fluid. The hydraulic valve 101 controls the operation of at least one hydraulic device mounted on the vehicle body 2 or the traveling frame 8 by controlling the flow of hydraulic fluid. In addition to the hydraulic valve 101, the hydraulic assembly 100 includes a hydraulic fluid tank 102 that stores hydraulic fluid to be supplied to the hydraulic device and a hydraulic pump 103 driven by hydraulic fluid.

The hydraulic fluid tank 102 is located above the hydraulic pump 103. The hydraulic fluid tank 102 is located above the working system motor 11 that drives the hydraulic pump 103. The hydraulic pump 103 and the working system motor 11 are arranged next to each other in the left-right direction. The hydraulic fluid tank 102 is L-shaped in front view. In other words, the hydraulic fluid tank 102 has a shape obtained by cutting an upper corner portion from a rectangle. The hydraulic valve 101 is located at the cut portion (upper right portion) of the hydraulic fluid tank 102.

As illustrated in FIGS. 1, 5, and 6 and other figures, the hydraulic assembly 100 is located at a rear portion of the vehicle body 2. Accordingly, the hydraulic valve 101, the hydraulic pump 103, and the hydraulic fluid tank 102 included in the hydraulic assembly 100 are collectively arranged at the rear portion of the vehicle body 2. Specifically, the hydraulic assembly 100 is located rearward of the main body case 5 of the vehicle body 2. Accordingly, the hydraulic valve 101, the hydraulic pump 103, and the hydraulic fluid tank 102 are located rearward of the main body case 5.

As described above, the hydraulic valve 101, the hydraulic pump 103, and the hydraulic fluid tank 102 are collectively arranged at the rear portion of the vehicle body 2. Accordingly, the hydraulic valve 101, the hydraulic pump 103, and the hydraulic fluid tank 102 can be simultaneously checked for oil leakage or the like during routine inspection, so that maintenance is facilitated.

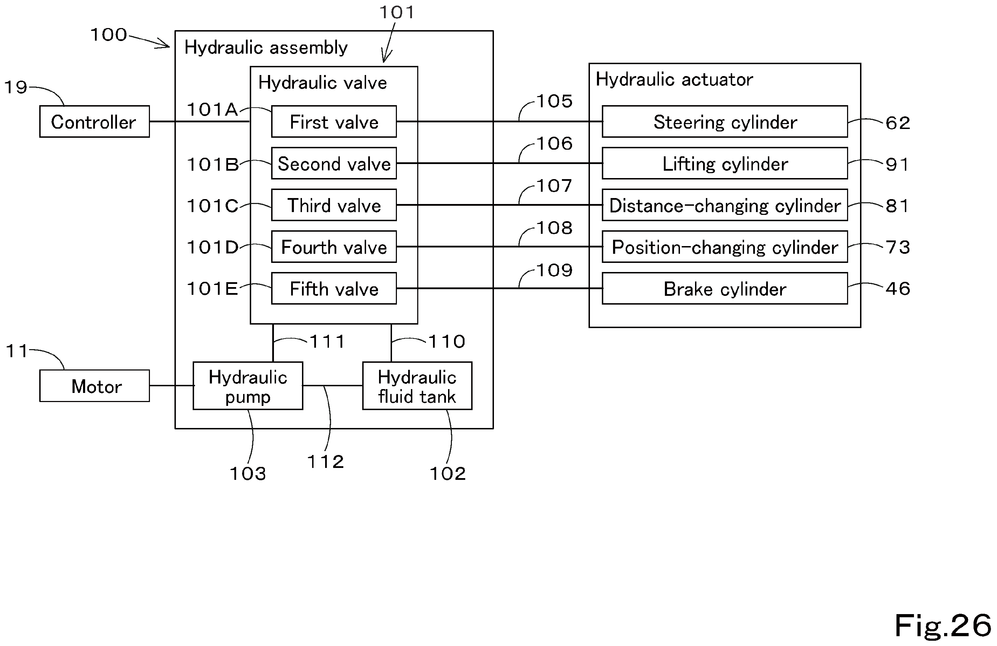

In the present example embodiment, the hydraulic device mounted on the vehicle body 2 or the traveling frame 8 is a hydraulic actuator operated by hydraulic pressure. The hydraulic actuator is mounted on one of the vehicle body 2 and the structure 3 (traveling frame 8 in the present example embodiment) connectable to the vehicle body 2. In the present example embodiment, the working vehicle 1 includes the steering cylinder 62, the lifting cylinder 91, the distance-changing cylinder 81, the position-changing cylinder 73, and a brake cylinder 46 (see FIG. 26) as hydraulic actuators. In other words, in the present example embodiment, the hydraulic actuators are hydraulic cylinders operated by hydraulic pressure.

The steering cylinder 62 is provided on the traveling frame 8. The distance-changing cylinder 81 is provided on the vehicle body frame 21. The lifting cylinder 91 and the position-changing cylinder 73 connect the vehicle body frame 21 and the traveling frame 8 to each other. The brake cylinder 46 is provided on the traveling frame 8. Thus, among the hydraulic actuators, the steering cylinder 62 and the brake cylinder 46 are provided on the traveling frame 8, which is the structure 3 connectable to the vehicle body 2.

The working vehicle 1 includes another hydraulic device that is different from a hydraulic actuator and that is mounted on one of the vehicle body 2 and the structure (traveling frame 8) on which the hydraulic actuator is not provided. In the present example embodiment, the other hydraulic device is the hydraulic valve 101 (see FIGS. 25 and 26) that controls the operation of the hydraulic actuator. In the present example embodiment, the hydraulic valve 101 is mounted on the vehicle body 2; however, the hydraulic valve 101 may be mounted on the structure (traveling frame 8).

The hydraulic valve 101 controls the flow of hydraulic fluid supplied to the hydraulic actuator and the like. As illustrated in FIG. 26, the hydraulic valve 101 includes a plurality of valves (a first valve 101A, a second valve 101B, a third valve 101C, a fourth valve 101D, and a fifth valve 101E) that control the flow of hydraulic fluid. The hydraulic valve 101 includes, for example, electromagnetic valves. The operation of the hydraulic valve 101 is controlled by the controller 19. The valves included in the hydraulic valve 101 are connected to respective hydraulic actuators and the like by hydraulic hoses. The controller 19 controls the operations of the hydraulic valves 101 individually to drive the respective hydraulic actuators individually.

As illustrated in FIG. 26, the first valve 101A is connected to the steering cylinder 62 (62LF, 62LB, 62RF, and 62RB) by a first hydraulic hose 105. The second valve 101B is connected to the lifting cylinder 91 (the left lifting cylinder 91L and the right lifting cylinder 91R) by a second hydraulic hose 106. The third valve 101C is connected to the distance-changing cylinder 81 (the left cylinder 81L and the right cylinder 81R) by a third hydraulic hose 107. The fourth valve 101D is connected to the position-changing cylinder 73 by a fourth hydraulic hose 108. The fifth valve 101E is connected to the brake cylinder 46 by a fifth hydraulic hose 109.

The hydraulic valve 101 is connected to the hydraulic fluid tank 102 by a sixth hydraulic hose 110. The hydraulic valve 101 is connected to the hydraulic pump 103 by a seventh hydraulic hose 111. The hydraulic pump 103 is connected to the hydraulic fluid tank 102 by an eighth hydraulic hose 112. The hydraulic pump 103 is connected to the working system motor 11 and is driven by the working system motor 11.

The hydraulic valve 101 operates (opens and closes flow passages through which hydraulic fluid flows) based on control signals transmitted from the controller 19 to control the flow of hydraulic fluid supplied to the steering cylinder 62, the lifting cylinder 91, the distance-changing cylinder 81, the position-changing cylinder 73, and the brake cylinder 46. Thus, the operations of the steering cylinder 62, the lifting cylinder 91, the distance-changing cylinder 81, the position-changing cylinder 73, and the brake cylinder 46 are controlled.

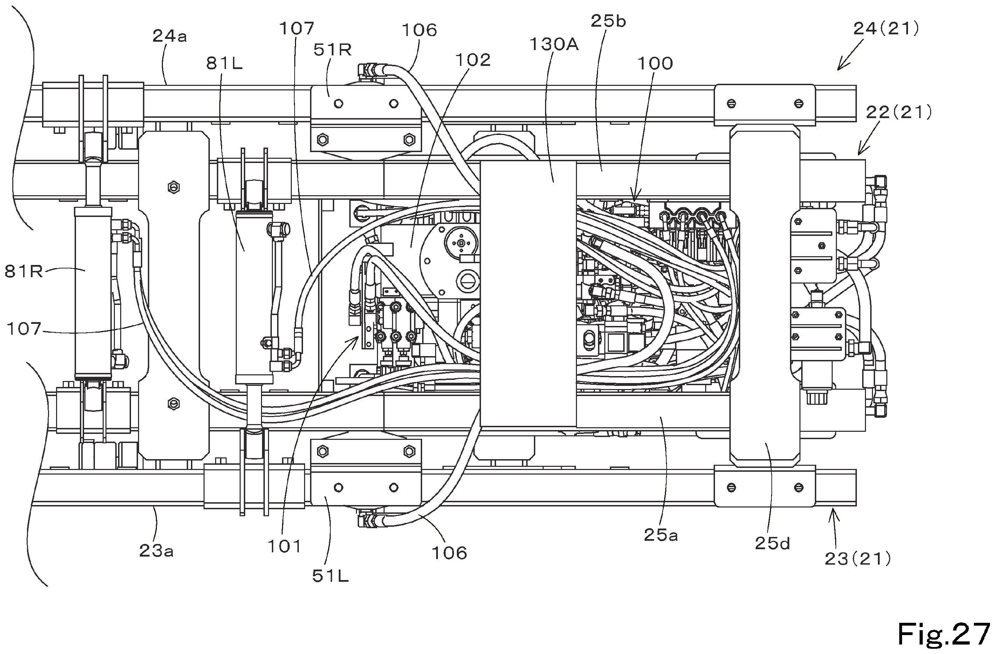

As illustrated in FIGS. 5 and 6, the hydraulic assembly 100 is located between the left traveling frame 8L and the right traveling frame 8R. The hydraulic assembly 100 and the battery 12 (first battery 12A) are arranged in the front-rear direction between the left traveling frame 8L and the right traveling frame 8R. The hydraulic assembly 100 is located rearward of the battery 12 (first battery 12A). As illustrated in FIG. 27, the hydraulic assembly 100 is located such that the hydraulic assembly 100 does not project from the vehicle body frame (the central frame) 21 at least in the left-right direction. Specifically, the hydraulic assembly 100 is located between a left end portion of the left vehicle body frame 23 and a right end portion of the right vehicle body frame 24. More specifically, the hydraulic assembly 100 is located between left and right end portions of the central vehicle body frame 22.

The working vehicle 1 includes a moving mechanism that moves either the vehicle body 2 or the structure 3 on which the above-described other hydraulic device is mounted together with the other hydraulic device in the up-down direction. In the present example embodiment, the other hydraulic device is the hydraulic valve 101. The hydraulic valve 101, which is the other hydraulic device, is mounted on the vehicle body 2. However, the hydraulic valve 101, which is the other hydraulic device, may be mounted on the structure 3. When the other hydraulic device (hydraulic valve 101) is mounted on the vehicle body 2, the other hydraulic device (hydraulic valve 101) is not mounted on the structure 3.

In the present example embodiment, the moving mechanism is the height-changing mechanism (lifting mechanism) 90 that raises and lowers the vehicle body 2 relative to the traveling frame 8. The height-changing mechanism 90, which is the moving mechanism, moves the other hydraulic device (hydraulic valve 101) to change the position of the other hydraulic device (hydraulic valve 101) relative to the hydraulic actuator. More specifically, the height-changing mechanism 90 moves the hydraulic valve 101 in the up-down direction to change the position of the hydraulic valve 101 relative to the hydraulic actuator (the steering cylinder 62 and the brake cylinder 46) in the up-down direction.

As described above, the height-changing mechanism 90 moves the vehicle body 2 relative to the structure (traveling frame 8). Accordingly, the other hydraulic device (hydraulic valve 101) is moved together with the vehicle body 2 relative to the structure (traveling frame 8) by the height-changing mechanism 90.

In contrast, the hydraulic actuator (the steering cylinder 62 and the brake cylinder 46) is located at a fixed position. Specifically, the hydraulic actuator (the steering cylinder 62 and the brake cylinder 46) is located at a position fixed in the up-down direction. Accordingly, the other hydraulic device (hydraulic valve 101) is raised and lowered relative to the hydraulic actuator (the steering cylinder 62 and the brake cylinder 46) when raised and lowered together with the vehicle body 2 relative to the traveling frame 8.

As described above, the working vehicle 1 is characterized in that the position (position in the up-down direction) of the hydraulic actuator (the steering cylinder 62 and the brake cylinder 46), which is a controlled device, is fixed, and that the position (position in the up-down direction) of the other hydraulic device (hydraulic valve 101), which is a controlling device, changes. Accordingly, accessibility of the controlling device (hydraulic valve 101) can be improved, and maintenance can be easily performed.

The hydraulic assembly 100 is covered from at least two directions when the vehicle body 2 is lowered. In the present example embodiment, the hydraulic assembly 100 is covered from three directions (front, left, and right) when the vehicle body 2 is lowered. As illustrated in FIGS. 2 to 6, when the vehicle body 2 is lowered, the main body case 5 accommodating the first battery 12A is located forward of the hydraulic assembly 100, the left traveling frame 8L is located leftward of the hydraulic assembly 100, and the right traveling frame 8R is located rightward of the hydraulic assembly 100. Accordingly, when the vehicle body 2 is lowered, the front of the hydraulic assembly 100 is covered by the main body case 5, the left side thereof is covered by the left traveling frame 8L, and the right side thereof is covered by the right traveling frame 8R. In contrast, the rear of the hydraulic assembly 100 is not covered and is exposed. Thus, among the front, rear, left side, and right side of the hydraulic assembly 100, only the rear is not covered and is exposed when the vehicle body 2 is lowered.

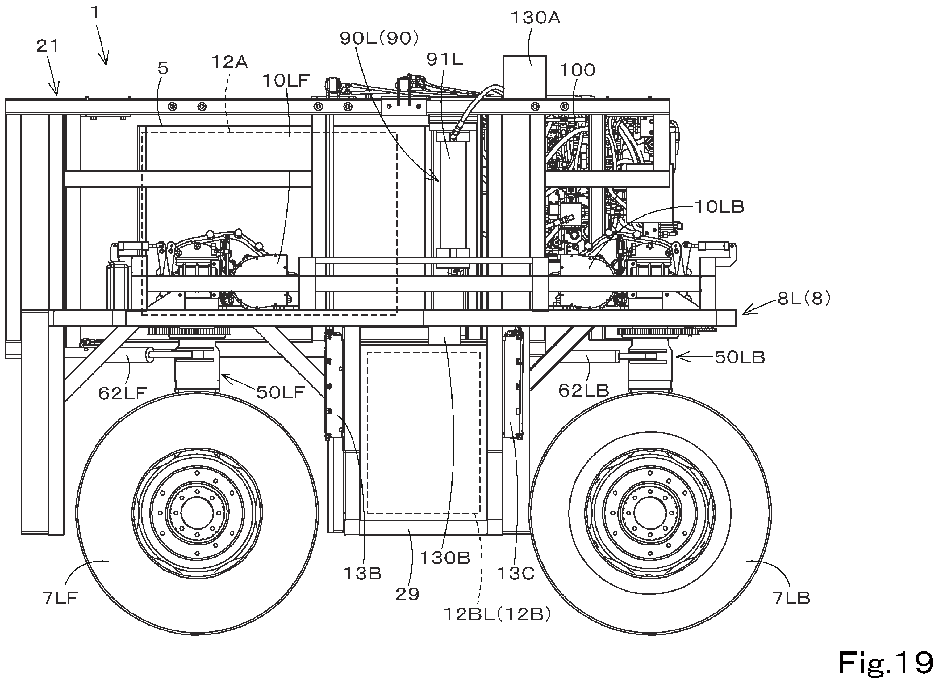

The hydraulic assembly 100 is covered from at least one direction when the vehicle body 2 is raised. The hydraulic assembly 100 is covered from a smaller number of directions when the vehicle body 2 is raised than when the vehicle body 2 is lowered. In the present example embodiment, the hydraulic assembly 100 is covered from one direction (front) when the vehicle body 2 is raised. As illustrated in FIGS. 19 to 22, when the vehicle body 2 is raised, the main body case 5 accommodating the first battery 12A is located forward of the hydraulic assembly 100. Accordingly, when the vehicle body 2 is raised, the front of the hydraulic assembly 100 is covered by the main body case 5. The left and right sides and the rear of the hydraulic assembly 100 are not covered and are exposed. Thus, among the front, rear, left side, and right side of the hydraulic assembly 100, the left and right sides and the rear are not covered and are exposed when the vehicle body 2 is raised.

As described above, in the working vehicle 1, the left and right sides of the hydraulic assembly 100 are covered when the vehicle body 2 is lowered, but are not covered when the vehicle body 2 is raised. Accordingly, access from the left and right sides, which is difficult when the vehicle body 2 is lowered, is enabled when the vehicle body 2 is raised. Thus, maintenance of the hydraulic assembly 100 is facilitated.

When the vehicle body 2 is raised, the hydraulic assembly 100 may be positioned such that only portions (lower portions) of the left and right sides thereof are covered by the traveling frame 8. In such a case, the areas of the left and right sides of the hydraulic assembly 100 covered when the vehicle body 2 is raised are significantly smaller than the areas of the left and right sides of the hydraulic assembly 100 covered when the vehicle body 2 is lowered. In other words, when the vehicle body 2 is raised, the exposed areas of the left and right sides of the hydraulic assembly 100 increase significantly. Accordingly, the hydraulic assembly 100 can be easily accessed from the left and right sides, and maintenance is facilitated.

The top of the hydraulic assembly 100 is not covered and is exposed both when the vehicle body 2 is lowered and when the vehicle body 2 is raised. Accordingly, the hydraulic assembly 100 is accessible from above both when the vehicle body 2 is lowered and raised. In particular, the hydraulic assembly 100 can be easily accessed from above when the vehicle body 2 is lowered.

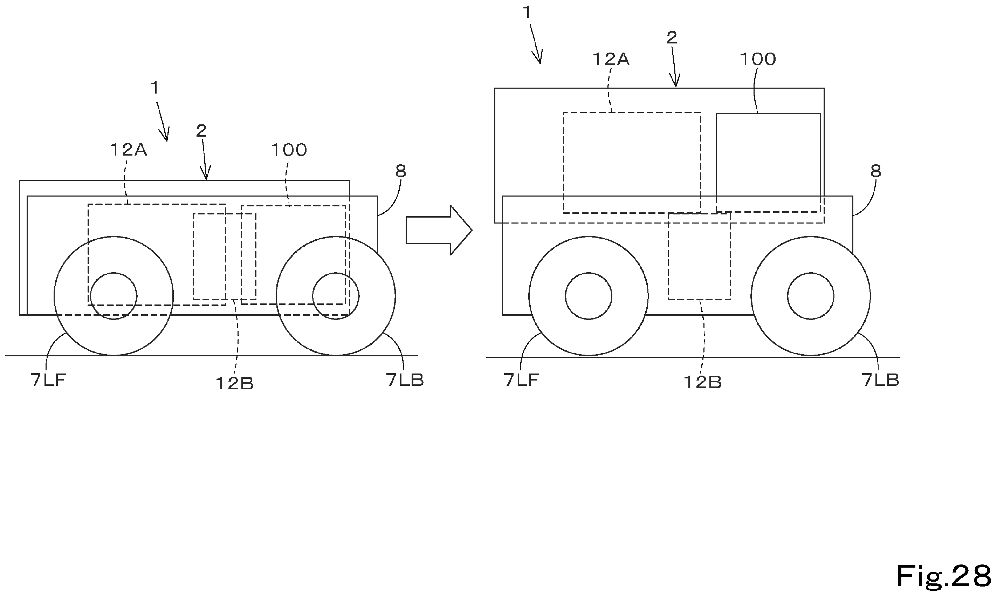

FIG. 28 is a schematic left side view illustrating changes in the position of the hydraulic assembly 100 when the vehicle body 2 is raised and lowered. A right side view is symmetrical to the left side view. As shown in the left portion of FIG. 28, when the vehicle body 2 is lowered, the entirety of the hydraulic assembly 100 overlaps the traveling frame 8 in side view. Additionally, when the vehicle body 2 is lowered, portions of the hydraulic assembly 100 overlap the rear wheels (the left rear wheel 7LB and the right rear wheel 7RB) in side view. Additionally, when the vehicle body 2 is lowered, a portion of the hydraulic assembly 100 overlaps the second battery 12B in side view.

As shown in the right portion of FIG. 28, when the vehicle body 2 is raised, only a portion (lower portion) of the hydraulic assembly 100 overlaps the traveling frame 8 in side view. Additionally, when the vehicle body 2 is raised, the hydraulic assembly 100 does not overlap the rear wheels (the left rear wheel 7LB and the right rear wheel 7RB) in side view. Additionally, when the vehicle body 2 is raised, the hydraulic assembly 100 does not overlap the second battery 12B in side view.

As illustrated in FIG. 28, although the positional relationship between the hydraulic assembly 100 and the second battery 12B changes when the vehicle body 2 is raised and lowered, the positional relationship between the hydraulic assembly 100 and the first battery 12A does not change. Both when the vehicle body 2 is lowered and when the vehicle body 2 is raised, the positions of the hydraulic assembly 100 and the first battery 12A in the up-down direction overlap.

The working system motor 11 that operates the hydraulic pump 103 of the hydraulic assembly 100 is located in the vicinity of the hydraulic assembly 100 (see FIG. 25), and is operated by electric power supplied from the first battery 12A and the second battery 12B. Since the positional relationship between the hydraulic assembly 100 and the first battery 12A does not change when the vehicle body 2 is raised and lowered, the electrical wire connecting the first battery 12A and the working system motor 11 to each other can be shortened.

As illustrated in FIG. 28, the positional relationship between the first battery 12A and the second battery 12B changes when the vehicle body 2 is raised and lowered. When the vehicle body 2 is lowered, the first battery 12A overlaps the second battery 12B in side view. When the vehicle body 2 is raised, the first battery 12A does not overlap the second battery 12B in side view. Thus, when the vehicle body 2 is raised and lowered, the positional relationship (overlapping relationship) between the first battery 12A and the second battery 12B changes similarly to the positional relationship between the hydraulic assembly 100 and the second battery 12B.

Additionally, as illustrated in FIG. 13, the working vehicle 1 is capable of increasing the distance between the left traveling assembly 4L and the vehicle body 2 and the distance between the right traveling assembly 4R and the vehicle body 2 by causing the distance-changing mechanism 80 to move the left traveling assembly 4L and the right traveling assembly 4R in the left-right direction. Accordingly, the left and right sides of the hydraulic assembly 100 can be exposed, so that the hydraulic assembly 100 can be accessed from the left and right sides. Thus, maintenance of the hydraulic assembly 100 is facilitated.

As shown in the lower right portion of FIG. 23, the left and right sides of the hydraulic assembly 100 can also be exposed by causing the position-changing mechanism 70 to move the vehicle body 2 rearward such that the rear portion of the vehicle body 2 protrudes rearward from the traveling assembly 4. Accordingly, the hydraulic assembly 100 can be accessed from the left and right sides, so that maintenance of the hydraulic assembly 100 is facilitated.

Additionally, as shown in the upper right portion of FIG. 24, the distance between the front portion of the hydraulic assembly 100 and the rear portion of the main body case 5 can be increased by causing the position-changing mechanism 70 to move the main body case 5 forward. Accordingly, the hydraulic assembly 100 can be accessed from the front, so that maintenance of the hydraulic assembly 100 is facilitated.

As described above, in the working vehicle 1, accessibility of the hydraulic assembly 100 can be improved and maintenance of the hydraulic assembly 100 can be facilitated not only by the method of causing the height-changing mechanism 90 to raise the vehicle body 2 but also by the method of causing the distance-changing mechanism 80 to move the left traveling assembly 4L and the right traveling assembly 4R in the left-right direction, the method of causing the position-changing mechanism 70 to move the vehicle body 2 rearward, and the method of causing the position-changing mechanism 70 to move the main body case 5 forward. The working vehicle 1 includes a configuration capable of performing at least one of these methods, preferably two or more of these methods, and more preferably three or more of these methods.

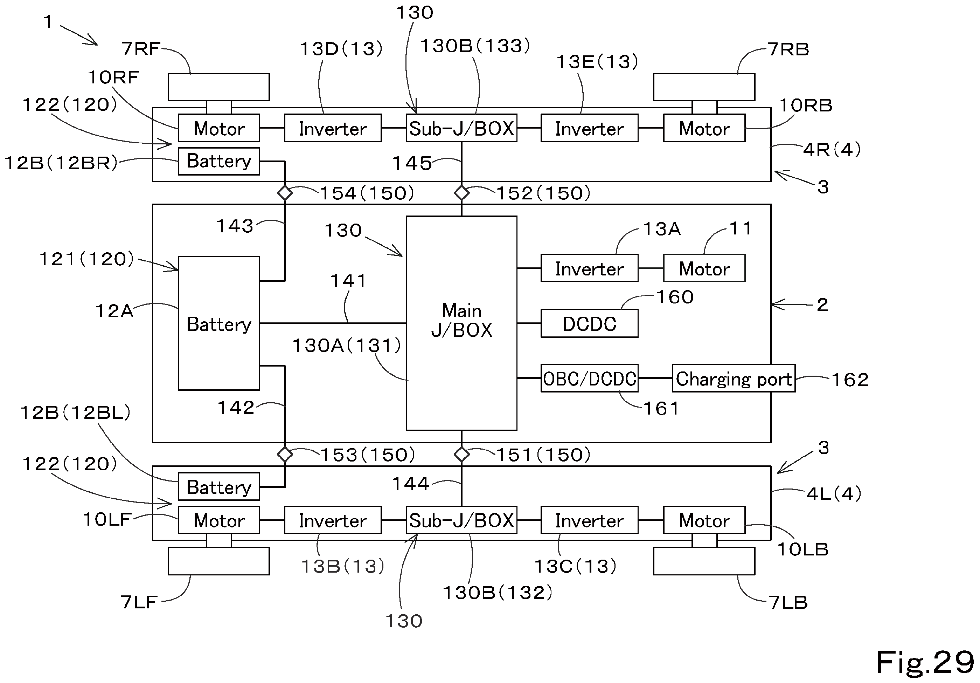

FIG. 29 illustrates an example (first example embodiment) of the manner in which electrical wires are connected in the working vehicle 1. As illustrated in FIG. 29, the working vehicle 1 includes a plurality of electrical devices 120. In the present example embodiment, the electrical devices 120 include a first electrical device 121 provided in (or on) the vehicle body 2 and a second electrical device 122 provided in (or on) the traveling assembly 4. Each of the electrical devices 120 includes at least one battery. In the present example embodiment, the first electrical device 121 includes the first battery 12A, and the second electrical device 122 includes the second battery 12B. Each of the first battery 12A and the second battery 12B is a battery unit (battery pack) in which a plurality of batteries are combined.

The number of first batteries 12A may be one or more. The number of second batteries 12B may also be one or more. In the present example embodiment, one first battery 12A and two second batteries 12B are provided.

The second electrical device 122 includes electrical devices other than the second batteries 12B. More specifically, the second electrical device 122 includes left traveling motors (motors 10LF and 10LB) that drive the left wheels and right traveling motors (motors 10RF and 10RB) that drive the right wheels. Accordingly, the left traveling motors (motors 10LF and 10LB) that drive the left wheels are provided in the left traveling assembly 4L as the second electrical device 122. The right traveling motors (motors 10RF and 10RB) that drive the right wheels are provided in the right traveling assembly 4R as the second electrical device 122.

As illustrated in FIG. 29, the working vehicle 1 includes a plurality of junction boxes 130. Each junction box 130 functions as a relay that electrically connects one electrical wire and another electrical wire to each other. The junction boxes 130 include a main junction box 130A and a sub-junction box 130B. The working vehicle 1 includes one main junction box 130A. The main junction box 130A is provided at least in one of the vehicle body 2 and the structure 3. The sub-junction box 130B is provided at least in one of the vehicle body 2 and the structure 3.

Specifically, the main junction box 130A is provided in either the vehicle body 2 or the traveling assembly 4. The sub-junction box 130B is provided in the traveling assembly 4 when the main junction box 130A is provided in the vehicle body 2, and is provided in the vehicle body 2 when the main junction box 130A is provided in the traveling assembly 4. In the present example embodiment, the main junction box 130A is provided in the vehicle body 2. The sub-junction box 130B is provided in the traveling assembly 4 (the left traveling assembly 4L and the right traveling assembly 4R).

The sub-junction box 130B is connected to at least one of the plurality of electrical devices 120. The main junction box 130A is connected to at least another one of the electrical devices 120 that is different from the electrical device connected to the sub-junction box 130B. The main junction box 130A is also connected to the sub-junction box 130B.

The main junction box 130A is connected to at least one battery (the first battery 12A or the second batteries 12B), at least one sub-junction box 130B, and at least one electrical device other than the battery. The sub-junction box 130B is connected to the main junction box 130A and at least one electrical device other than the battery.

The main junction box 130A is connected to the first electrical device 121 when provided in the vehicle body 2, and is connected to the second electrical device 122 when provided in the traveling assembly 4. The sub-junction box 130B is connected to the second electrical device 122 when provided in the traveling assembly 4, and is connected to the first electrical device 121 when provided in the vehicle body 2. In the present example embodiment, the main junction box 130A is provided in the vehicle body 2, and is therefore connected to the first battery 12A, which is the first electrical device 121 provided in the vehicle body 2. Additionally, the sub-junction box 130B is provided in the traveling assembly 4, and is therefore connected to the left traveling motors (motors 10LF and 10LB) or the right traveling motors (motors 10RF and 10RB), which are the second electrical device 122, via the inverters 13.

The junction boxes 130 include a first junction box 131 provided in the vehicle body 2, a second junction box 132 provided in the left traveling assembly 4L, and a third junction box 133 provided in the right traveling assembly 4R. In the present example embodiment, the first junction box 131 is the main junction box 130A. Each of the second junction box 132 and the third junction box 133 is the sub-junction box 130B.

At least one of the batteries (the first battery 12A and the second batteries 12B) and at least one of the junction boxes (the first junction box 131, the second junction box 132, and the third junction box 133) are provided in each of the vehicle body 2 and the traveling assembly 4. In the present example embodiment, the first battery 12A and the first junction box 131 are provided in the vehicle body 2, and the second batteries 12B, the second junction box 132, and the third junction box 133 are provided in the traveling assembly 4. One of the second batteries 12B and the second junction box 132 are provided in the left traveling assembly 4L. The other second battery 12B and the third junction box 133 are provided in the right traveling assembly 4R.

In the following description, the second battery 12B provided in the left traveling assembly 4L may be referred to as a "second battery 12BL", and the second battery 12B provided in the right traveling assembly 4R may be referred to as a "second battery 12BR".

The first battery 12A is accommodated in the main body case 5 of the vehicle body 2 (see FIGS. 4 and 6). The second batteries 12B are accommodated in respective cases 35 and provided on the left and right traveling frames 8L and 8R (see FIGS. 2, 3, and 6). Specifically, the second battery 12BL is provided on the second support body 29 of the left traveling frame 8L (see FIG. 2). The second battery 12BR is provided on the third support body 30 of the right traveling frame 8R (see FIG. 3).

The first junction box 131 (main junction box 130A) is located at an upper portion of the central vehicle body frame 22 of the vehicle body frame 21 (see FIGS. 1, 2, and 6). The second junction box 132 (sub-junction box 130B) is provided on the second support body 29 of the left traveling frame 8L and is located above the second battery 12BL (see FIGS. 1, 2, and 6). The third junction box 133 (sub-junction box 130B) is provided on the third support body 30 of the right traveling frame 8R and is located above the second battery 12BR (see FIGS. 1, 3, and 6).

The first battery 12A and the second battery 12B are directly or indirectly connected to the main junction box 130A. As illustrated in FIG. 29, in the present example embodiment, the first battery 12A is directly connected to the main junction box 130A (without another device provided therebetween) by a first electrical wire 141. The second batteries 12B are indirectly connected to the main junction box 130A via the first battery 12A.

Specifically, the second battery 12BL is connected to the first battery 12A by a second electrical wire 142, and the first battery 12A is connected to the main junction box 130A by the first electrical wire 141. The second battery 12BR is connected to the first battery 12A by a third electrical wire 143, and the first battery 12A is connected to the main junction box 130A by the first electrical wire 141.

As illustrated in FIG. 29, in addition to the first battery 12A and the main junction box 130A, the vehicle body 2 also includes the first inverter 13A, the working system motor 11, a DCDC converter 160, and an OBC/DCDC converter 161. The first inverter 13A is connected to the first battery 12A and the working system motor 11. The first inverter 13A and the working system motor 11 are provided on the first support body 28 (see FIG. 11) that supports the hydraulic assembly 100 at a location rearward of the first battery 12A. Specifically, as illustrated in FIG. 5, the first inverter 13A is located at a lower portion of the first support body 28, and the working system motor 11 is located above the first inverter 13A.

The DCDC converter 160 and the OBC/DCDC converter 161 are connected to the first battery 12A. The DCDC converter 160 converts (step-down or step-up) the voltage of electric power supplied from the first battery 12A to supply the electric power to other electrical devices. The OBC/DCDC converter 161 includes an on-board charger (OBC) and a DCDC converter. The OBC/DCDC converter 161 is connected to a charging port 162. The charging port 162 is provided on the vehicle body 2, and an electrical wire connected to an external power supply provided at a charging station or the like is connected to the charging port 162. The OBC/DCDC converter 161 converts an alternating current voltage of electric power supplied from the charging port 162 into a direct current voltage, and converts (step-down or step-up) the obtained direct current voltage into a voltage suitable for the first battery 12A.

In addition to the second battery 12BL and the sub-junction box 130B (second junction box 132), the left traveling assembly 4L also includes the second inverter 13B, the third inverter 13C, and the left traveling motors (motors 10LF and 10LB). As illustrated in FIG. 2, the second inverter 13B and the third inverter 13C are supported by the second support body 29. The second inverter 13B is located forward of the second battery 12BL. The third inverter 13C is located rearward of the second battery 12BL.

As illustrated in FIG. 29, the second inverter 13B is connected to the motor 10LF and the sub-junction box 130B (second junction box 132). The third inverter 13C is connected to the motor 10LB and the sub-junction box 130B (second junction box 132).

In addition to the second battery 12BR and the sub-junction box 130B (third junction box 133), the right traveling assembly 4R also includes the fourth inverter 13D, the fifth inverter 13E, and the right traveling motors (motors 10RF and 10RB). As illustrated in FIG. 3, the fourth inverter 13D and the fifth inverter 13E are supported by the third support body 30. The fourth inverter 13D is located forward of the second battery 12BR. The fifth inverter 13E is located rearward of the second battery 12BR.

As illustrated in FIG. 29, the fourth inverter 13D is connected to the motor 10RF and the sub-junction box 130B (third junction box 133). The fifth inverter 13E is connected to the motor 10RB and the sub-junction box 130B (third junction box 133).

The main junction box 130A is connected to the two sub-junction boxes 130B by electrical wires. More specifically, the main junction box 130A and the sub-junction box 130B (second junction box 132) of one traveling assembly (left traveling assembly 4L) are connected to each other by a fourth electrical wire 144. The main junction box 130A and the sub-junction box 130B (third junction box 133) of the other traveling assembly (right traveling assembly 4R) are connected to each other by a fifth electrical wire 145.

The second junction box 132 functions as a relay for electrical wires to connect the main junction box 130A to the left traveling motors (motors 10LF and 10LB). Accordingly, the electric power output from the first battery 12A and the second battery 12B is supplied to the left traveling motors (motors 10LF and 10LB) through the main junction box 130A and the second junction box 132.

The third junction box 133 functions as a relay for electrical wires to connect the main junction box 130A to the right traveling motors (motors 10RF and 10RB). Accordingly, the electric power output from the first battery 12A and the second battery 12B is supplied to the right traveling motors (motors 10RF and 10RB) through the main junction box 130A and the third junction box 133.

Thus, the sub-junction boxes 130B (the second junction box 132 and the third junction box 133) serve as relays for electrical wires connected to electrical devices (the left traveling motors 10LF and 10LB and the right traveling motors 10RF and 10RB) other than the second batteries 12B.

As described above, the vehicle body 2 is movable in the up-down direction by driving the height-changing mechanism 90. Accordingly, the main junction box 130A provided in the vehicle body 2 is capable of changing the position thereof in the up-down direction together with the vehicle body 2. Additionally, the traveling assembly 4 is movable in the left-right direction by driving the distance-changing mechanism 80. Accordingly, each sub-junction box 130B provided in the traveling assembly 4 is capable of changing the position thereof in the left-right direction together with the traveling assembly 4. Thus, the positional relationship between the main junction box 130A and the sub-junction boxes 130B in the up-down direction and the left-right direction is changeable.

As illustrated in FIG. 29, the working vehicle 1 includes movable portions 150 that guide connecting wires (the fourth electrical wire 144 and the fifth electrical wire 145) connecting the main junction box 130A to the sub-junction boxes 130B and that move to follow (conform to, accommodate) the deformations of the connecting wires (the fourth electrical wire 144 and the fifth electrical wire 145). The movable portions 150 include a first movable portion 151 that guides the fourth electrical wire 144 and moves to follow the deformation of the fourth electrical wire 144, and a second movable portion 152 that guides the fifth electrical wire 145 and moves to follow the deformation of the fifth electrical wire 145.

The movable portions 150 are arranged to extend along the electrical wires and move to follow the deformations of the electrical wires. Each movable portion 150 may include, for example, a plurality of rigid members connected to each other such that the movable portion 150 is bendable at connecting portions between the rigid members. The movable portions 150 are capable of accommodating or holding the electrical wires to support the electrical wires such that the electrical wires do not come into contact with an external element.

Each movable portion 150 is, for example, a Cableveyor (registered trademark). In the following description, it is assumed that each movable portion 150 is a Cableveyor 150. The Cableveyor 150 is a member for supporting a movable cable (e.g., an electrical wire), and is also referred to as a cable carrier, a cable chain, or the like. The Cableveyor 150 is deformable along with a cable. Accordingly, when the electrical wire is supported by (accommodated in) the Cableveyor 150, the Cableveyor 150 is capable of deforming along with the electrical wire.

The electrical wires (the fourth electrical wire 144 and the fifth electrical wire 145) are deformed while being supported by (accommodated in) the Cableveyors 150, and the Cableveyors 150 follow the deformations. Accordingly, when the electrical wires (the fourth electrical wire 144 and the fifth electrical wire 145) are deformed, the occurrence of defects (twisting, entanglement, or damage) can be eliminated or reduced.

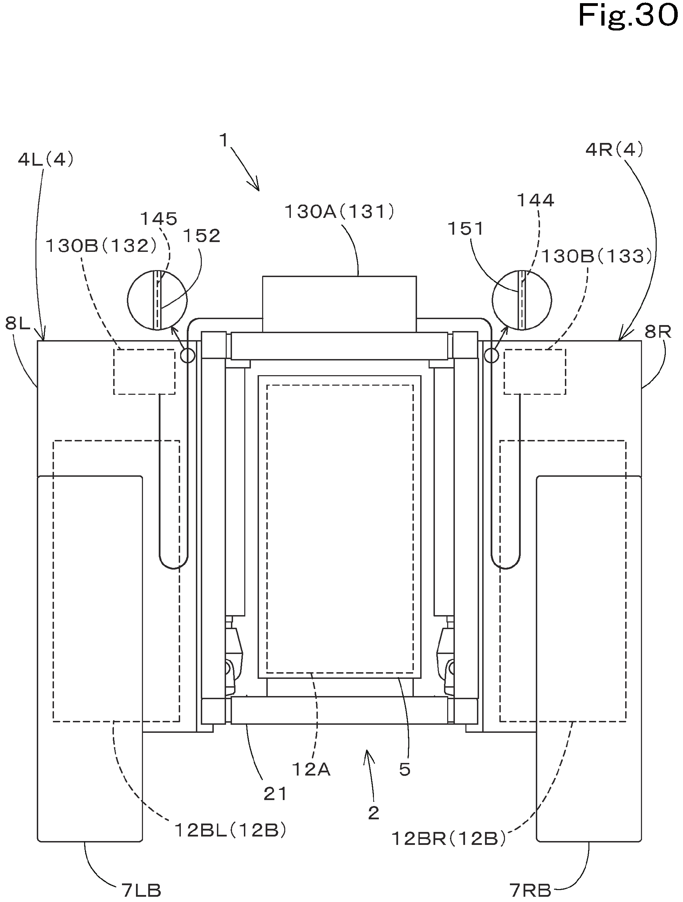

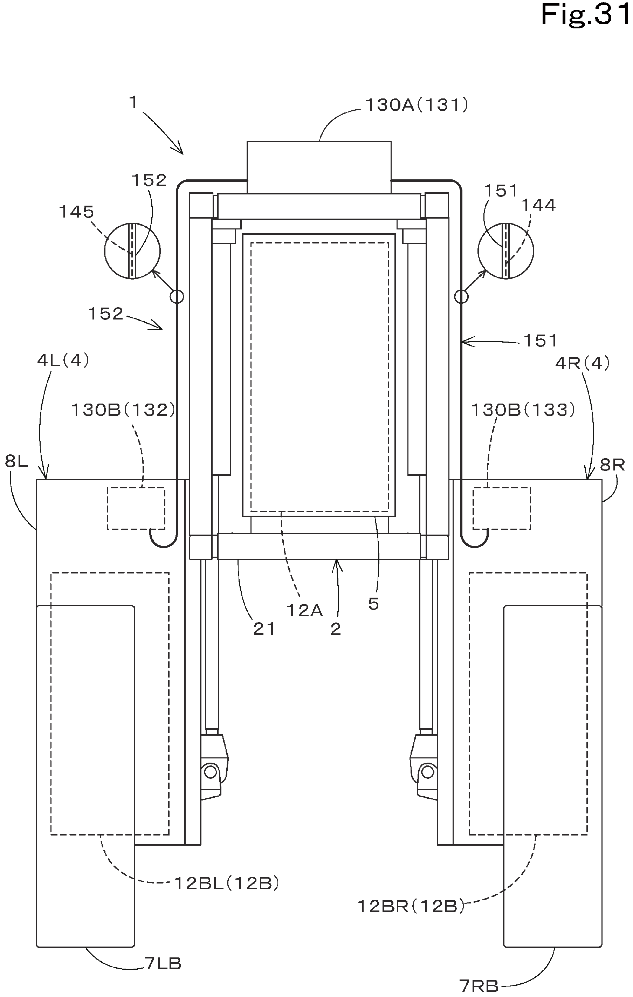

FIGS. 30 and 31 illustrate movements of the movable portions (the first movable portion 151 and the second movable portion 152) and the electrical wires (the fourth electrical wire 144 and the fifth electrical wire 145) when the vehicle body 2 is raised. As illustrated in FIG. 30, when the vehicle body 2 is lowered, the distance between the main junction box 130A (first junction box 131) provided in the vehicle body 2 and the sub-junction boxes 130B (the second junction box 132 and the third junction box 133) provided in the traveling assembly 4 (the left traveling assembly 4L and the right traveling assembly 4R) in the up-down direction is short.

When the vehicle body 2 is raised from the state illustrated in FIG. 30, the main junction box 130A (first junction box 131) provided in the vehicle body 2 moves upward relative to the sub-junction boxes 130B (the second junction box 132 and the third junction box 133) provided in the traveling assembly 4 (the left traveling assembly 4L and the right traveling assembly 4R). Accordingly, the distance between the main junction box 130A (first junction box 131) and the sub-junction boxes 130B (the second junction box 132 and the third junction box 133) in the up-down direction increases (see FIG. 31).

When the positional relationship between the main junction box 130A and the sub-junction boxes 130B in the up-down direction is changed as described above, the electrical wires (the fourth electrical wire 144 and the fifth electrical wire 145) connecting the main junction box 130A to the sub-junction boxes 130B are deformed, and the movable portions (the first movable portion 151 and the second movable portion 152) are also deformed to follow the deformations of the electrical wires (see FIG. 31).

As described above, when the vehicle body 2 is raised, the electrical wires (the fourth electrical wire 144 and the fifth electrical wire 145) are deformed, and the Cableveyors 150 are also deformed to follow the deformations of the electrical wires. Accordingly, the occurrence of defects (twisting, entanglement, or damage) in the electrical wires connecting the main junction box 130A to the sub-junction boxes 130B due to the vehicle body 2 being raised can be eliminated or reduced.

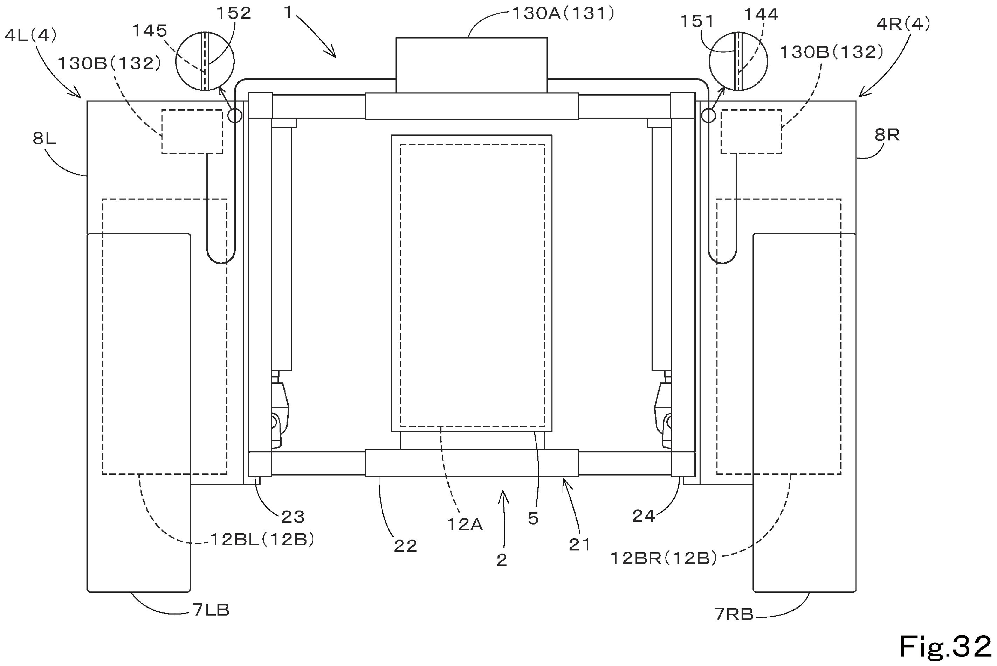

FIGS. 30 and 32 illustrate movements of the movable portions (the first movable portion 151 and the second movable portion 152) and the electrical wires (the fourth electrical wire 144 and the fifth electrical wire 145) when the traveling assemblies (the left traveling assembly 4L and the right traveling assembly 4R) are moved in the left-right direction. As illustrated in FIG. 30, when the vehicle body 2 is close to the traveling assemblies (the left traveling assembly 4L and the right traveling assembly 4R) in the left-right direction, the distance between the main junction box 130A (first junction box 131) provided in the vehicle body 2 and the sub-junction boxes 130B (the second junction box 132 and the third junction box 133) provided in the traveling assembly 4 (the left traveling assembly 4L and the right traveling assembly 4R) in the left-right direction is short.

When the traveling assemblies (the left traveling assembly 4L and the right traveling assembly 4R) are moved from the state illustrated in FIG. 30 in a direction away from the vehicle body 2 (leftward or rightward), the main junction box 130A (first junction box 131) provided in the vehicle body 2 moves relative to the sub-junction boxes 130B (the second junction box 132 and the third junction box 133) provided in the traveling assembly 4 (the left traveling assembly 4L and the right traveling assembly 4R) in a direction away therefrom (leftward or rightward). Accordingly, the distances from the main junction box 130A (first junction box 131) to the sub-junction boxes 130B (the second junction box 132 and the third junction box 133) in the left-right direction increase (see FIG. 32).

When the positional relationship between the main junction box 130A and the sub-junction boxes 130B in the left-right direction is changed as described above, the electrical wires (the fourth electrical wire 144 and the fifth electrical wire 145) connecting the main junction box 130A to the sub-junction boxes 130B are deformed, and the movable portions (the first movable portion 151 and the second movable portion 152) are also deformed to follow the deformations of the electrical wires (see FIG. 32).

As described above, when the traveling assemblies (the left traveling assembly 4L and the right traveling assembly 4R) are moved in the left-right direction, the electrical wires (the fourth electrical wire 144 and the fifth electrical wire 145) are deformed, and the Cableveyors 150 are also deformed to follow the deformations of the electrical wires. Accordingly, the occurrence of defects (twisting, entanglement, or damage) in the electrical wires connecting the main junction box 130A to the sub-junction boxes 130B due to movement of the traveling assemblies (the left traveling assembly 4L and the right traveling assembly 4R) in the left-right direction can be eliminated or reduced.

As illustrated in FIG. 29, the movable portions 150 include a third movable portion 153 and a fourth movable portion 154. The third movable portion 153 guides a connecting wire (second electrical wire 142) connecting the first battery 12A and the second battery 12BL to each other and moves to follow the deformation of the connecting wire (second electrical wire 142). The fourth movable portion 154 guides a connecting wire (third electrical wire 143) connecting the first battery 12A and the second battery 12BR to each other and moves to follow the deformation of the connecting wire (third electrical wire 143).

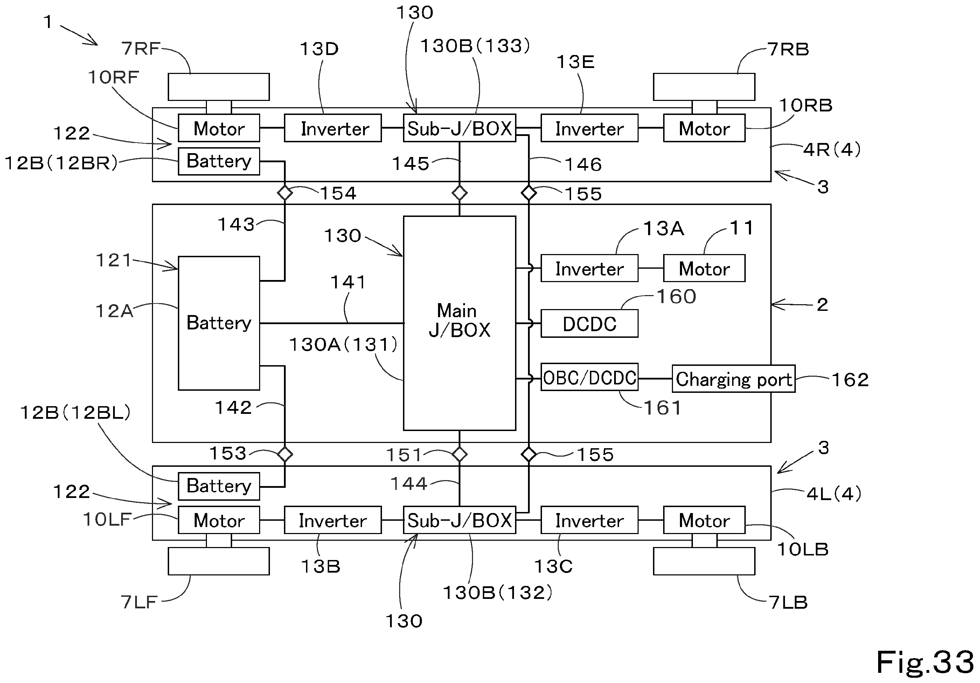

FIGS. 33 to 37 illustrate other examples (second to sixth example embodiments) of the manners in which the electrical wires are connected in the working vehicle 1. In the following description, differences between the first example embodiment and the second to sixth example embodiments will be described, and descriptions of configurations that are the same as those in the first example embodiment will be omitted.

FIG. 33 illustrates the second example embodiment. In the second example embodiment, the sub-junction box 130B (second junction box 132) provided in the left traveling assembly 4L and the sub-junction box 130B (third junction box 133) provided in the right traveling assembly 4R are connected to each other by a sixth electrical wire 146. In other words, in the second example embodiment, not only is the main junction box 130A connected to the sub-junction boxes 130B, but the sub-junction boxes 130B (the second junction box 132 and the third junction box 133) are connected to each other.

In the second example embodiment, the working vehicle 1 includes a fifth movable portion 155 that guides a connecting wire (sixth electrical wire 146) connecting the second junction box 132 and the third junction box 133 to each other and moves to follow the deformation of the connecting wire (sixth electrical wire 146). The fifth movable portion 155 is provided between the left traveling assembly 4L and the vehicle body 2 and between the right traveling assembly 4R and the vehicle body 2 in FIG. 33, but may be provided only between the left traveling assembly 4L and the vehicle body 2 or between the right traveling assembly 4R and the vehicle body 2.

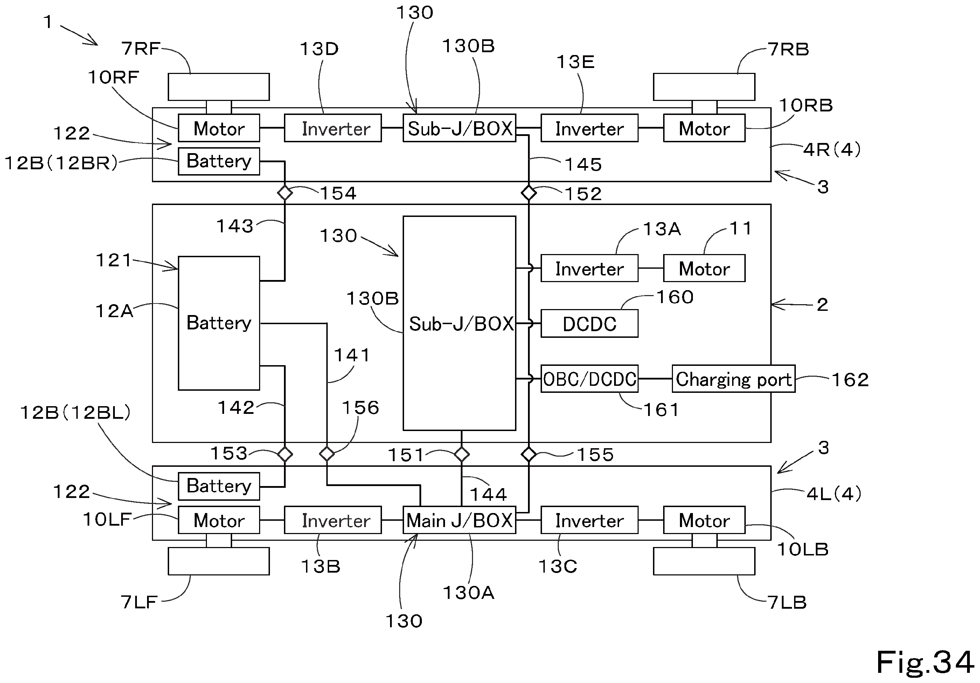

FIG. 34 illustrates the third example embodiment. In the third example embodiment, the main junction box 130A is provided in the left traveling assembly 4L, and the sub-junction boxes 130B are provided in the vehicle body 2 and the right traveling assembly 4R. The main junction box 130A provided in the left traveling assembly 4L is connected to the first battery 12A and the sub-junction box 130B provided in the vehicle body 2, and to the sub-junction box 130B provided in the right traveling assembly 4R.

In the third example embodiment, the working vehicle 1 includes a sixth movable portion 156 that guides a connecting wire (first electrical wire 141) connecting the main junction box 130A provided in the left traveling assembly 4L and the first battery 12A provided in the vehicle body 2 to each other and moves to follow the deformation of the connecting wire (first electrical wire 141).

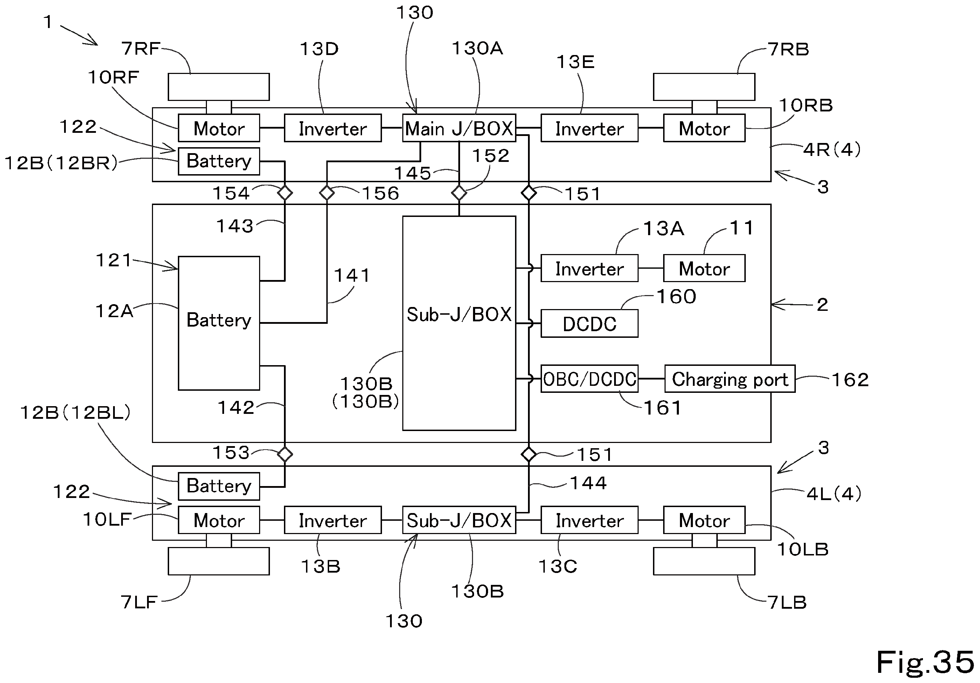

FIG. 35 illustrates the fourth example embodiment. In the fourth example embodiment, the main junction box 130A is provided in the right traveling assembly 4R, and the sub-junction boxes 130B are provided in the vehicle body 2 and the left traveling assembly 4L. The main junction box 130A provided in the right traveling assembly 4R is connected to the first battery 12A and the sub-junction box 130B provided in the vehicle body 2, and to the sub-junction box 130B provided in the left traveling assembly 4L.

In the fourth example embodiment, the working vehicle 1 includes a sixth movable portion 156 that guides a connecting wire (first electrical wire 141) connecting the main junction box 130A provided in the right traveling assembly 4R and the first battery 12A provided in the vehicle body 2 to each other and moves to follow the deformation of the connecting wire (first electrical wire 141).

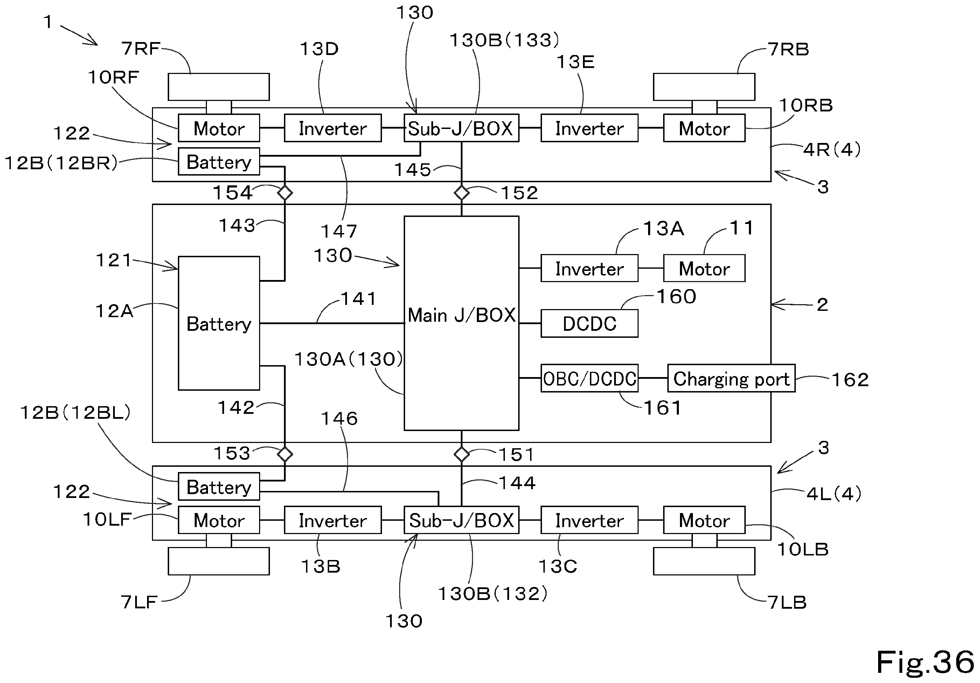

FIG. 36 illustrates the fifth example embodiment. In the fifth example embodiment, the sub-junction box 130B (second junction box 132) provided in the left traveling assembly 4L is connected to the second battery 12BL by a sixth electrical wire 146. Additionally, the sub-junction box 130B (third junction box 133) provided in the right traveling assembly 4R is connected to the second battery 12BR by a seventh electrical wire 147. Similarly to the first example embodiment, the main junction box 130A is connected to the first battery 12A. Thus, in the fifth example embodiment, all of the junction boxes 130 are directly connected to the respective batteries 12 (without other devices provided therebetween).

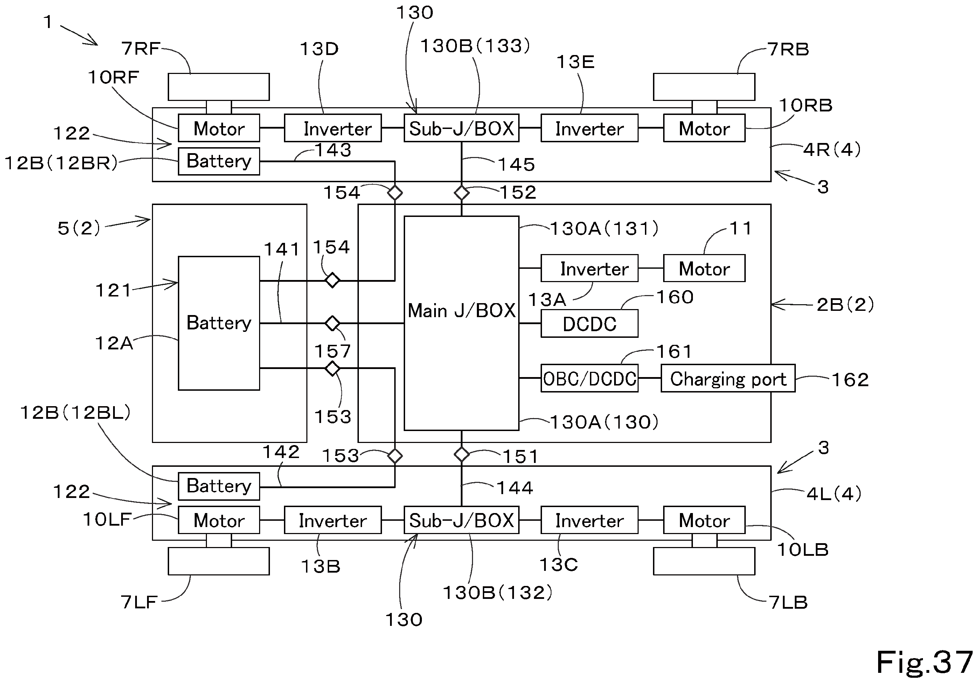

FIG. 37 illustrates the sixth example embodiment. In FIG. 37, the vehicle body 2 is divided into the main body case 5 of the vehicle body 2 in which the first battery 12A is provided and a portion 2B other than the main body case 5. The main junction box 130A and other components are provided in the portion 2B other than the main body case 5. The main body case 5 is located at a front portion of the vehicle body 2, and the portion 2B other than the main body case 5 is located at a rear portion of the vehicle body 2. In the following description, the portion 2B other than the main body case 5 is referred to as a "vehicle body rear portion 2B".

In the sixth example embodiment, a seventh movable portion 157 is provided to guide a connecting wire (first electrical wire 141) connecting the first battery 12A and the main junction box 130A to each other and move to follow the deformation of the connecting wire (first electrical wire 141). The seventh movable portion 157 is provided between the main body case 5 and the vehicle body rear portion 2B.

A connecting wire (second electrical wire 142) connecting the first battery 12A and the second battery 12BL to each other extends from the first battery 12A provided in the main body case 5, passes through the vehicle body rear portion 2B, and is connected to the second battery 12BL provided in the left traveling frame 8L. A connecting wire (third electrical wire 143) connecting the first battery 12A and the second battery 12BR to each other extends from the first battery 12A provided in the main body case 5, passes through the vehicle body rear portion 2B, and is connected to the second battery 12BR provided in the right traveling frame 8R.

Two third movable portions 153 are provided to guide the connecting wire (second electrical wire 142) connecting the first battery 12A and the second battery 12BL to each other and move to follow the deformation of the connecting wire (second electrical wire 142). One of the third movable portions 153 is provided between the main body case 5 and the vehicle body rear portion 2B. The other third movable portion 153 is provided between the left traveling frame 8L and the vehicle body rear portion 2B.

Two fourth movable portions 154 are provided to guide the connecting wire (third electrical wire 143) connecting the first battery 12A and the second battery 12BR to each other and move to follow the deformation of the connecting wire (third electrical wire 143). One of the fourth movable portions 154 is provided between the main body case 5 and the vehicle body rear portion 2B. The other fourth movable portion 154 is provided between the right traveling frame 8R and the vehicle body rear portion 2B.

The sixth example embodiment is, for example, suitably applicable to the working vehicle 1 configured such that the main body case 5 is movable in the front-rear direction (see FIG. 24). In this case, the main body case 5 is movable relative to the vehicle body rear portion 2B in the front-rear direction. In the sixth example embodiment, the movable portions (the third movable portion 153, the fourth movable portion 154, and the seventh movable portion 157) are provided between the main body case 5 and the vehicle body rear portion 2B. This allows elimination or reduction in the occurrence of defects (twisting, entanglement, or damage) in the connecting wires (the second electrical wire 142 and the third electrical wire 143) connecting the first battery 12A to the second batteries 12BL and 12BR, and in the connecting wire (the first electrical wire 141) connecting the first battery 12A to the main junction box 130A due to movement of the main body case 5 in the front-rear direction.

As described above, the working vehicle 1 is capable of changing the positional relationship between the main junction box 130A and the sub-junction boxes 130B. Specifically, the positional relationships between the main junction box 130A and the sub-junction boxes 130B in the up-down direction, the left-right direction, and the front-rear direction are changeable. It is not necessary that the working vehicle 1 be capable of changing all of the positional relationships in the up-down direction, the left-right direction, and the front-rear direction; at least one, preferably two or more, of the positional relationships is changeable.

Since the positional relationships between the main junction box 130A and the sub-junction boxes 130B are changeable, the paths along which the electrical wires connected to the main junction box 130A and the sub-junction boxes 130B are routed (locations through which the electrical wires pass) can be changed. Accordingly, when, for example, the type, the number, or the like of the electrical devices is changed, the paths along which the electrical wires are routed can be flexibly varied in accordance with the change.

The movable portions 150 are configured to guide the connecting wires connecting the main junction box 130A to the sub-junction boxes 130B and move to follow the deformation of the connecting wires when at least one, preferably two or more, of the positional relationships between the main junction box 130A and the sub-junction boxes 130B in the up-down direction, the left-right direction, and the front-rear direction is changed.

As illustrated in FIG. 7, the working vehicle 1 includes a tilt detector 170. The tilt detector 170 detects a tilt of the vehicle body 2. Specifically, the tilt detector 170 detects a tilt angle of the vehicle body 2 relative to a horizontal direction. The tilt detector 170 may be, for example, a tilt sensor, a load cell, a camera, or the like. However, the type of the tilt detector 170 is not particularly limited as long as the tilt detector 170 is capable of detecting the tilt of the vehicle body 2.

The tilt sensor may be, for example, a pendulum tilt sensor including a pendulum and a detection unit, such as a magnetoresistive element; a capacitance tilt sensor that detects a tilt of liquid based on the amount of change in capacitance; or a quartz tilt sensor including a quartz resonator. The tilt angle can be calculated based on a detection value (e.g., the amount of change in capacitance) of the sensor by, for example, the controller 19 or a computing unit included in the tilt detector 170.

When the tilt detector 170 is a load cell, a strain gauge included in the load cell detects strain of an axle generated when the vehicle body is tilted, and the tilt angle of the vehicle body 2 is calculated based on the strain value. The tilt angle can be calculated based on the detected strain value by, for example, the controller 19 or the computing unit included in the tilt detector 170.

When the tilt detector 170 is a camera, for example, the camera is fixed to the vehicle body 2 and captures an image of the ground on which the working vehicle 1 is traveling. The tilt angle of the vehicle body 2 with respect to the ground is calculated based on the captured image. The tilt angle may be calculated based on the captured image by, for example, the controller 19 or the computing unit included in the tilt detector 170. The camera may be the above-described camera 18a of the condition detector 18.

As illustrated in FIG. 7, the working vehicle 1 includes a changing mechanism 180 that changes the positional relationship between the vehicle body 2 and the traveling assembly 4 based on the detection result obtained by the tilt detector 170. The changing mechanism 180 includes the height-changing mechanism 90, the distance-changing mechanism 80, and the position-changing mechanism 70 described above. In the present example embodiment, the changing mechanism 180 includes all of the height-changing mechanism 90, the distance-changing mechanism 80, and the position-changing mechanism 70. However, it is only necessary that the changing mechanism 180 include at least one (one or two) of the height-changing mechanism 90, the distance-changing mechanism 80, and the position-changing mechanism 70.

The changing mechanism 180 is a mechanism for preventing or reducing tipping of the working vehicle 1. In particular, the operation of the changing mechanism 180 is suitably performed when the vehicle body 2 is raised relative to the traveling assembly 4. For example, the operation of raising the vehicle body 2 relative to the traveling assembly 4 may be performed to avoid contact between the vehicle body 2 and an obstacle on the ground (e.g., ridges of an agricultural field or crops planted on the ridges). Accordingly, when the working vehicle 1 travels in an agricultural field, the vehicle body 2 may be raised relative to the traveling assembly 4.

While the working vehicle 1 travels, the working vehicle 1 may be subjected to a force in a direction that causes the working vehicle 1 to tip over due to strong wind, inclined ground, uneven ground, turning of the working vehicle 1, or the like. When the vehicle body 2 is raised relative to the traveling assembly 4, the center of gravity of the working vehicle 1 is at a high position, and therefore the working vehicle 1 tends to tip over. In such a state, tipping of the working vehicle 1 can be prevented or reduced by operating the changing mechanism 180. The configuration and operation of the changing mechanism 180 will be described below.

A case in which the changing mechanism 180 is the height-changing mechanism 90 will now be described. In this case, the height-changing mechanism 90 changes the position of the vehicle body 2 in the up-down direction based on the detection result obtained by the tilt detector 170. The operation of the height-changing mechanism 90 is controlled by the height-changing controller 19C. In other words, the height-changing controller 19C controls the operation of the height-changing mechanism 90 based on the detection result obtained by the tilt detector 170.

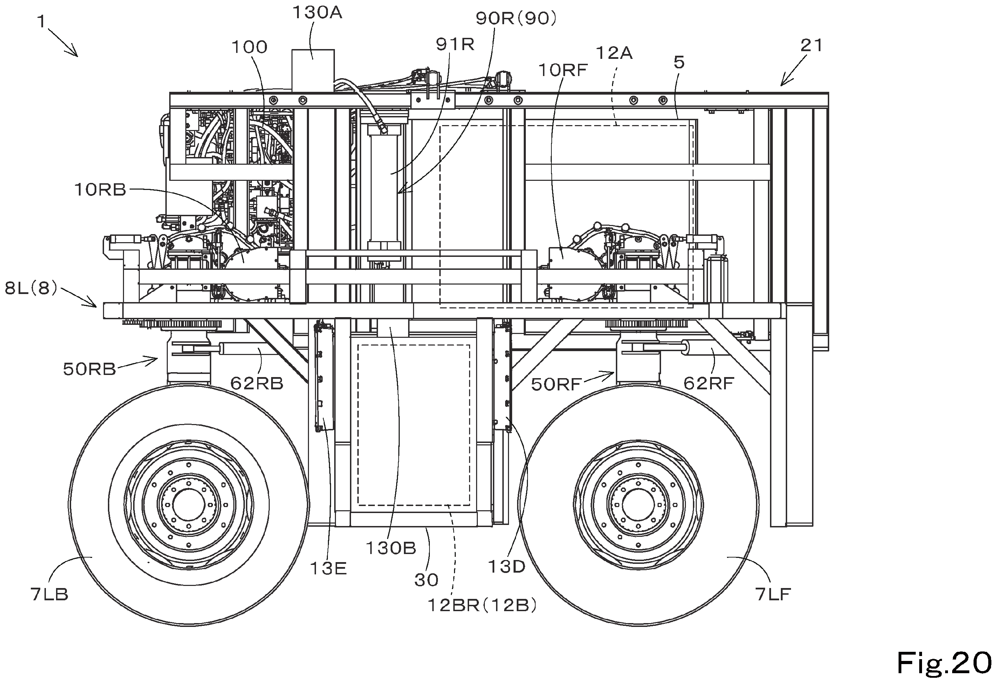

As illustrated in FIGS. 19 and 20, the height-changing mechanism 90 includes a left height-changing mechanism 90L that changes the height of a left portion of the vehicle body 2 and a right height-changing mechanism 90R that changes the height of the right portion of the vehicle body 2. The left height-changing mechanism 90L includes the left lifting cylinder 91L. The right height-changing mechanism 90R includes the right lifting cylinder 91R. The height-changing mechanism 90 changes the height of the left portion of the vehicle body 2 by driving the left lifting cylinder 91L, and changes the height of the right portion of the vehicle body 2 by driving the right lifting cylinder 91R.

The height-changing mechanism 90 is capable of positioning the left and right portions of the vehicle body 2 at different heights based on the detection result obtained by the tilt detector 170. Specifically, when the tilt detector 170 detects that the vehicle body 2 is tilted leftward by a predetermined amount or more, the height-changing mechanism 90 performs at least one of an operation of raising the left portion of the vehicle body 2 and an operation of lowering the right portion of the vehicle body 2. When the tilt detector 170 detects that the vehicle body 2 is tilted rightward by a predetermined amount or more, the height-changing mechanism 90 performs at least one of an operation of raising the right portion of the vehicle body 2 and an operation of lowering the left portion of the vehicle body 2.

The predetermined amount may be set, for example, in the range of 20 to 40 degrees with respect to the horizontal direction. However, the predetermined amount is not limited to this range, and may be appropriately changed in accordance with the conditions (inclination and unevenness of the ground) of a place in which the working vehicle 1 travels, the height of the working vehicle 1 during travel, the wind speed during travel, and the like. This also applies to the operations of other changing mechanisms (the distance-changing mechanism 80 and the position-changing mechanism 70) described below.

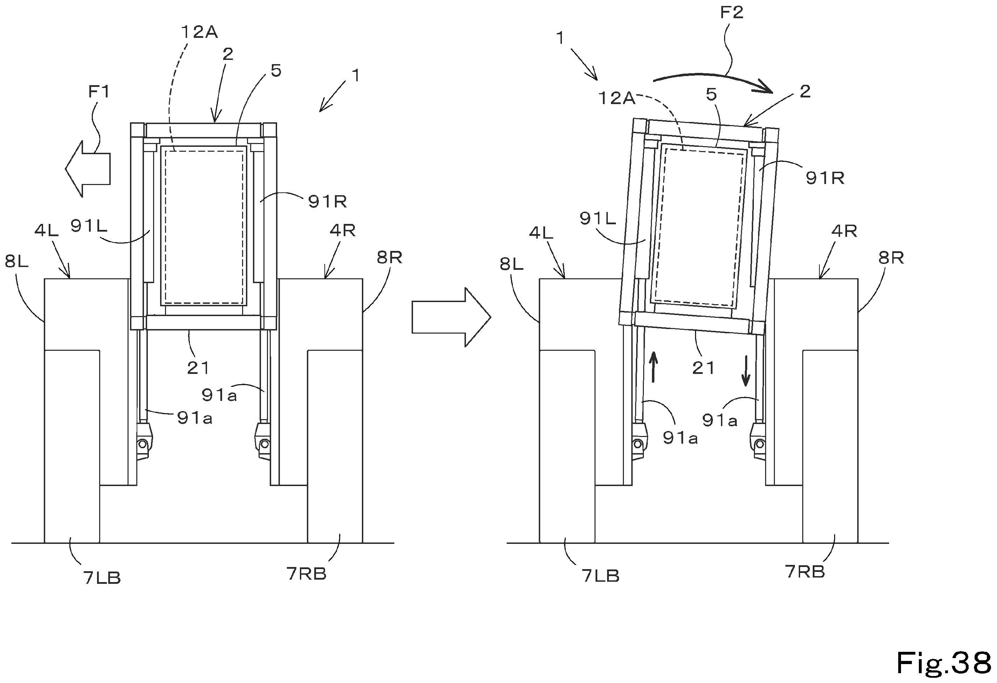

FIG. 38 illustrates a first example of the operation of the height-changing mechanism 90. The left portion of FIG. 38 illustrates the working vehicle 1 subjected to a force (see arrow F1) that causes the working vehicle 1 to tip leftward. When the vehicle body 2 tilts leftward due to the force F1, the tilt detector 170 detects the leftward tilt of the vehicle body 2. When the tilt detector 170 detects that the vehicle body 2 is tilted leftward by the predetermined amount or more, the height-changing mechanism 90 performs at least one of the operation of raising the left portion of the vehicle body 2 and the operation of lowering the right portion of the vehicle body 2.

As illustrated in the right portion of FIG. 38, the operation of raising the left portion of the vehicle body 2 is performed by extending the rod 91a of the left lifting cylinder 91L. The operation of lowering the right portion of the vehicle body 2 is performed by retracting the rod 91a of the right lifting cylinder 91R. These operations are performed by causing the height-changing controller 19C to control the left lifting cylinder 91L and the right lifting cylinder 91R.

The height-changing controller 19C determines whether the vehicle body 2 is tilted leftward by the predetermined amount or more based on the detection result obtained by the tilt detector 170. When it is determined that the vehicle body 2 is tilted leftward by the predetermined amount or more, the height-changing controller 19C drives the left lifting cylinder 91L and/or the right lifting cylinder 91R. Thus, at least one of the operation of raising the left portion of the vehicle body 2 and the operation of lowering the right portion of the vehicle body 2 is performed.

When at least one of the operation of raising the left portion of the vehicle body 2 and the operation of lowering the right portion of the vehicle body 2 is performed as described above, a rightward moment (see arrow F2) acts on the vehicle body 2 as illustrated in the right portion of FIG. 38. This moment acts in a direction that cancels the force that causes the working vehicle 1 to tip leftward (see arrow F1). Thus, leftward tipping of the vehicle body 2 can be prevented or reduced.

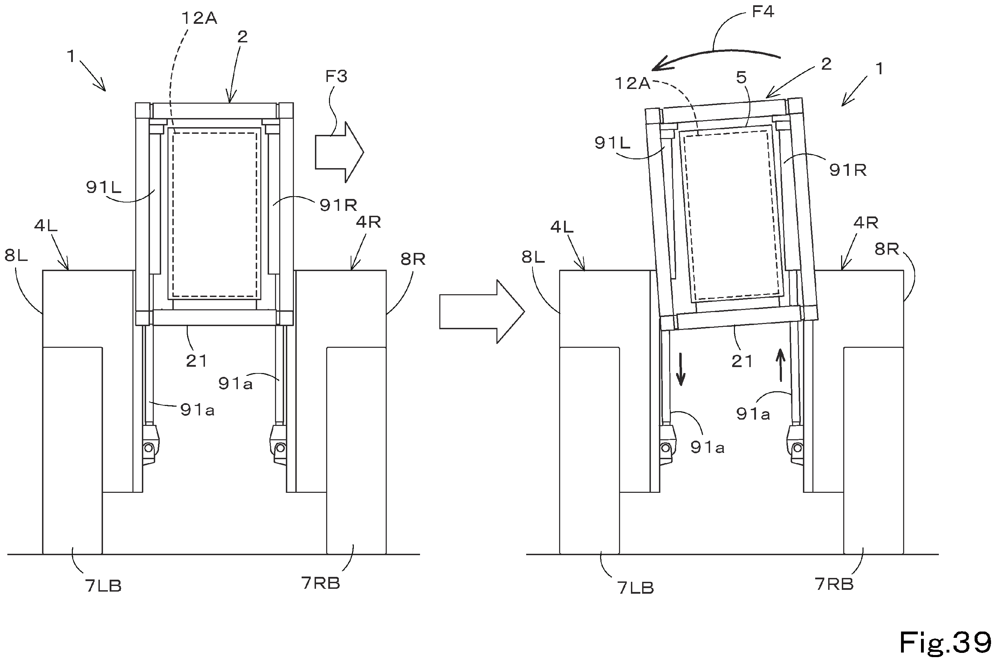

FIG. 39 illustrates a second example of the operation of the height-changing mechanism 90. The left portion of FIG. 39 illustrates the working vehicle 1 subjected to a force (see arrow F3) that causes the working vehicle 1 to tip rightward. When the vehicle body 2 tilts rightward due to the force F3, the tilt detector 170 detects the rightward tilt of the vehicle body 2. When the tilt detector 170 detects that the vehicle body 2 is tilted rightward by the predetermined amount or more, the height-changing mechanism 90 performs at least one of the operation of raising the right portion of the vehicle body 2 and the operation of lowering the left portion of the vehicle body 2.

As illustrated in the right portion of FIG. 39, the operation of raising the right portion of the vehicle body 2 is performed by extending the rod 91a of the right lifting cylinder 91R. The operation of lowering the left portion of the vehicle body 2 is performed by retracting the rod 91a of the left lifting cylinder 91L. These operations are performed by causing the height-changing controller 19C to control the left lifting cylinder 91L and the right lifting cylinder 91R. The height-changing controller 19C determines whether the vehicle body 2 is tilted rightward by the predetermined amount or more based on the detection result obtained by the tilt detector 170. When it is determined that the vehicle body 2 is tilted rightward by the predetermined amount or more, the height-changing controller 19C drives the left lifting cylinder 91L and/or the right lifting cylinder 91R. Thus, at least one of the operation of raising the right portion of the vehicle body 2 and the operation of lowering the left portion of the vehicle body 2 is performed.

When at least one of the operation of raising the right portion of the vehicle body 2 and the operation of lowering the left portion of the vehicle body 2 is performed as described above, a leftward moment (see arrow F4) acts on the vehicle body 2 as illustrated in the right portion of FIG. 39. This moment acts in a direction that cancels the force that causes the working vehicle 1 to tip rightward (see arrow F3). Thus, rightward tipping of the vehicle body 2 can be prevented or reduced.

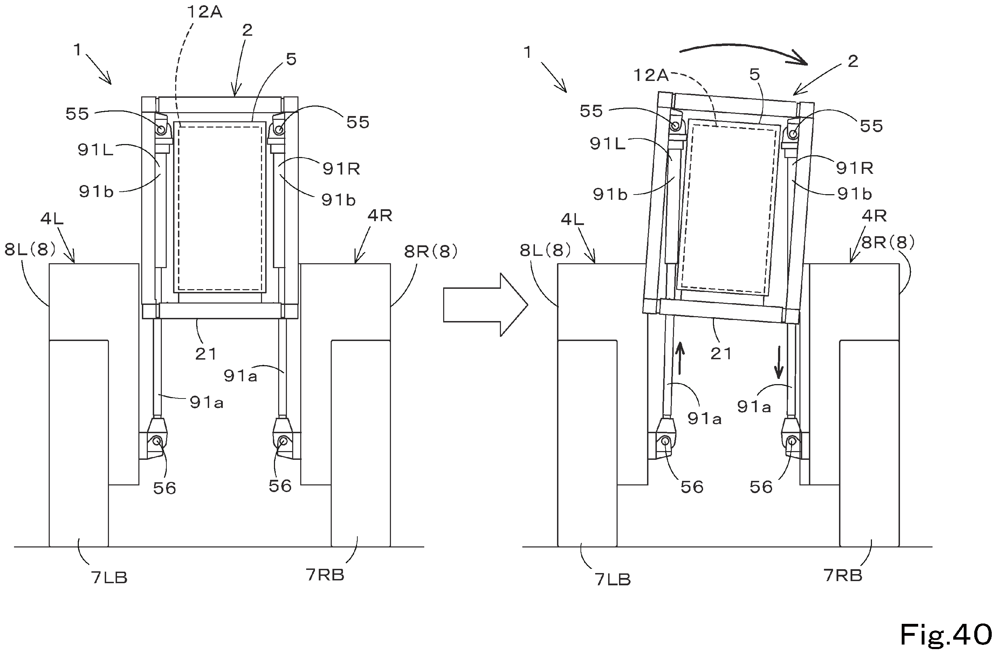

As illustrated in FIG. 40, the vehicle body frame 21 may be connected to the traveling frame 8 without the above-described mast mechanism provided therebetween. In other words, the working vehicle 1 may be configured without the mast mechanism. In this case, the vehicle body frame 21 is connected to the traveling frame 8 by the left lifting cylinder 91L and the right lifting cylinder 91R with no mast mechanism provided therebetween. In this case, it is preferable that a plurality of the left lifting cylinders 91L and a plurality of the right lifting cylinders 91R are arranged with intervals therebetween in the front-rear direction. Additionally, in this case, upper ends of the cylinder tubes 91b of the left and right lifting cylinders 91L and 91R are pivotally supported by the vehicle body frame 21 such that the cylinder tubes 91b are rotatable about first shafts 55 extending in the front-rear direction, and lower ends of the rods 91a of the left and right lifting cylinders 91L and 91R are pivotally supported by the traveling frame 8 such that the rods 91a are rotatable about second shafts 56 extending in the front-rear direction.

This configuration facilitates swinging of the vehicle body frame 21 in the left-right direction, so that the vehicle body 2 more easily tilts in the left-right direction. Accordingly, the operation of driving the left lifting cylinder 91L and/or the right lifting cylinder 91R such that the left and right portions of the vehicle body 2 are at different heights can be smoothly performed.

When the tilt detector 170 detects that the vehicle body 2 is tilted by a predetermined amount or more, the height-changing mechanism 90 may lower the vehicle body 2. In this case, the height-changing mechanism 90 lowers the left and right portions of the vehicle body 2 simultaneously. Additionally, the height-changing mechanism 90 lowers the left and right portions of the vehicle body 2 by the same distance.

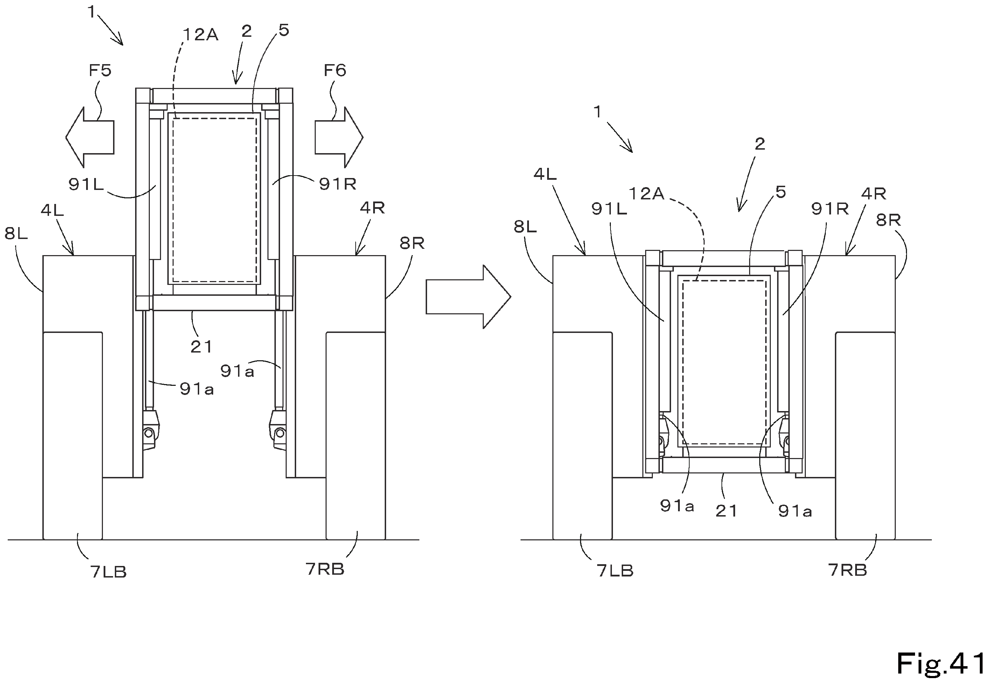

FIG. 41 illustrates a third example of the operation of the height-changing mechanism 90. FIG. 41 illustrates the working vehicle 1 subjected to a force (see arrow F5) that causes the working vehicle 1 to tip leftward or a force (see arrow F6) that causes the working vehicle 1 to tip rightward. When the vehicle body 2 tilts rightward or leftward due to the force F5 or F6, the tilt detector 170 detects the tilt of the vehicle body 2. When the tilt detector 170 detects that the vehicle body 2 is tilted rightward or leftward by a predetermined amount or more, the height-changing mechanism 90 lowers the vehicle body 2.

As illustrated in the right portion of FIG. 41, the operation of lowering the vehicle body 2 is performed by retracting the rods 91a of the right lifting cylinder 91R and the left lifting cylinder 91L. This operation is performed by causing the height-changing controller 19C to control the left lifting cylinder 91L and the right lifting cylinder 91R. The height-changing controller 19C determines whether the vehicle body 2 is tilted by the predetermined amount or more based on the detection result obtained by the tilt detector 170. When it is determined that the vehicle body 2 is tilted by the predetermined amount or more, the height-changing controller 19C drives the left lifting cylinder 91L and the right lifting cylinder 91R. Thus, the operation of lowering the vehicle body 2 is performed.

When the operation of lowering the vehicle body 2 is performed as described above, as illustrated in the right portion of FIG. 41, the height of the vehicle body 2 is reduced, so that the center of gravity of the working vehicle 1 is lowered. Accordingly, tipping of the working vehicle 1 can be prevented or reduced. When the operation of lowering the vehicle body 2 is performed, the vehicle body 2 is preferably lowered to the lowest position within the range in which the height of the vehicle body 2 is changeable by the height-changing mechanism 90. In this case, the first battery 12A, which is a heavy object mounted in the vehicle body 2, is positioned lower than the upper end of the left traveling assembly 4L and the upper end of the right traveling assembly 4R. Accordingly, tipping of the working vehicle 1 can be reliably prevented or reduced.

In the above-described operations of the first and second examples, there is a limit to the amount by which the difference in height between the left and right portions of the vehicle body 2 can be increased, and it is difficult to increase the moment for preventing or reducing tipping. Accordingly, the effect of preventing or reducing tipping may be low. In contrast, according to the operation of the third example, the distance between the point of application (the point of contact with the ground) and the point of effort (the point at which the force acts to cause the vehicle to tip over) can be reduced by lowering the vehicle body 2 to lower the center of gravity of the working vehicle 1, so that tipping can be more reliably prevented or reduced.

The predetermined amount (second predetermined amount) of tilt of the vehicle body 2 based on which the above-described operation of lowering the vehicle body 2 is performed may be the same as the predetermined amount (first predetermined amount) of tilt of the vehicle body 2 based on which the above-described operation of positioning the left and right portions of the vehicle body 2 at different heights is performed. However, the first predetermined amount and the second predetermined amount may be different. When the first predetermined amount and the second predetermined amount are different, tipping of the working vehicle 1 can be prevented or reduced by changing the height of the vehicle body 2 by an optimum method depending on the amount of tilt of the vehicle body 2.

Preferably, the second predetermined amount is set to an amount greater than the first predetermined amount. In such a case, the height-changing mechanism 90 may perform the operation of positioning the left and right portions of the vehicle body 2 at different heights when the tilt of the vehicle body 2 detected by the tilt detector 170 is small, and perform the operation of lowering the vehicle body 2 when the tilt of the vehicle body 2 detected by the tilt detector 170 is large. Accordingly, when the tilt of the vehicle body 2 is small, work can be continued without significantly changing the height of the vehicle body 2, and when the tilt of the vehicle body 2 is large, the vehicle body 2 can be lowered to reliably prevent or reduce tipping of the working vehicle 1.

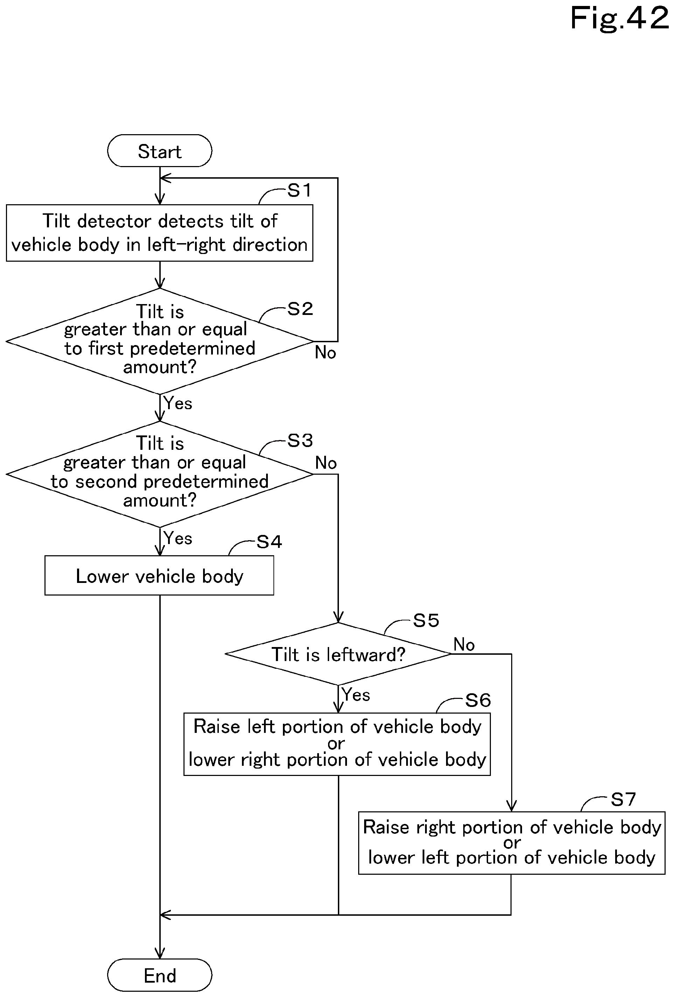

FIG. 42 is a flowchart of an example of an operation of the height-changing mechanism 90. The example of the operation of the height-changing mechanism 90 will now be described with reference to FIG. 42. The operation of the height-changing mechanism 90 is performed under control of the height-changing controller 19C.

During travel of the working vehicle 1, the tilt detector 170 detects a tilt of the vehicle body 2 in the left-right direction (S1). The height-changing controller 19C determines whether or not the amount of tilt detected by the tilt detector 170 is greater than or equal to the first predetermined amount (S2). When it is determined that the amount of tilt is less than the first predetermined amount (S2: No), the detection operation is continuously performed. When it is determined that the amount of tilt is greater than or equal to the first predetermined amount (S2: Yes), it is determined whether or not the amount of tilt detected by the tilt detector 170 is greater than or equal to the second predetermined amount (S3). When it is determined that the amount of tilt is greater than or equal to the second predetermined amount (S3: Yes), the height-changing mechanism 90 lowers the vehicle body 2 (S4). When it is determined that the amount of tilt is less than the second predetermined amount (S3: No), it is determined whether or not the direction of the tilt is leftward (S5). When it is determined that the direction of the tilt is leftward (S5: Yes), the height-changing mechanism 90 performs at least one of the operation of raising the left portion of the vehicle body 2 and the operation of lowering the right portion of the vehicle body 2 (S6). When it is determined that the direction of the tilt is rightward (S5: No), the height-changing mechanism 90 performs at least one of the operation of raising the right portion of the vehicle body 2 and the operation of lowering the left portion of the vehicle body 2 (S7).

The flowchart of FIG. 42 is an example of the operation of the height-changing mechanism 90. The operation of the height-changing mechanism 90 is not limited to the flowchart of FIG. 42, and may be appropriately modified as necessary. For example, the determinations in S2 and S3 may be performed simultaneously, and the determinations in S3 and S5 may be performed in the opposite order. In S5, it may be determined whether or not the direction of the tilt of the vehicle body 2 is rightward, or whether the direction is leftward or rightward.

The height-changing mechanism 90 may change the difference between the heights of the left and right portions of the vehicle body 2 in accordance with the amount (magnitude) of tilt detected by the tilt detector 170. Specifically, the difference between the heights of the left and right portions of the vehicle body 2 may be increased as the tilt detected by the tilt detector 170 increases. Accordingly, the balance between the heights of the left and right portions of the vehicle body 2 can be appropriately adjusted in accordance with the risk of tipping.

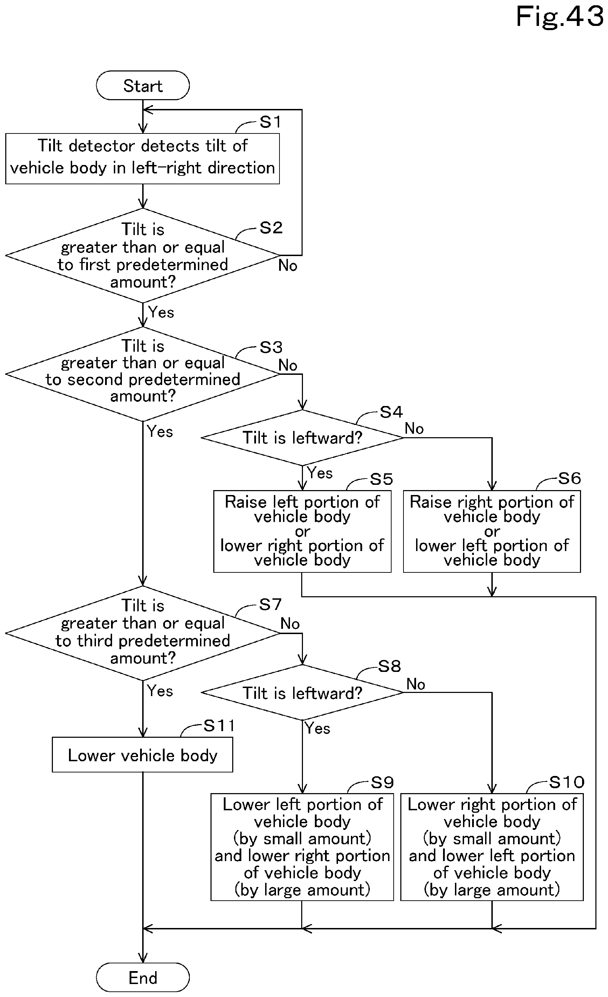

FIG. 43 is a flowchart of another example of the operation of the height-changing mechanism 90. The other example of the operation of the height-changing mechanism 90 will now be described with reference to FIG. 43. This operation of the height-changing mechanism 90 is also performed under control of the height-changing controller 19C.

During travel of the working vehicle 1, the tilt detector 170 detects a tilt of the vehicle body 2 in the left-right direction (S1). The height-changing controller 19C determines whether or not the amount of tilt detected by the tilt detector 170 is greater than or equal to the first predetermined amount (S2). When it is determined that the amount of tilt is less than the first predetermined amount (S2: No), the detection operation is continuously performed. When it is determined that the amount of tilt is greater than or equal to the first predetermined amount (S2: Yes), it is determined whether or not the amount of tilt is greater than or equal to the second predetermined amount (S3). When it is determined that the amount of tilt is less than the second predetermined amount (S3: No), it is determined whether or not the direction of the tilt is leftward (S4). When it is determined that the direction of the tilt is leftward (S4: Yes), the height-changing mechanism 90 performs at least one of the operation of raising the left portion of the vehicle body 2 and the operation of lowering the right portion of the vehicle body 2 (S5). When it is determined that the direction of the tilt is rightward (S4: No), the height-changing mechanism 90 performs at least one of the operation of raising the right portion of the vehicle body 2 and the operation of lowering the left portion of the vehicle body 2 (S6).

When it is determined that the amount of tilt is greater than or equal to the second predetermined amount (S3: Yes), it is determined whether or not the amount of tilt is greater than or equal to a third predetermined amount (S7). The relationship among the first predetermined amount, the second predetermined amount, and the third predetermined amount is as follows: first predetermined amount < second predetermined amount < third predetermined amount.

When it is determined that the amount of tilt is less than the third predetermined amount (S7: No), it is determined whether or not the direction of the tilt is leftward (S8). When it is determined that the direction of the tilt is leftward (S8: Yes), the height-changing mechanism 90 performs an operation of lowering the left and right portions of the vehicle body 2. Here, the right portion of the vehicle body 2 is lowered by a greater amount than the left portion of the vehicle body 2 (S9). When it is determined that the direction of the tilt is rightward (S8: No), the height-changing mechanism 90 performs an operation of lowering the left and right portions of the vehicle body 2. Here, the left portion of the vehicle body 2 is lowered by a greater amount than the right portion of the vehicle body 2 (S10).

When it is determined that the amount of tilt is greater than or equal to the third predetermined amount (S7: Yes), the height-changing mechanism 90 lowers the vehicle body 2 (S11). Here, the left and right portions of the vehicle body 2 are lowered by the same amount. The amount by which the left and right portions of the vehicle body 2 are lowered is preferably equal to the maximum lowering amount achievable by the height-changing mechanism 90, but may be an amount that is at least greater than or equal to the amount by which the right portion of the vehicle body 2 is lowered in S9 and the amount by which the left portion of the vehicle body 2 is lowered in S10.

The operation of the height-changing mechanism 90 illustrated in the flowchart of FIG. 43 may be appropriately modified as necessary. For example, the determinations in S2, S3, and S7 may be performed simultaneously. In S4 and S8, it may be determined whether or not the direction of the tilt of the vehicle body 2 is rightward, or whether the direction is leftward or rightward. Additionally, the positions of S5 and S9 may be interchanged, and the positions of S6 and S10 may be interchanged. In other words, the operation of S9 may be performed when the result of the determination in step S4 is Yes, and the operation of S10 may be performed when the result of the determination in step S4 is No. Additionally, the operation of S5 may be performed when the result of the determination in step S8 is Yes, and the operation of S6 may be performed when the result of the determination in step S8 is No.

In the operation of the height-changing mechanism 90 according to the flowchart of FIG. 43, when the amount of tilt of the vehicle body 2 is small (greater than or equal to the first predetermined amount, but less than the second predetermined amount and the third predetermined amount), the height-changing mechanism 90 raises one of the left and right portions of the vehicle body 2 and lowers the other. When the amount of tilt of the vehicle body 2 is moderate (greater than or equal to the first predetermined amount and the second predetermined amount, but less than the third predetermined amount), the height-changing mechanism 90 lowers one of the left and right portions of the vehicle body 2 and lowers the other by a greater amount than the one of the left and right portions of the vehicle body 2. When the amount of tilt of the vehicle body 2 is large (greater than or equal to the first predetermined amount, the second predetermined amount, and the third predetermined amount), the height-changing mechanism 90 lowers the left and right portions of the vehicle body 2 by the same amount.

By performing the above-described operations, when the tilt of the vehicle body 2 is small, work can be continued without significantly changing the height of the vehicle body 2. When the tilt of the vehicle body 2 is moderate, the vehicle body 2 can be slightly lowered to reduce the risk of tipping of the working vehicle 1. When the tilt of the vehicle body 2 is large, the vehicle body 2 can be lowered by a large amount to reliably prevent or reduce tipping of the working vehicle 1.

A case in which the changing mechanism 180 is the distance-changing mechanism 80 will now be described. In this case, the distance-changing mechanism 80 changes the distance from the vehicle body 2 to the traveling assembly 4 in the left-right direction based on the detection result obtained by the tilt detector 170. The operation of the distance-changing mechanism 80 is controlled by the distance-changing controller 19B.

The distance-changing mechanism 80 includes a left distance-changing mechanism 80L that changes the distance from the vehicle body 2 to the left traveling assembly 4L in the left-right direction and a right distance-changing mechanism 80R that changes the distance from the vehicle body 2 to the right traveling assembly 4R in the left-right direction (see FIG. 6). The left distance-changing mechanism 80L is the above-described left changing mechanism 80L and includes the left cylinder 81L. The right distance-changing mechanism 80R is the above-described right changing mechanism 80R and includes the right cylinder 81R. The distance-changing mechanism 80 drives the left cylinder 81L to change the distance from the vehicle body 2 to the left traveling assembly 4L in the left-right direction, and drives the right cylinder 81R to change the distance from the vehicle body 2 to the right traveling assembly 4R in the left-right direction.

The distance-changing mechanism 80 is capable of positioning the left traveling assembly 4L and the right traveling assembly 4R at different distances from the vehicle body 2 based on the detection result obtained by the tilt detector 170. Specifically, when the tilt detector 170 detects that the vehicle body 2 is tilted leftward by a predetermined amount or more, the distance-changing mechanism 80 increases the distance between the left traveling assembly 4L and the vehicle body 2. When the tilt detector 170 detects that the vehicle body 2 is tilted rightward by a predetermined amount or more, the distance-changing mechanism 80 increases the distance between the right traveling assembly 4R and the vehicle body 2.

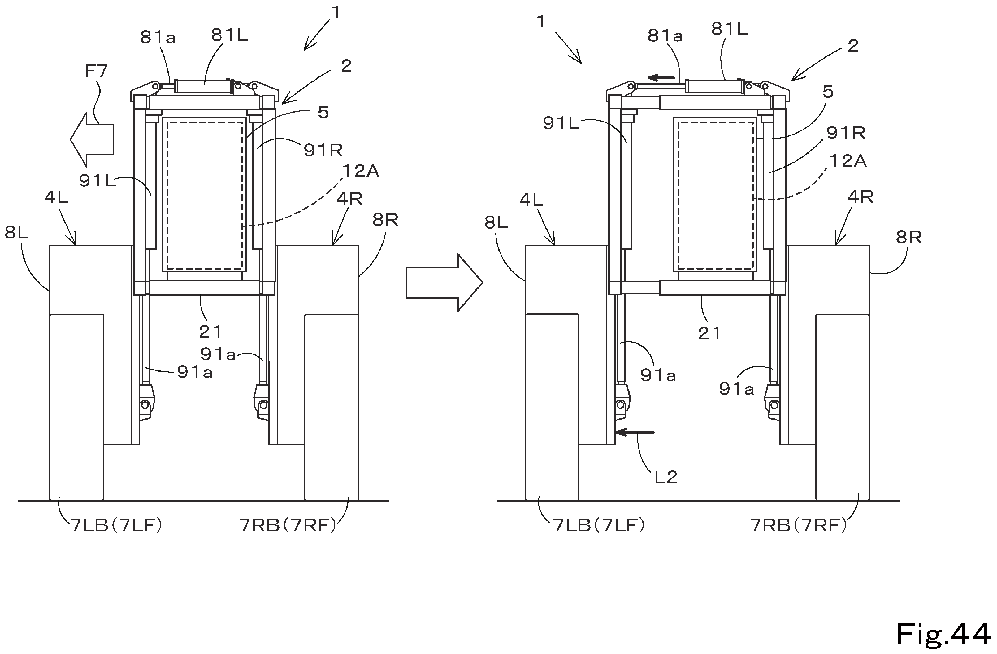

FIG. 44 illustrates a first example of the operation of the distance-changing mechanism 80. The left portion of FIG. 44 illustrates the working vehicle 1 subjected to a force (see arrow F7) that causes the working vehicle 1 to tip leftward. When the vehicle body 2 tilts leftward due to the force F7, the tilt detector 170 detects the leftward tilt of the vehicle body 2. When the tilt detector 170 detects that the vehicle body 2 is tilted leftward by the predetermined amount or more, the distance-changing mechanism 80 performs an operation of increasing the distance between the left traveling assembly 4L and the vehicle body 2 in the left-right direction.

As illustrated in the right portion of FIG. 44, the operation of increasing the distance between the left traveling assembly 4L and the vehicle body 2 is performed by extending the rod 81a of the left cylinder 81L. This operation is performed by causing the distance-changing controller 19B to control the left cylinder 81L. The distance-changing controller 19B determines whether the vehicle body 2 is tilted leftward by the predetermined amount or more based on the detection result obtained by the tilt detector 170. When it is determined that the vehicle body 2 is tilted leftward by the predetermined amount or more, the distance-changing controller 19B drives the left cylinder 81L to extend the rod 81a. Accordingly, the left traveling assembly 4L moves (see arrow L2) in a direction away from the vehicle body 2 (leftward), and the distance between the left traveling assembly 4L and the vehicle body 2 increases.

When the operation of increasing the distance between the left traveling assembly 4L and the vehicle body 2 is performed as described above, as illustrated in the right portion of FIG. 44, the left wheels (the left front wheel 7LF and the left rear wheel 7LB) are in contact with the ground at a position further away from the vehicle body 2 in the leftward direction than before the operation. Accordingly, leftward tipping of the vehicle body 2 can be prevented or reduced.

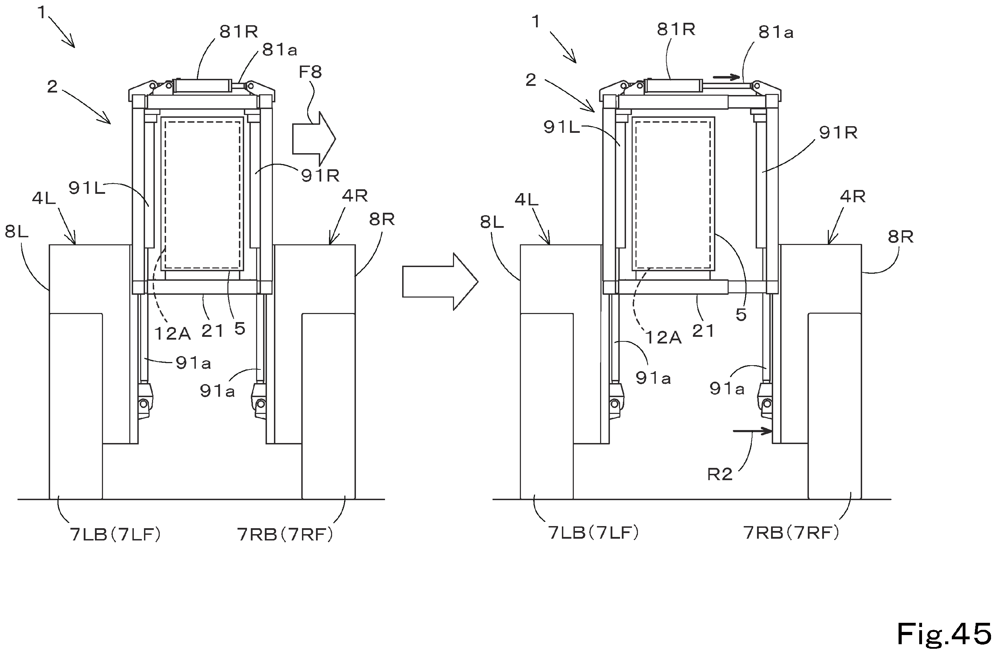

FIG. 45 illustrates a second example of the operation of the distance-changing mechanism 80. The left portion of FIG. 45 illustrates the working vehicle 1 subjected to a force (see arrow F8) that causes the working vehicle 1 to tip rightward. When the vehicle body 2 tilts rightward due to the force F8, the tilt detector 170 detects the rightward tilt of the vehicle body 2. When the tilt detector 170 detects that the vehicle body 2 is tilted rightward by the predetermined amount or more, the distance-changing mechanism 80 performs an operation of increasing the distance between the right traveling assembly 4R and the vehicle body 2 in the left-right direction.

As illustrated in the right portion of FIG. 45, the operation of increasing the distance between the right traveling assembly 4R and the vehicle body 2 is performed by extending the rod 81a of the right cylinder 81R. This operation is performed by causing the distance-changing controller 19B to control the right cylinder 81R. The distance-changing controller 19B determines whether the vehicle body 2 is tilted rightward by the predetermined amount or more based on the detection result obtained by the tilt detector 170. When it is determined that the vehicle body 2 is tilted rightward by the predetermined amount or more, the distance-changing controller 19B drives the right cylinder 81R to extend the rod 81a. Accordingly, the right traveling assembly 4R moves (see arrow R2) in a direction away from the vehicle body 2 (rightward), and the distance between the right traveling assembly 4R and the vehicle body 2 is increased.

When the operation of increasing the distance between the right traveling assembly 4R and the vehicle body 2 is performed as described above, as illustrated in the right portion of FIG. 45, the right wheels (the right front wheel 7RF and the right rear wheel 7RB) are in contact with the ground at a position further away from the vehicle body 2 in the rightward direction than before the operation. Accordingly, rightward tipping of the vehicle body 2 can be prevented or reduced.

As the operation of positioning the left traveling assembly 4L and the right traveling assembly 4R at different distances from the vehicle body 2, the distance-changing mechanism 80 may perform both the operation of increasing the distance between the left traveling assembly 4L and the vehicle body 2 and the operation of increasing the distance between the right traveling assembly 4R and the vehicle body 2. In this case, the rod 81a of the left cylinder 81L and the rod 81a of the right cylinder 81R may be extended by different amounts so that the traveling assembly 4L and the right traveling assembly 4R are positioned at different distances from the vehicle body 2.

When the tilt detector 170 detects that the vehicle body 2 is tilted while the left traveling assembly 4L and the right traveling assembly 4R are somewhat spaced from the vehicle body 2 (while the distances from the vehicle body 2 to the left and right traveling assemblies 4L and 4R are greater than or equal to a predetermined distance), the distance-changing mechanism 80 may perform an operation of increasing the distance between the vehicle body 2 and one of the left and right traveling assemblies 4L and 4R and reducing the distance between the vehicle body 2 and the other of the left and right traveling assemblies 4L and 4R. In this case, the rod of one of the left and right cylinders 81L and 81R may be extended and the rod of the other of the left and right cylinders 81L and 81R may be retracted. Accordingly, the rod of the left cylinder 81L and the rod of the right cylinder 81R may be extended by different amounts so that the left traveling assembly 4L and the right traveling assembly 4R are positioned at different distances from the vehicle body 2.

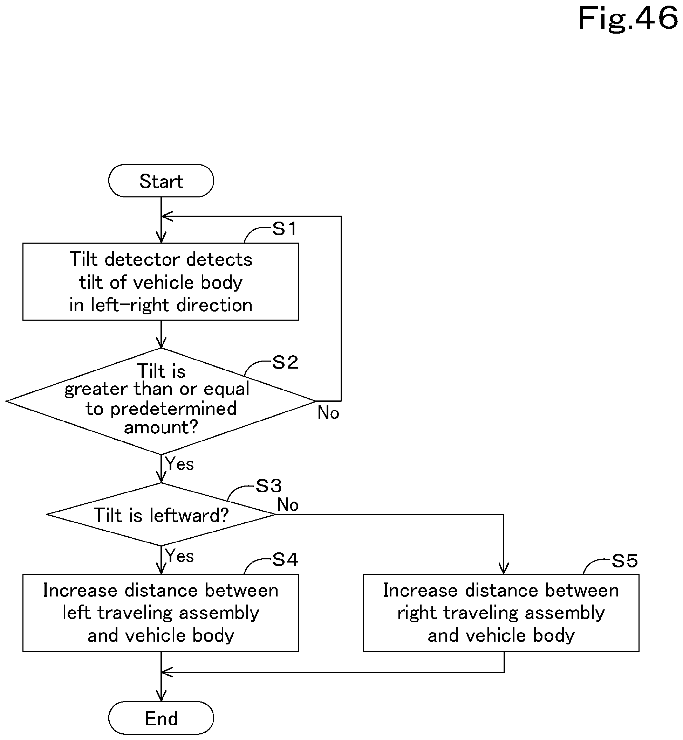

FIG. 46 is a flowchart of an example of an operation of the distance-changing mechanism 80. The example of the operation of the distance-changing mechanism 80 will now be described with reference to FIG. 46. The operation of the distance-changing mechanism 80 is performed under control of the distance-changing controller 19B.

During travel of the working vehicle 1, the tilt detector 170 detects a tilt of the vehicle body 2 in the left-right direction (S1). The distance-changing controller 19B determines whether or not the amount of tilt detected by the tilt detector 170 is greater than or equal to the predetermined amount (S2). When it is determined that the amount of tilt is less than the predetermined amount (S2: No), the detection operation is continuously performed. When it is determined that the amount of tilt is greater than or equal to the predetermined amount (S2: Yes), it is determined whether or not the direction of the tilt is leftward (S3). When it is determined that the direction of the tilt is leftward (S3: Yes), the distance-changing mechanism 80 performs an operation of increasing the distance between the left traveling assembly 4L and the vehicle body 2 (S4). When it is determined that the direction of the tilt is rightward (S3: No), the distance-changing mechanism 80 performs an operation of increasing the distance between the right traveling assembly 4R and the vehicle body 2 (S5).

The flowchart of FIG. 46 is an example of the operation of the distance-changing mechanism 80. The operation of the distance-changing mechanism 80 is not limited to the flowchart of FIG. 46, and may be appropriately modified as necessary. For example, the determinations in S2 and S3 may be performed simultaneously, or may be performed in the opposite order. In S3, it may be determined whether or not the direction of the tilt of the vehicle body 2 is rightward, or whether the direction is leftward or rightward.

The distance-changing mechanism 80 may change the distance between the vehicle body 2 and the traveling assembly 4 (the left traveling assembly 4L and the right traveling assembly 4R) in the left-right direction in accordance with the amount (magnitude) of tilt detected by the tilt detector 170. Specifically, the distance between the vehicle body 2 and the traveling assembly 4 in the left-right direction may be increased as the tilt detected by the tilt detector 170 increases. Accordingly, the distance between the vehicle body 2 and the traveling assembly 4 in the left-right direction can be appropriately adjusted in accordance with the risk of tipping.

A case in which the changing mechanism 180 is the position-changing mechanism 70 will now be described. In this case, the position-changing mechanism 70 changes the position of the vehicle body 2 in the front-rear direction based on the detection result obtained by the tilt detector 170. The operation of the position-changing mechanism 70 is controlled by the position-changing controller 19D. As described above, the position-changing mechanism 70 includes the position-changing cylinder 73. The position-changing mechanism 70 drives the position-changing cylinder 73 to change the position of the vehicle body 2 in the front-rear direction.

When the tilt detector 170 detects that the vehicle body 2 is tilted forward by a predetermined amount or more, the position-changing mechanism 70 moves the vehicle body 2 rearward relative to the traveling assembly 4. When the tilt detector 170 detects that the vehicle body 2 is tilted rearward by a predetermined amount or more, the position-changing mechanism 70 moves the vehicle body 2 forward relative to the traveling assembly 4.

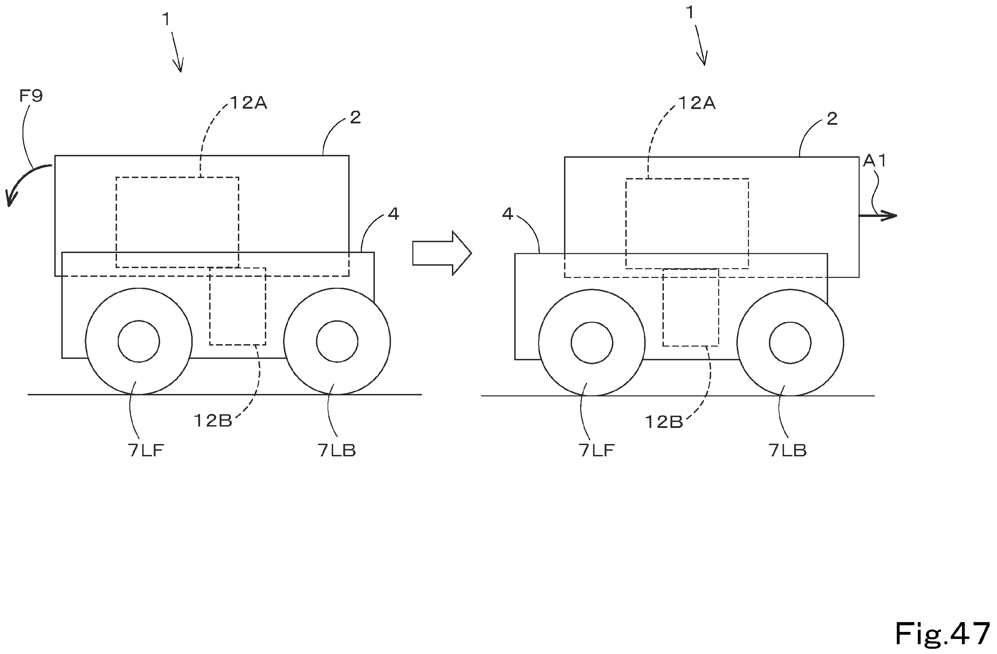

FIG. 47 illustrates a first example of the operation of the position-changing mechanism 70. The left portion of FIG. 47 illustrates the working vehicle 1 subjected to a force (see arrow F9) that causes the working vehicle 1 to tip forward. When the vehicle body 2 tilts forward due to the force F9, the tilt detector 170 detects the forward tilt of the vehicle body 2. When the tilt detector 170 detects that the vehicle body 2 is tilted forward by the predetermined amount or more, the position-changing mechanism 70 performs an operation of moving the vehicle body 2 rearward (see arrow A1 in FIG. 47).

The operation of moving the vehicle body 2 rearward is performed by extending or retracting the rod 73b of the position-changing cylinder 73 (see FIG. 23). This operation is performed by causing the position-changing controller 19D to control the position-changing cylinder 73. The position-changing controller 19D determines whether the vehicle body 2 is tilted forward by the predetermined amount or more based on the detection result obtained by the tilt detector 170. When it is determined that the vehicle body 2 is tilted forward by the predetermined amount or more, the position-changing controller 19D drives the position-changing cylinder 73 to retract the rod 73b. Accordingly, the vehicle body 2 moves rearward.

When the operation of moving the vehicle body 2 rearward is performed as described above, the vehicle body 2 moves rearward relative to the traveling assembly 4, as illustrated in the right portion of FIG. 47. Accordingly, the center of gravity of the working vehicle 1 moves rearward, so that forward tipping of the vehicle body 2 can be prevented or reduced.

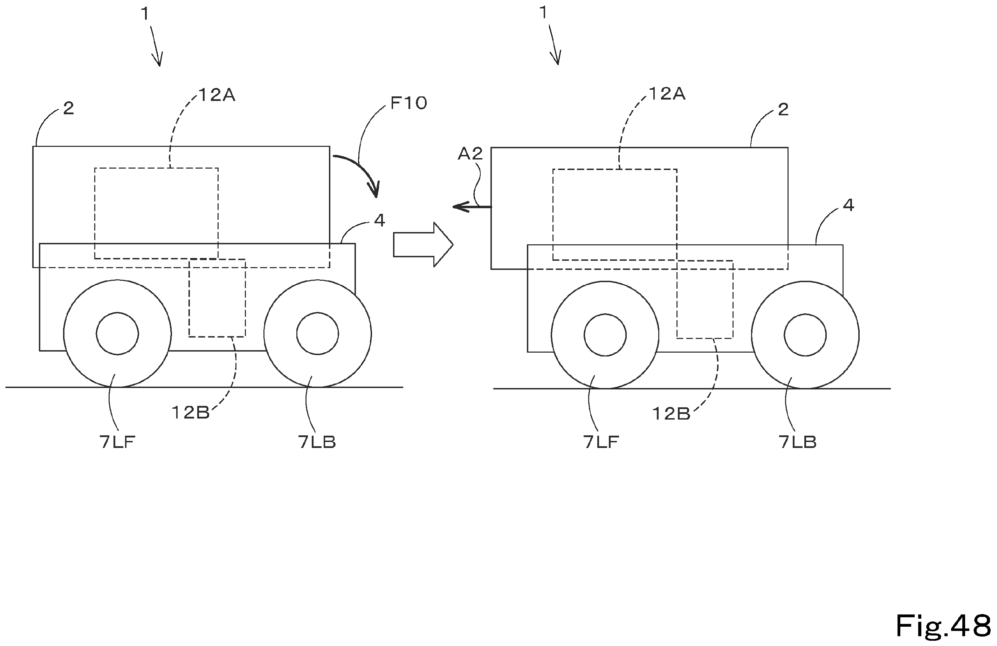

FIG. 48 illustrates a second example of the operation of the position-changing mechanism 70. The left portion of FIG. 48 illustrates the working vehicle 1 subjected to a force (see arrow F10) that causes the working vehicle 1 to tip rearward. When the vehicle body 2 tilts rearward due to the force F10, the tilt detector 170 detects the rearward tilt of the vehicle body 2. When the tilt detector 170 detects that the vehicle body 2 is tilted rearward by the predetermined amount or more, the position-changing mechanism 70 performs an operation of moving the vehicle body 2 forward (see arrow A2 in FIG. 48).

The operation of moving the vehicle body 2 forward is performed by extending or retracting the rod 73b of the position-changing cylinder 73 (see FIG. 23). This operation is performed by causing the position-changing controller 19D to control the position-changing cylinder. The position-changing controller 19D determines whether the vehicle body 2 is tilted rearward by the predetermined amount or more based on the detection result obtained by the tilt detector 170. When it is determined that the vehicle body 2 is tilted rearward by the predetermined amount or more, the position-changing controller 19D drives the position-changing cylinder to extend the rod 73b. Accordingly, the vehicle body 2 moves forward.

When the operation of moving the vehicle body 2 forward is performed as described above, the vehicle body 2 moves forward relative to the traveling assembly 4, as illustrated in the right portion of FIG. 48. Accordingly, the center of gravity of the working vehicle 1 moves forward, so that rearward tipping of the vehicle body 2 can be prevented or reduced.

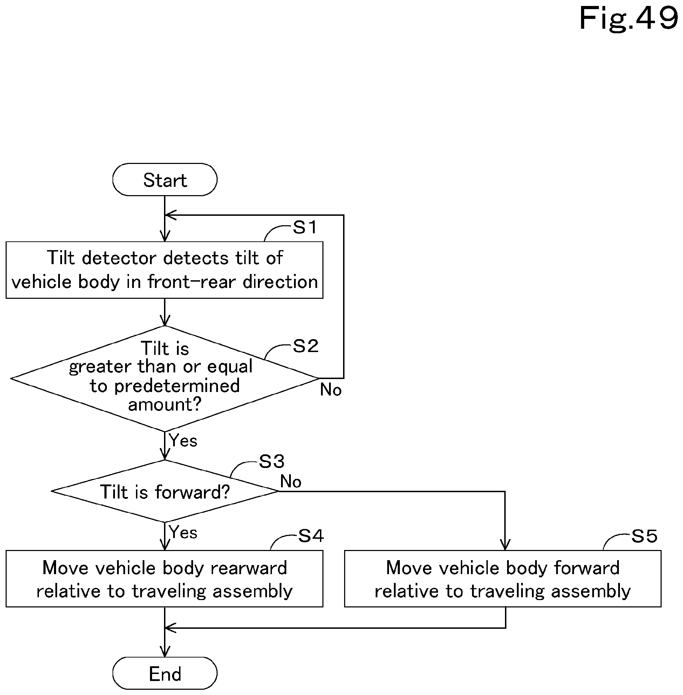

FIG. 49 is a flowchart of an example of an operation of the position-changing mechanism 70. The example of the operation of the position-changing mechanism 70 will now be described with reference to FIG. 49. The operation of the position-changing mechanism 70 is performed under control of the position-changing controller 19D.

During travel of the working vehicle 1, the tilt detector 170 detects a tilt of the vehicle body 2 in the front-rear direction (S1). The position-changing controller 19D determines whether or not the amount of tilt detected by the tilt detector 170 is greater than or equal to the predetermined amount (S2). When it is determined that the amount of tilt is less than the predetermined amount (S2: No), the detection operation is continuously performed. When it is determined that the amount of tilt is greater than or equal to the predetermined amount (S2: Yes), it is determined whether or not the direction of the tilt is forward (S3). When it is determined that the direction of the tilt is forward (S3: Yes), the position-changing mechanism 70 performs an operation of moving the vehicle body 2 rearward relative to the traveling assembly 4 (S4). When it is determined that the direction of the tilt is rearward (S3: No), the position-changing mechanism 70 performs an operation of moving the vehicle body 2 forward relative to the traveling assembly 4 (S5).

The flowchart of FIG. 49 is an example of the operation of the position-changing mechanism 70. The operation of the position-changing mechanism 70 is not limited to the flowchart of FIG. 49, and may be appropriately modified as necessary. For example, the determinations in S2 and S3 may be performed simultaneously, or may be performed in the opposite order. In S3, it may be determined whether or not the direction of the tilt of the vehicle body 2 is rearward, or whether the direction is forward or rearward.

The position-changing mechanism 70 may change the amount of forward or rearward movement of the vehicle body 2 in accordance with the amount (magnitude) of tilt detected by the tilt detector 170. Specifically, the amount of forward or rearward movement of the vehicle body 2 may be increased as the tilt detected by the tilt detector 170 increases. Accordingly, the position of the vehicle body 2 relative to the traveling assembly 4 in the front-rear direction can be appropriately adjusted in accordance with the risk of tipping.

The position-changing mechanism 70 may change the position of a portion of the vehicle body 2 in the front-rear direction based on the detection result obtained by the tilt detector 170. The position-changing mechanism 70 used in this case is the position-changing mechanism 70 according to the variation illustrated in FIG. 24. In this case, the position-changing mechanism 70 drives the position-changing cylinder 73 based on the detection result obtained by the tilt detector 170 to change the position of the main body case 5 accommodating the first battery 12A in the front-rear direction. More specifically, when the tilt detector 170 detects that the vehicle body 2 is tilted forward by a predetermined amount or more, the position-changing mechanism 70 moves the main body case 5 rearward relative to the vehicle body frame 21. When the tilt detector 170 detects that the vehicle body 2 is tilted rearward by a predetermined amount or more, the position-changing mechanism 70 moves the main body case 5 forward relative to the vehicle body frame 21. Thus, the center of gravity of the working vehicle 1 moves in a direction opposite to the direction of the tilt, so that tipping of the working vehicle 1 can be prevented or reduced.

Preferred example embodiments of the present invention provide working vehicles 1 according to the following items.

(Item A1) A working vehicle 1 including a vehicle body 2, a structure 3 connectable to the vehicle body 2, a plurality of junction boxes 130 including a main junction box 130A provided in at least one of the vehicle body 2 and the structure 3 and a sub-junction box 130B provided in at least one of the vehicle body 2 and the structure 3, and a plurality of electrical devices 120, wherein the sub-junction box 130B is connected to at least one of the plurality of electrical devices 120, and the main junction box 130A is connected to at least another one of the plurality of electrical devices 120 that is different from the one of the plurality of electrical devices 120 to which the sub-junction box 130B is connected, and is also connected to the sub-junction box 130B.

According to the working vehicle 1 of item A1, complex routing of electrical wires connecting the junction boxes 130 to the electrical devices 120 can be prevented or reduced. Additionally, since an electrical wire can be connected to the main junction box 130A via the sub-junction box 130B, the number of electrical wires can be reduced. Accordingly, the electrical wires are less likely to be entangled even when a portion of the working vehicle 1 is deformed (moved).

(Item A2) The working vehicle 1 according to item A1, wherein the structure 3 includes a traveling assembly 4 provided at a lateral side of the vehicle body 2, the main junction box 130A is provided in the vehicle body 2 or the traveling assembly 4, and the sub-junction box 130B is provided in the traveling assembly 4 when the main junction box 130A is provided in the vehicle body 2, and is provided in the vehicle body 2 when the main junction box 130A is provided in the traveling assembly 4.

According to the working vehicle 1 of item A2, the main junction box 130A and the sub-junction box 130B are provided separately, one in the vehicle body 2 and the other in the structure 3. Accordingly, routing of electrical wires connected to the electrical devices 120 provided in the vehicle body 2 and the structure 3 can be simplified and facilitated.

(Item A3) The working vehicle 1 according to item A2, wherein the plurality of electrical devices 120 include a first electrical device 121 provided in the vehicle body 2 and a second electrical device 122 provided in the traveling assembly 4, the main junction box 130A is connected to the first electrical device 121 when the main junction box 130A is provided in the vehicle body 2, and is connected to the second electrical device 122 when the main junction box 130A is provided in the traveling assembly 4, and the sub-junction box 130B is connected to the second electrical device 122 when the sub-junction box 130B is provided in the traveling assembly 4, and is connected to the first electrical device 121 when the sub-junction box 130B is provided in the vehicle body 2.

According to the working vehicle 1 of item A3, the main junction box 130A and the sub-junction box 130B can be located in the vicinity of, and easily connected to, both the first electrical device 121 provided in the vehicle body 2 and the second electrical device 122 provided in the traveling assembly 4.

(Item A4) The working vehicle 1 according to item A2, wherein the traveling assembly 4 includes a left traveling assembly 4L located leftward of the vehicle body 2 and a right traveling assembly 4R located rightward of the vehicle body 2, the main junction box 130A is provided in the vehicle body 2, and the sub-junction box 130b is provided in each of the left traveling assembly 4L and the right traveling assembly 4R.

According to the working vehicle 1 of item A4, the main junction box 130A can be located in the vicinity of, and connected to, the electrical device 120 provided in the vehicle body 2, and the sub-junction boxes 130B can be located in the vicinity of, and connected to, the electrical devices 120 provided in the left traveling assembly 4L and the right traveling assembly 4R.

(Item A5) The working vehicle 1 according to item A3, wherein the first electrical device 121 includes a first battery 12A, the second electrical device 122 includes a second battery 12B, and the first battery 12A and the second battery 12B are directly or indirectly connected to the main junction box 130A.

According to the working vehicle 1 of item A5, electric power can be supplied from the first battery 12A and the second battery 12B to the electrical devices 120 through the main junction box 130A. Accordingly, routing of the electrical wires can be facilitated.

(Item A6) The working vehicle 1 according to item A5, wherein the second electrical device 122 includes an electrical device 120 other than the second battery 12B, and the sub-junction box 130B functions as a relay for an electrical wire connected to the electrical device 120 other than the second battery 12B.

According to the working vehicle 1 of item A6, routing of the electrical wire connected to the electrical device 120 other than the second battery 12B can be facilitated.

(Item A7) The working vehicle 1 according to any one of items A1 to A6, further including a movable portion 150 to guide a connecting wire connecting the main junction box 130A and the sub-junction box 130B to each other and to move to follow deformation of the connecting wire.

According to the working vehicle 1 of item A7, when the positional relationship between the main junction box 130A and the sub-junction box 130B changes, defects (twisting, entanglement, or damage) in the electrical wire connecting the main junction box 130A and the sub-junction box 130B to each other can be prevented or reduced.

(Item A8) The working vehicle 1 according to any one of items A1 to A7, wherein the main junction box 130A is provided in the vehicle body 2 and is configured to change a position thereof in an up-down direction together with the vehicle body 2.

According to the working vehicle 1 of item A8, the main junction box 130A is capable of changing the position thereof in the up-down direction together with the vehicle body 2. Accordingly, defects in the electrical wire connected to the main junction box 130A can be prevented or reduced when the position of the vehicle body 2 changes in the up-down direction.

(Item A9) The working vehicle 1 according to item A2, wherein the sub-junction box 130B is provided in the traveling assembly 4 and is configured to change a position thereof in a left-right direction together with the traveling assembly 4.

According to the working vehicle 1 of item A9, defects in the electrical wire connected to the sub-junction box 130B can be prevented or reduced when the position of the traveling assembly 4 changes in the left-right direction.

(Item A10) The working vehicle 1 according to item A2, wherein each of the plurality of electrical devices 120 includes at least one of a plurality of batteries 12, and at least one of the plurality of batteries 12 and at least one of the plurality of junction boxes 130 are provided in each of the vehicle body 2 and the traveling assembly 4.

According to the working vehicle 1 of item A10, since the batteries 12 and the junction boxes 130 are provided in the vehicle body 2 and the traveling assembly 4, routing of the electrical wires connected to the electrical devices 120 provided in the vehicle body 2 and the traveling assembly 4 is not complex and can be facilitated.

(Item A11) The working vehicle 1 according to item A2, wherein the traveling assembly 4 includes a left traveling assembly 4L located leftward of the vehicle body 2 and a right traveling assembly 4R located rightward of the vehicle body 2, and the plurality of junction boxes 130 include a first junction box 131 provided in the vehicle body 2, a second junction box 132 provided in the left traveling assembly 4L, and a third junction box 133 provided in the right traveling assembly 4R.

According to the working vehicle 1 of item A11, since the junction boxes 130 are provided in the vehicle body 2, the left traveling assembly 4L, and the right traveling assembly 4R, routing of various electrical wires connected to the electrical devices provided in the vehicle body 2, the left traveling assembly 4L, and the right traveling assembly 4R is not complex and can be facilitated.

(Item A12) The working vehicle 1 according to item A11, wherein the plurality of electrical devices 120 include a first electrical device 121 provided in the vehicle body 2 and a second electrical device 122 provided in the traveling assembly 4, a left traveling motor (motor 10LF, motor 10LB) to drive a left wheel is provided as the second electrical device 122 in the left traveling assembly 4L, a right traveling motor (motor 10RF, motor 10RB) to drive a right wheel is provided as the second electrical device 122 in the right traveling assembly 4R, the second junction box 132 functions as a relay for an electrical wire connected to the left traveling motor (motor 10LF, motor 10LB), and the third junction box 133 functions as a relay for an electrical wire connected to the right traveling motor (motor 10RF, motor 10RB).

According to the working vehicle 1 of item A12, routing of an electrical wire connected to the left traveling motors (motors 10LF and 10LB) that drive the left wheel and the right traveling motors (motors 10RF and 10RB) that drive the right wheel is not complex and can be facilitated.

(Item B1) A working vehicle 1 including a vehicle body 2, a traveling frame 8 including a left traveling frame 8L located leftward of the vehicle body 2 to support a left wheel and a right traveling frame 8R located rightward of the vehicle body 2 to support a right wheel, and a hydraulic assembly 100 including a hydraulic valve 101 to control an operation of a hydraulic device mounted on the vehicle body 2 or the traveling frame 8, the hydraulic assembly 100 being located between the left traveling frame 8L and the right traveling frame 8R.

According to the working vehicle 1 of item B1, since the hydraulic assembly 100 is located between the left traveling frame 8L and the right traveling frame 8R, the hydraulic assembly 100 can be placed in a space that is small in the left-right direction.

(Item B2) The working vehicle 1 according to item B1, wherein a left side of the hydraulic assembly 100 is covered by the left traveling frame 8L and a right side of the hydraulic assembly 100 is covered by the right traveling frame 8R.

According to the working vehicle 1 of item B2, each of the left and right sides of the hydraulic assembly 100 can be protected by the traveling frame 8.

(Item B3) The working vehicle 1 according to item B1 or B2, further including a battery 12 to store electric power to be supplied to an electrical device mounted on the vehicle body 2 or the traveling frame 8, wherein the hydraulic assembly 100 and the battery 12 are arranged in a front-rear direction between the left traveling frame 8L and the right traveling frame 8R.

According to the working vehicle 1 of item B3, the hydraulic assembly 100 and the battery 12 can be arranged in a space that is small in the left-right direction. Additionally, the front or rear of the hydraulic assembly 100 can be protected by the battery 12, and the front or rear of the battery 12 can be protected by the hydraulic assembly 100.

(Item B4) The working vehicle 1 according to any one of items B1 to B3, further including a lifting mechanism 90 to raise and lower the vehicle body 2 relative to the traveling frame 8, wherein the hydraulic assembly 100 is covered from at least two directions when the vehicle body 2 is lowered, and is covered from at least one direction when the vehicle body 2 is raised.

According to the working vehicle 1 of item B4, the hydraulic assembly 100 can be accessed from a greater number of directions when the vehicle body 2 is raised than when the vehicle body 2 is lowered. Accordingly, maintenance of the hydraulic assembly 100 is facilitated.

(Item B5) The working vehicle 1 according to any one of items B1 to B4, wherein the hydraulic assembly 100 includes the hydraulic valve 101, a hydraulic fluid tank 102 to store hydraulic fluid to be supplied to the hydraulic device, and a hydraulic pump 103 to be driven by the hydraulic fluid, and the hydraulic valve 101, the hydraulic pump 103, and the hydraulic fluid tank 102 are collectively arranged at a rear portion of the vehicle body 2.

According to the working vehicle 1 of item B5, the hydraulic valve 101, the hydraulic pump 103, and the hydraulic fluid tank 102 are collectively arranged at the rear portion of the vehicle body 2. Accordingly, the hydraulic valve 101, the hydraulic pump 103, and the hydraulic fluid tank 102 can be simultaneously checked for oil leakage or the like during inspection, so that maintenance is facilitated.

(Item B6) The working vehicle 1 according to item B4, wherein the vehicle body 2 includes a main body 5 and a vehicle body frame 21 to support the main body 5, the vehicle body frame 21 supports the main body 5 between the left traveling frame 8L and the right traveling frame 8R and is configured to be raised and lowered together with the main body 5, and the hydraulic assembly 100 is positioned such that the hydraulic assembly 100 does not project from the vehicle body frame 21 at least in a left-right direction.

According to the working vehicle 1 of item B6, interference between the hydraulic assembly 100 and the traveling frame 8 can be avoided when the vehicle body frame 21 is raised or lowered.

(Item C1) A working vehicle 1 including a vehicle body 2, a structure 3 connectable to the vehicle body 2, a hydraulic actuator mounted on one of the vehicle body 2 and the structure 3, a hydraulic device mounted on another one of the vehicle body 2 and the structure 3 on which the hydraulic actuator is not provided, the hydraulic device being different from the hydraulic actuator, and a moving mechanism to move, together with the hydraulic device, the other one of the vehicle body 2 and the structure 3 on which the hydraulic device is mounted in an up-down direction.

According to the working vehicle 1 of item C1, the other one of the vehicle body 2 and the structure 3 on which the hydraulic device is mounted can be moved together with the hydraulic device in the up-down direction. Accordingly, maintenance of the hydraulic device can be facilitated. Specifically, by moving the hydraulic device in the up-down direction, access to the hydraulic device can be facilitated, so that maintenance of the hydraulic device can be facilitated.

(Item C2) The working vehicle 1 according to item C1, wherein the hydraulic device is a hydraulic valve 101 to control an operation of the hydraulic actuator.

According to the working vehicle 1 of item C2, maintenance of the hydraulic valve 101 that controls the operation of the hydraulic actuator can be facilitated.

(Item C3) The working vehicle 1 according to item C1 or C2, wherein the hydraulic actuator is located at a fixed position, and the moving mechanism is configured to move the hydraulic device to change a position of the hydraulic device relative to the hydraulic actuator.

According to the working vehicle 1 of item C3, maintenance of the hydraulic device can be facilitated by changing the position of the hydraulic device without moving the hydraulic actuator.

(Item C4) The working vehicle 1 according to any one of items C1 to C3, wherein the hydraulic device is configured to be moved together with the vehicle body 2 relative to the structure 3 by the moving mechanism.

According to the working vehicle 1 of item C4, the hydraulic device is moved together with the vehicle body 2 relative to the structure 3, so that the hydraulic device can be accessed without being blocked by the structure 3.

(Item C5) The working vehicle 1 according to item C4, wherein the structure 3 is a traveling frame 8 provided at a lateral side of the vehicle body 2 to support a wheel, the moving mechanism is a lifting mechanism 90 to raise and lower the vehicle body 2 relative to the traveling frame 8, and the hydraulic device is configured to be raised and lowered together with the vehicle body 2 relative to the traveling frame 8 by the lifting mechanism 90.

According to the working vehicle 1 of item C5, the hydraulic device is moved together with the vehicle body 2 relative to the traveling frame 8, so that the hydraulic device can be accessed without being blocked by the traveling frame 83.

(Item C6) The working vehicle 1 according to item C5, wherein the hydraulic actuator is fixed to the traveling frame 8, and the hydraulic device is configured to be raised and lowered relative to the hydraulic actuator when raised and lowered together with the vehicle body 2 relative to the traveling frame 8.

According to the working vehicle 1 of item C6, maintenance of the hydraulic device can be facilitated by changing the position of the hydraulic device without moving the hydraulic actuator and the traveling frame 8.

(Item C7) The working vehicle 1 according to item C5 or C6, wherein the structure 3 is a traveling frame 8 provided at a lateral side of the vehicle body 2 to support a wheel, the hydraulic actuator includes a steering cylinder 62 to steer the wheel, and the steering cylinder 62 is fixed to the structure 3.

According to the working vehicle 1 of item C7, maintenance of the hydraulic device can be facilitated by changing the position of the hydraulic device without moving the steering cylinder 62 and the structure 3.

(Item D1) A working vehicle 1 including a vehicle body 2, a traveling assembly 4 including a left traveling assembly 4L located leftward of the vehicle body 2 and a right traveling assembly 4R located rightward of the vehicle body 2, a tilt detector 170 to detect a tilt of the vehicle body 2, and a changing mechanism 180 to change a positional relationship between the vehicle body 2 and the traveling assembly 4 based on a detection result obtained by the tilt detector 170.

According to the working vehicle 1 of item D1, tipping of the working vehicle 1 can be prevented or reduced by changing the positional relationship between the vehicle body 2 and the traveling assembly 4 based on the detection result obtained by the tilt detector 170.

(Item D2) The working vehicle 1 according to item D1, wherein the changing mechanism 180 includes a height-changing mechanism 90 capable of changing a position of the vehicle body 2 relative to the traveling assembly 4 in an up-down direction, and the height-changing mechanism 90 is configured to change the position of the vehicle body 2 in the up-down direction based on the detection result obtained by the tilt detector 170.

According to the working vehicle 1 of item D2, the center of gravity of the working vehicle 1 can be lowered based on the detection result obtained by the tilt detector 170, so that tipping of the working vehicle 1 can be prevented or reduced.

(Item D3) The working vehicle 1 according to item D1 or D2, wherein the changing mechanism 180 includes a distance-changing mechanism 80 configured to change a distance from the vehicle body 2 to the traveling assembly 4 in a left-right direction, and the distance-changing mechanism 80 is configured to change the distance from the vehicle body 2 to the traveling assembly 4 in the left-right direction based on the detection result obtained by the tilt detector 170.

According to the working vehicle 1 of item D3, the distance from the vehicle body 2 to the traveling assembly 4 in the left-right direction can be increased based on the detection result obtained by the tilt detector 170, so that tipping of the working vehicle 1 can be prevented or reduced.

(Item D4) The working vehicle 1 according to item D2, wherein the height-changing mechanism 90 includes a left height-changing mechanism 90L to change a height of a left portion of the vehicle body 2 and a right height-changing mechanism 90R to change a height of a right portion of the vehicle body 2, and the height-changing mechanism 90 is configured to position the left portion and the right portion of the vehicle body 2 at different heights based on the detection result obtained by the tilt detector 170.

According to the working vehicle 1 of item D4, a moment can be generated in a direction that prevents or reduces tipping by increasing a height of the vehicle body 2 at a side opposite to a side at which the vehicle body 2 is tilted. Accordingly, tipping of the working vehicle 1 can be prevented or reduced.

(Item D5) The working vehicle 1 according to item D4, wherein the height-changing mechanism 90 is configured to perform at least one of an operation of raising the left portion of the vehicle body 2 and an operation of lowering the right portion of the vehicle body 2 when the tilt detector 170 detects that the vehicle body 2 is tilted leftward by a predetermined amount or more, and performs at least one of an operation of raising the right portion of the vehicle body 2 and an operation of lowering the left portion of the vehicle body 2 when the tilt detector 170 detects that the vehicle body 2 is tilted rightward by a predetermined amount or more.

According to the working vehicle 1 of item D5, a moment can be applied to the vehicle body 2 in a direction that prevents or reduces tipping based on the detection result obtained by the tilt detector 170, so that tipping of the working vehicle 1 can be prevented or reduced.

(Item D6) The working vehicle 1 according to item D2, wherein the height-changing mechanism 90 is configured to lower the vehicle body 2 when the tilt detector 170 detects that the vehicle body 2 is tilted by a predetermined amount or more.

According to the working vehicle 1 of item D6, when the tilt of the vehicle body 2 is large, the vehicle body 2 is lowered to lower the center of gravity of the working vehicle 1, so that tipping of the working vehicle 1 can be prevented or reduced.

(Item D7) The working vehicle 1 according to item D3, wherein the distance-changing mechanism 80 includes a left distance-changing mechanism 80L to change a distance from the vehicle body 2 to the left traveling assembly 4L in the left-right direction and a right distance-changing mechanism 80R to change a distance from the vehicle body 2 to the right traveling assembly 4R in the left-right direction, and the distance-changing mechanism 80 is configured to position the left traveling assembly 4L and the right traveling assembly 4R at different distances from the vehicle body 2 based on the detection result obtained by the tilt detector 170.

According to the working vehicle 1 of item D7, tipping of the working vehicle 1 can be prevented or reduced by increasing the distance from the vehicle body 2 to the traveling assembly 4 in the left-right direction at a side at which the vehicle body 2 is tilted.

(Item D8) The working vehicle 1 according to item D7, wherein the distance-changing mechanism 80 is configured to increase the distance between the left traveling assembly 4L and the vehicle body 2 when the tilt detector 170 detects that the vehicle body 2 is tilted leftward by a predetermined amount or more, and increase the distance between the right traveling assembly 4R and the vehicle body 2 when the tilt detector 170 detects that the vehicle body 2 is tilted rightward by a predetermined amount or more.

According to the working vehicle 1 of item D8, tipping of the working vehicle 1 can be prevented or reduced by increasing the distance from the vehicle body 2 to the traveling assembly 4 in the left-right direction at a side at which the vehicle body 2 is tilted based on the detection result obtained by the tilt detector 170.

(Item D9) The working vehicle 1 according to any one of items D1 to D8, wherein the changing mechanism 180 includes a position-changing mechanism 70 configured to change the position of the vehicle body 2 relative to the traveling assembly 4 in the front-rear direction, and the position-changing mechanism 70 is configured to change the position of the vehicle body 2 in the front-rear direction based on the detection result obtained by the tilt detector 170.

According to the working vehicle 1 of item D9, tipping of the working vehicle 1 can be prevented or reduced by changing the position of the vehicle body 2 in a direction opposite to a direction in which the vehicle body 2 is tilted along the front-rear direction.

(Item D10) The working vehicle 1 according to item D9, wherein the position-changing mechanism 70 is configured to move the vehicle body 2 rearward relative to the traveling assembly 4 when the tilt detector 170 detects that the vehicle body 2 is tilted forward by a predetermined amount or more, and move the vehicle body 2 forward relative to the traveling assembly 4 when the tilt detector 170 detects that the vehicle body 2 is tilted rearward by a predetermined amount or more.

According to the working vehicle 1 of item D10, tipping of the working vehicle 1 can be prevented or reduced by changing the position of the vehicle body 2 in a direction opposite to a direction in which the vehicle body 2 is tilted along the front-rear direction based on the detection result obtained by the tilt detector 170.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 3: structure
- 4: traveling assembly
- 4L: left traveling assembly
- 4R: right traveling assembly
- 10LF, 10LB: left traveling motor
- 10RF, 10RB: right traveling motor
- 12A: first battery
- 12B: second battery
- 120: electrical device
- 121: first electrical device
- 122: second electrical device
- 130: junction box
- 130A: main junction box
- 130B: sub-junction box
- 131: first junction box
- 132: second junction box
- 133: third junction box
- 141 to 147: electrical wire
- 150: movable portion

## Claims

1. A working vehicle comprising:
a vehicle body;
a structure connectable to the vehicle body;
a plurality of junction boxes including a main junction box provided in at least one of the vehicle body and the structure and a sub-junction box provided in at least one of the vehicle body and the structure; and
a plurality of electrical devices; wherein
the sub-junction box is connected to at least one of the plurality of electrical devices; and
the main junction box is connected to at least another one of the plurality of electrical devices that is different from the one of the plurality of electrical devices to which the sub-junction box is connected, and is also connected to the sub-junction box.

2. The working vehicle according to claim 1, wherein
the structure includes a traveling assembly provided at a lateral side of the vehicle body;
the main junction box is provided in the vehicle body or the traveling assembly; and
the sub-junction box is provided in the traveling assembly when the main junction box is provided in the vehicle body, and is provided in the vehicle body when the main junction box is provided in the traveling assembly.

3. The working vehicle according to claim 2, wherein
the plurality of electrical devices include a first electrical device provided in the vehicle body and a second electrical device provided in the traveling assembly;
the main junction box is connected to the first electrical device when the main junction box is provided in the vehicle body, and is connected to the second electrical device when the main junction box is provided in the traveling assembly; and
the sub-junction box is connected to the second electrical device when the sub-junction box is provided in the traveling assembly, and is connected to the first electrical device when the sub-junction box is provided in the vehicle body.

4. The working vehicle according to claim 2, wherein
the traveling assembly includes a left traveling assembly located leftward of the vehicle body and a right traveling assembly located rightward of the vehicle body;
the main junction box is provided in the vehicle body; and
the sub-junction box is provided in each of the left traveling assembly and the right traveling assembly.

5. The working vehicle according to claim 3, wherein
the first electrical device includes a first battery;
the second electrical device includes a second battery; and
the first battery and the second battery are directly or indirectly connected to the main junction box.

6. The working vehicle according to claim 5, wherein
the second electrical device includes an electrical device other than the second battery; and
the sub-junction box functions as a relay for an electrical wire connected to the electrical device other than the second battery.

7. The working vehicle according to claim 1, further comprising a movable portion to guide a connecting wire connecting the main junction box and the sub-junction box to each other and to move to follow deformation of the connecting wire.

8. The working vehicle according to claim 1, wherein
the main junction box is provided in the vehicle body and is configured to change a position thereof in an up-down direction together with the vehicle body.

9. The working vehicle according to claim 2, wherein
the sub-junction box is provided in the traveling assembly and is configured to change a position thereof in a left-right direction together with the traveling assembly.

10. The working vehicle according to claim 2, wherein
each of the plurality of electrical devices includes at least one of a plurality of batteries; and
at least one of the plurality of batteries and at least one of the plurality of junction boxes are provided in each of the vehicle body and the traveling assembly.

11. The working vehicle according to claim 2, wherein
the traveling assembly includes a left traveling assembly located leftward of the vehicle body and a right traveling assembly located rightward of the vehicle body; and
the plurality of junction boxes include a first junction box provided in the vehicle body, a second junction box provided in the left traveling assembly, and a third junction box provided in the right traveling assembly.

12. The working vehicle according to claim 11, wherein
the plurality of electrical devices include a first electrical device provided in the vehicle body and a second electrical device provided in the traveling assembly;
a left traveling motor to drive a left wheel is provided as the second electrical device in the left traveling assembly;
a right traveling motor to drive a right wheel is provided as the second electrical device in the right traveling assembly;
the second junction box functions as a relay for an electrical wire connected to the left traveling motor; and
the third junction box functions as a relay for an electrical wire connected to the right traveling motor.
